(19) Europäisches Patentamt
European Patent Office
Office européen des brevets

(11) EP 0 639 047 B1

(12) EUROPEAN PATENT SPECIFICATION

(45) Date of publication and mention of the grant of the patent: **06.10.1999 Bulletin 1999/40**

(21) Application number: **92900085.9**

(22) Date of filing: **29.11.1991**

(51) Int. Cl.[6]: **A01N 25/04**, A01N 47/22, A01N 43/707, A01N 43/12 // (A01N25/04, 25:02, 25:08, 25:10, 25:22)

(86) International application number: **PCT/DK91/00368**

(87) International publication number: **WO 92/09195 (11.06.1992 Gazette 1992/13)**

(54) **HERBICIDAL COMPOSITIONS**
HERBIZIDE ZUSAMMENSETZUNGEN
COMPOSITIONS HERBICIDES

(84) Designated Contracting States: **AT BE CH DE DK ES FR GB GR IT LI LU NL SE**

(30) Priority: **30.11.1990 DK 284990**

(43) Date of publication of application: **22.02.1995 Bulletin 1995/08**

(73) Proprietor: **KVK AGRO A/S**
**DK-4600 Koge (DK)**

(72) Inventor: **NIELSEN, Erik**
**DK-2370 Greve (DK)**

(74) Representative:
**Rotne, Jens Styrup et al**
**c/o Internationalt Patent-Bureau**
**Hoeje Taastrup Boulevard 23**
**2630 Taastrup (DK)**

(56) References cited:
**EP-A- 0 083 437**
**EP-A- 0 142 670**
**EP-A- 0 243 872**
**EP-A- 0 253 762**
**EP-A- 0 388 239**
**WO-A-87/05778**
**DD-A- 218 728**
**DE-B- 2 638 897**

- **Roempps Chemie-Lexikon Achte, neubearbeitete und erweiterte Auflage, Band 2: Cm-G, 1981, Dr. OTTO-ALBRECHT NEUMUELLER, see pages 1126-1127.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 639 047 B1

Printed by Xerox (UK) Business Services
2.16.7/3.6

## Description

The invention relates to herbicidal compositions in which the herbicidal component is suspended in fine-grained form in a flowable oil-containing liquid phase, containing at least one component selected from the group of beet herbicides consisting of phenmedipham (methyl-(3-(3-tolylcarbamoyloxy)phenyl)carbamate, ethofumesate ((±)-2-ethoxy-2,3-dihydro-3,3-dimethyl-benzofuran-5-yl, methane sulfonate) and metamitron (4-amino-4,5-dihydro-3-methyl-6-phenyl-1,2,4-triazin-5-one), so that the total quantity of herbicide therein constitutes 1 to 50% by weight, and further containing water, one or more emulsifiers, special oils as defined below and optionally other oils and e.g. a filler, and wherein said liquid phase is capable of forming an oil-in-water emulsion when the composition is mixed with water.

Moreover, the invention relates to analogous mixtures ready for use.

Solvent-based pesticides for use in agriculture are generally marketed as liquid, completely soluble concentrates to be diluted with water prior to the final use so as to be sprayed on the fields or plants by means of conventional spray equipment. During the dilution process with water prior to the final use and by stirring without particular precautions the dissolved pesticide component may migrate from the oily phase into the added aqueous phase, the oil being at the same time emulsified in the water, thereby forming an oil-in-water emulsion.

Shelf-life-stable, aqueous suspensions of pesticides (flowables) to be diluted with water are being increasingly used during recent years. Several environmental advantages are connected with products of that type. Compared to e.g. dispersable powdery products there are no problems with dust and compared to emulsion concentrates, in which the pesticide is dissolved in a solvent that is emulsified in water by means of surfactants it is possible to avoid the use of toxic and unpleasant solvents.

Another known, but not especially widespread type of pesticide concentrates is an oily pesticide suspension in which the oil may be emulsified in water. When such a composition is diluted in water for final use, the emulsifier must be capable of distributing the oil without forming gels or lumps and distribute the pesticide in the aqueous phase. It is important that the distribution in the aqueous phase is effected rapidly and without difficulties. In view of the fact that most of the field crop spray equipments nowadays include effective stirring means, it may be accepted that a minor separation of oil or pesticide occurs on standing, but it cannot be accepted that the oil is gradually separated in such a manner that the pesticide is agglomerated in greasy layers of precipitations. The emulsifier as used should also ensure that oil as well as pesticide are effectively distributed on the plants.

On standing most of the suspension concentrates have a tendency to separate, thereby providing a clear upper layer. Normally, this does not entail any practical consequences but if the suspension includes both oil and water in one or two phases, both of said phases as well as the suspended phase of the solid particles should be agitatable to a homogeneous suspension that is not separated at once into separate fractions.

It is decisive that the emulsifier mixture in oily preparations is active under different conditions. The emulsifiers have to stabilize the pesticidal suspension concentrate. It is in particular difficult to optimize the surfactant system if the amount of emulsifier is small in which case it may be extremely difficult to distribute the oily suspension in the aqueous phase without the formation of greasy layers of precipitation comprising oil as well as pesticide particles.

Oil-containing pesticidal dispersions may be advantageous compared to aqueous systems when the oil operates as an activator in relation to the biological effect. A non-aqueous system or a system containing a mixture of oil and water may be preferred under conditions where water has a deleterious effect on the stability, e.g. when water exerts an unfavourable effect on the chemical stability, promotes the development of toxic breakdown products and/or dissolves the finely suspended, pesticidally active substances.

The disclosure of published EP-A2-142,670 deals with liquid herbicidal preparations containing as the active substance a herbicidally active amount of carbamates, such as phenmedipham, optionally in admixture with metamitron wherein the active substance in a finely ground state is dispersed in a liquid phase including at least one oily component in an amount from 5 to 75% by weight, and at least one surfactant in an amount of 5 to 60% by weight and optionally water.

The surprising feature of the latter invention is that phenmedipham in a non-dissolved form may have an optimal biological effect. Experience until then had shown that the phenmedipham had to be dissolved. However, none of the described formulations are optimal as regards storage stability and emulsifying properties. The possibilities of tank mixing with other beet pesticides for the described formulations are unsatisfactory.

The disclosure of published EP-A1-243,872 deals with stabilized, liquid pesticidal preparations, in which the active component in a finely ground condition in an amount of 1 to 55% by weight is dispersed in an aqueous phase comprising at least one oily component in an amount of 20 to 90% by weight and a surfactant in an amount of 1 to 45% by weight, the surfactant being characterized by containing a fatty alcohol and/or an amine-containing emulsifier. The advantage of the described emulsifier systems is that they offer more stable and homogeneous concentrate formulations that are rapidly distributed in the dilution water when the oil-containing suspension concentrate in a diluted form is to be sprayed on farmers fields. This also applies to the described compositions containing phenmedipham and metamitron in mixture. However, the described combination formulations are not stable when stored. This applies particularly to the physical stability, the formulations (Examples 1 to 4) after being stored for about 2 to 6 months appear to be granular and only disperse with difficulty in the dilution water.

None of the formulations described in the Examples of EP-A1-243,872 containing phenmedipham are appropriate for tank mixing with Nortron, which is an emulsifier concentrate with 200 g/l of ethofumesate from Schering AG. Ethofumesate is a very important combinational partner for phenmedipham. It should be added, however, that KVK A/S, Denmark, in 1988 introduced their first oil-containing suspension concentrate containing 16% of phenmedipham and about 5% of fatty alcohol. The trade name was Betaflow. By tank mixing with Nortron by diluting with appropriate water qualities this product offered reasonably easily sprayable mixtures. Used under practical test circumstances and dependent on the used diluting water Betaflow could, nevertheless, involve certain spraying problems. Betaflow has a pH value of 3.0 (measuered at a dilution of 10% by weight in deionized water). With said pH value Betaflow is imparted the most optimal emulsifier properties. However, a smaller pH change, e.g. to pH 3.4, causes for instance a decisive change of the emulsifying ability, e.g. by tank mixing with Nortron, and it is therefore also evident that the character of the diluting water in tank mixtures with emulsifier concentrates, such as Nortron, as stated above may affect the emulsifier stability.

Another property of Betaflow is its tendency to impart crystal growth to the formulation. Stored at 20°C the crystal growth is restricted, but when stored at 50°C for about 3 months a considerable crystal growth can be seen, which is an essential disadvantage if Betaflow is to be used and stored in warmer countries, e.g. France, that is the greatest sugar beet producer of Europe. If the non-particularly optimized Examples in EP-A2-142,670 are ignored, approximately all the far more optimized formulations containing phenmedipham according to EP-A1-243,872 (except Example 19) apply a solvent refined mineral oil with a high content of liquid paraffin (>60%). Said quality of oil is chosen because it exerts the least solubility to phenmedipham (less than e.g. aromatic or naphtenic oil) and is therefore expected to give the slightest tendency to crystal growth. Betaflow thus contains a paraffin oil with 66% paraffins calculated on the total content of mineral oil corresponding to an aniline point of 95°C. In order to obtain reasonably good emulsifying properties, in particular by tank mixing with other beet pesticides, it has been necessary to apply to Betaflow an emulsifier amount of about 20% by weight calculated on the total composition. This amount of emulsifier is on a line with the matter stated in the Examples of EP-A1-243,872 which merely contain phenmedipham.

The high amount of emulsifier in Betaflow and the Examples stated in said EP patent applications further entail that the viscosity of the preparations becomes undesirably high. A typical viscosity for Betaflow, measured with a Brookfield viscometer, gear 20, spindle RV 4 (factor 100) is 2000 cP (mPa • s) and frequently even considerably higher. A high viscosity entails that the time of emptying the packaging (cans containing each 5 l) gets undesirably long and that it is difficult to completely empty the packaging.

International Patent Application No. WO87/05778 discloses herbicidal compositions based on i.a. phenmedipham and comprising 5 to 40% by weight of emulsifiers, 20 to 60% by weight of water and 20 to 60% by weight of vegetable oil.

An enhanced environmental consciousness has resulted in that in future pesticide formulations it is desired to make use of as gentle additives as possible. It is likewise desired that the amounts of pesticides as well as the adjuvants are reduced to a minimum. This also applies to the emulsifiers which are under suspicion of penetrating into the subsoil water under disadvantageous circumstances.

As a product type Betaflow has demonstrated that oil-containing suspension preparations of phenmedipham present a satisfactory, high biological activity. It has concurrently been recognized that Betaflow over and above the previous, solvent-based products presents decisive environmental advantages. Thus, the Swedish environmental control authorities have prohibited the previous isophoron-based products (isophoron is the preferred solvent for phenmedipham). It must simultaneously be concluded that there is a need for improving the formulation properties of Betaflow.

A summary of the properties is as follows:

1. A better compatibility during tank mixing with other beet pesticides
2. A smaller crystal growth in the concentrate
3. A lower viscosity
4. Products with improved environmental safety
5. Combination flowables with ethofumesat (previous patent applications have not included Examples of such flowables)
6. Combination flowables with metamitron (the formulations in the Examples of previous applications deposit and the emulsifiability deteriorates during storage)
7. Cheaper formulations (a general wish)

In view of the fact that the entire oil component in hitherto optimized recipes is larger than the emulsifier fraction it has so far seemed to be natural to focus primarily on the mineral oil fraction in order to prevent crystal growth of the

finely ground pesticide suspended in the oil-containing, liquid phase. Therefore, mineral oils with a high content of paraffin oil have so far been preferred because from a theoretical point of view they should provide the lowest crystal growth of the pesticide.

New stability tests have however revealed that this prerequisite is not correct. The composition of the mineral oil has shown not to be particularly decisive of the crystal growth. It has turned out that synthetic ester oils, e.g. those based on esters of natural, fatty acids in spite of their aggressive (solubilizing) ester groups do not particularly promote such crystal growth. It has also been observed that a more dissolving oil under certain circumstances is preferable in respect of the crystal growth, probably because it exerts at the same time a more dissolving effect to the emulsifier components, thereby ensuring that the liquid phase does not separate into more fractions which have a varying influence on the suspended pesticide. The fact that the oil component also possesses a stronger solubility force implies that it more easily mixes with the emulsifier component, thereby facilitating the emulsification.

The high emulsifier content in formulations preferred so far has been necessary to impart to the products a good emulsifying stability and to ensure that the suspensions rapidly disperse in the diluting water on spraying. One of the reasons of the necessary use of large quantities of emulsifiers is perhaps that it is rather the emulsifier component that dissolves the mineral oil than the contrary. A substantial feature of the present invention is that the oil components are preferably selected among those having a suitably high degree of resolution to the emulsifier component, meaning in the end that the amount of the emulsifier component may be reduced and that it has surprisingly turned out that a more stable and advantageous product is concurrently obtained.

It is at the same time mentioned that the oil components comprised by the present invention are also included as oil components in various examples from the above mentioned patent applications. This applies to EP-A2-142,670, Examples 4, 5 and 6, in which the emulsifier amount in all the stated Examples exceeds 30% by weight. EP-A1-243,872 includes the described oil components in Examples 19 b to d, in which the lowest quantity of emulsifier amounts to 23% by weight calcullated on the entire composition. In all the Examples the emulsifiers are thus above the upper limit of 18% stated in the present application. It seems to appear from the EP patent specifications that it has not been desirable as regards the oil components concerned to reduce the amounts of emulsifier. It has only appeared to be expedient and has only been done in such situations where the oil component has consisted of paraffinic mineral oil and where the stated Examples in EP-A2-142,670 and EP-A1-243872 with a low emulsifier content, moreover, were characterized by having an unsatisfactory storage storability, because the concentrates deposited or became viscous.

As stated above it is important that phenmedipham preparations are mixable in a tank with other beet pesticides. In cases where it has been attempted to mix Betaflow with other dispersable products, e.g. Goltix, containing 70% of metamitron, tank mixings have been effected without problems. On the other hand, large, sticky deposits have more or less had a tendency to precipitate, when Betaflow for instance had to be mixed in tank with Nortron or ICI's Fusilade, the latter containing as the active substance 250 g/l Fluazifop-butyl.

On the face of it, it could be imagined that using increased amounts of emulsifier in Betaflow would eliminate the problems of tank mixing with other emulsifier preparations. But this has turned out not to be correct.

The reason why Betaflow is so badly mixable with other products must be that the emulsifiable phase chiefly consists of mineral oil. On the contrary, the products to be mixed with Betaflow are solvent-based. The emulsifier systems to be used for the emulsifying of mineral oil are decisively different from the types to be used for the emulsifying of solvents and their mixtures with dissolved pesticides. Briefly stated, the emulsifiers used for mineral oil must be considerably less soluble in water than the emulsifiers used for the emulsifying of solvents. This explains why problems of tank mixing arise but not how to solve the problems.

Mixing experiments that have contributed to the optimizing of the recipes that form the basis of the present invention invalidate the theory that a high content of emulsifier in the oil-containing phenmedipham-suspension preparation is unambiguously advantageous to the tank-mixing properties with other emulsifiable pesticidal preparations. The experiments rather seem to indicate that a lower content of emulsifier in the oily phenmedipham containing suspension preparation is to be preferred.

The observation may be characterized as extremely surprising. It has been possible, however, theoretically to advance a model supporting the described observations. If the oil suspension preparation A containing 60% of oil (O) and 20% emulsifier (E1), (summarily expressed as $A_{100} = O_{60}, E1_{20}$), is to be mixed in the ratio 1:1 with the emulsion preparation B containing 60% of solvent (S) and 4% of emulsifier (E2), (summarily described as $B_{100} = S_{60}, E2_4$), the mixture may be described as ($A_{50}B_{50} = O_{30}, S_{30}, E1_{10}, E2_2$). It will thus appear that the oil-/solvent mixture ($O_{30}S_{30}$) is a uniform mixture of the emulsifiable phases of the two products, but that the emulsifier phase ($E1_{10}, E2_2$) of the mixed product is approximately complete dominated by the emusifier component of the oil product and therefore almost not adapted to the solvent (S).

If both products had contained 6% of the emulsifier component, the mixture AB in the ratio 1:1 would be: $A_{50}B_{50} = O_{30}, S_{30}, E1_3, E2_3$, and it is readily observed that in this situation there is the same ratio between the emulsifiable phases (oil and solvent) as between the emulsifier components E1 and E2, and that the ratios O/S and E1/E2 are the same independently of the mixing ratio between A and B.

The outlined theoretical explanation thus appears to confirm that a restriction of the emulsifier amounts in the oil-containing suspension preparations is desirable in cases where the preparations are to be admixed with traditional solvent-based preparations whose emulsifier content too is low. But as it has already been demonstrated above, it is advantageous to concurrently select the oil component.

On the face of it, it appears to be difficult to reduce the content of the emulsifier component. Many laboratory experiments have shown that it becomes difficult to reduce the emulsifier content and to ensure at the same time that the preparations emulsify satisfactorily in soft as well as in calcareous water. A possible solution to this problem is to add simultaneously a calcium neutralizing substance. The most appropriate seems to be an acid salt of oxalic acid but nevertheless the solution suffers from various defiencies, inter alia 5% on weight basis of the preparation does not appear to be completely sufficient, if the preparation is to be sprayed in low concentrations, e.g. 1% and below. Moreover, the salts are only soluble in water on a limited scale and are extremely difficult to grind.

International patent application No. WO 87/05778 describes herbicidal compositions comprising biscarbamates, including PMP in an amount of 10 to 50% by weight, 20 to 60% by weight of vegetable oil, 5 to 40% by weight of emulsifier, 20 to 60% by weight of water and optionally 0.01 to 5% by weight of a heteropoly-saccharide biopolymer as a viscosity regulating agent. However, the emulsifying of vegetable oils require a typical emulsifier compositions that may only difficultly conform to emulsifier systems used in traditional emulsifier preparations. This confines the farmer's possibilities of producing his own tank mixtures.

A possible solution appears to consist in using various anionic emulsifiers in limited quantities. The optimizing work is extremely time-consuming but the result may be highly satisfactory. This complex of problems will be thoroughly explained later on in the specification.

It has now surprisingly turned out that herbicidal compositions may be obtained of the type in which the herbicidal compositions in a fine-grained form is suspended in a flowable, oil-containing liquid phase and is stabilized physically as well as chemically and wherein the total composition is well suited for tank mixing with other herbicides.

In accordance with the above the herbicidal compositions of the invention are characterized in that said special oils are chosen from the group of selected ester oils, which are ester oils with one or two ester groups per molecule and with an initial boiling point of at least 210°C, and selected carbon hydride oils, which are carbon hydride oils with an initial boiling point of at least 230°C and with an aniline point determined according to DIN 51775 not exceeding 90°C, the special oils being present in an amount of either 4 to 77% by weight of the selected ester oils, or 12 to 77% by weight of the selected carbon hydride oils or a mixture of the selected carbon hydride oils and the selected ester oils; that the special oils are emulsified in the liquid phase; that the content of water is from 18 to 65% by weight; and that the content of said emulsifier(s) is from 1 to 18% by weight; wherein all given expressions for the contents of the compositions in % by weight are calculated on the basis of the weight of the total composition.

In other embodiments of the present herbicidal compositions the total quantity of herbicide amounts to 1 to 45% by weight and/or the total content of the special oils constitutes either 8 to 77% by weight of the selected ester oils, or 12 to 77% by weight of the selected carbon hydride oils or a mixture of the selected carbon hydride oils and the selected ester oils, in both cases calculated on the basis of the weight of the total composition. Moreover, the solubility of the special oil(s) in water is preferably below 1% by weight, and the solubility of phenmedipham in the special oil(s) is preferably below 3% by weight, in particular below 2% by weight and especially below 1% by weight.

In the present compositions the preferred amount of herbicide constitutes from 4 to 40% by weight, in particular 7 to 35% by weight and especially 10 to 30% by weight; the preferred content of special oils constitutes from 12 to 77% by weight, in particular 18 to 60% by weight and especially from 25 to 64% by weight; and the total emulsifier content preferably constitutes from 1 to 13% by weight, more preferably from 1.5 to 13% by weight, in particular 2 to 9% by weight and especially 2.5 to 5% by weight, all the above % by weight being calculated on the basis of the weight of the total composition.

If the composition is available as a ready-to-use mixture diluted by the user himself, the expressions in % by weight for the contents of the composition are calculated on the basis of the weight of the solids content of the ready-to-use mixture.

The term "the solids content of the ready-to-use mixture" as stated above is in the present specification to be interpreted as the components of the mixture which are either solids or have a boiling point at 760 mm Hg exceeding 210°C, so that solvents with a boiling point below 210°C are not included in the calculation of the solids content.

Particularly preferred herbicidal compositions according to the invention are characterized in that they are two- or multicomponent compositions containing phenmedipham in combination with ethofumesate and/or metamitron.

Particularly preferred oils forming part of the above compositions are such selected among carbon hydride oils with an aniline point determined according to DIN 51775 which does not exceed 90°C, preferably no more that 87.5°C, particularly not exceeding 85°C and especially no more than 82.5°C, water insoluble carboxylic acid esters preferably of aliphatic monoalcohols and aliphatic or aromatic monocarboxylic acids or aliphatic or aromatic dicarboxylic acids, respectively, and of water insoluble carboxylic esters, preferably of aliphatic dialcohols (glycols) and aliphatic or aromatic monocarboxylic acids.

By stating the combination of the mineral oil the characterization (the statements) refer to generally available distillates, such as they are purchased from the oil companies. The characteristic features of the mineral oil as described thus apply solely to base oil combinations that are not subsequently mixed further, such as generally delivered by the oil companies.

In respect of the further description it is desired to state the following definitions: Hydrocarbyl (R-) refers to a straight-chained or branched group of alkyl, alkenyl or alkynyl, e.g. exemplified by ethyl ($-CH_2CH_3$), ethenyl ($-CH=CH_2$) or ethynyl ($-C\equiv CH$). The hydrocarbylene (-R-) refers to a straight-chained or branched group of alkylene, alkenylene or alkynylene, e.g. exemplified by ethylene ($-CH_2CH_2-$), ethenylene ($-CH=CH-$) or ethynylene ($-C\equiv C-$).

The word emulsifier embraces in the specification proper emulsifiers as well as dispersing agents. There is no clear limit between the definition of an emulsifier and a dispersant and a so-called emulsifier may frequently be used as a dispersing agent or vice versa. An emulsifier may either be a polymeric compound with a molecular weight which apart from the exceptions given below does not exceed 7.000 Dalton, comprising many hydrocarbyl or hydrocarbylene groups, or it must always contain at least one hydrocarbyl or hydrocarbylene group having at least 8 carbon atoms. As regards polycarboxylates and copolymerisates of oxyethylene and oxypropylene with at least 80% by weight of polyoxyethylene and polyoxypropylene, the upper limit of the molecular weight amounts anyhow to 50.000 Dalton. Moreover, the emulsifier must always contain at least one hydrophilic group, which may for instance be a polyoxyethylene group, an amine group, a sulfonic acid group, or a phosphate ester group, but this is not a sufficient condition of characterizing a substance as an emulsifier.

In the present specification the definition of emulsifiers does not include polymers which preferably via an inherent dilatation at 20°C are stably mixable (soluble) in water and all of which have a molecular weight of at least 7.000 Dalton, with the exception that polycarboxylates and copolymerisates of oxyethylene and oxypropylene with at least 80% by weight of polyoxyethylene, must always be regarded as emulsifiers when the molecular weight is below 50.000 Dalton. Said polymers are later on described as an independently defined, optionally possible group of components in the herbicidal compositions and are referred to as polymer stabilizers. Emulsifiers are, moreover, such as described in the sales leaflets of emulsifier suppliers and in relevant catalogues and reference books. The following publications of Mc Cutcheon are stated as an example of reference books: Detergent & Emulsifiers International Edition, 1983, Glen Rock New Jersey 07452, U.S.A, and North American Edition, 1983, Glen Rock New Jersey 07452, U.S.A.

In the present specification water insoluble esters with at least 8 carbon atoms obtained by esterification of an alkoxylated alcohol and either a mono-carboxylic acid or a dicarboxylic acid, may be regarded either as an oil or as an emulsifier. If the number of alkoxy groups in the alkoxylated alcohol is not more than 3, it may merely be regarded as an oil. If the number of alkoxy groups is 4 or more it may only be regarded as an emulsifier. Water insoluble esters with at least 8 carbon atoms formed by esterification of an alkoxylated dialcohol (glycol) and a monocarboxylic acid, may in the same manner be regarded either as an oil or as an emulsifier. If the number of alkoxy groups in the alkoxylated dialcohol does not exceed 5, it may only be regarded as an oil. If the number of alkoxy groups is 6 or more, it may only be regarded as an emulsifier.

Evaluated from the physical properties of the special oils forming part of the present compositions are those which at 40°C have a kinematic viscosity of no more than 100 cSt, preferably no more than 78 cSt, in particular not exceeding 55 cSt and especially not exceeding 33 cSt. The starting boiling point must be at least 210°C, preferably at least 230°C and in particular at least 250°C.

Preferred selected carbonhydride oils are mineral oils or synthetic carbonhydride oils solely composed of C and H.

The distribution of carbon of the mineral oils calculated according to DIN 51378 or ASTM D 2140 must preferably be so that the procentual content of carbon, bound to paraffinic hydrocarbons, constitutes no more than 60%, preferably no moe than 57.5%, in particular no more than 55% and especially no more than 52.5% on weight basis, calculated on the total carbon content of the mineral oil so that the total content of carbon bound to naphthenic and aromatic rings of hydrocarbon constitutes at least 40%, preferably at least 42.5%, in particular at least 45% and especially at least 47.5% calculated on the total carbon content of the mineral oil. It is desirable that the content of carbon bound to naphthenic hydrocarbons determined according to DIN 51378 or ASTM D 2140 amounts at least to 34%, preferably at least 37%, in particular at least to 40% and especially at least to 43% calculated on the total carbon content of the mineral oil.

Particularly preferred selected water insoluble ester oils forming part of the present compositions are those whose number of carbon atoms in the ester is 8 to 72, preferably 10 to 60, in particular 12 to 46 and especially 14 to 44 per molecule.

It is desirable that the ester oils have a solidification point of no more that 40°C, preferably no more that 30°C, in particular no more than 20°C and especially no more than 10°C.

In one aspect of the invention the alcohol moiety of the ester is derived from a preferably aliphatic monoalcohol of the formula I or II

$$R_1OH \qquad I$$

$$R_2O\text{-}R_3\text{-}(O\text{-}R_4)_n\text{-}OH \qquad II$$

wherein $R_1$ and $R_2$ per se designates a straight-chained or branched, saturated or unsaturated hydrocarbyl group having 1 to 30 carbon atoms, preferably 1 to 22 carbon atoms and $R_3$ and $R_4$ individually designate a straight-chained or branched, saturated or unsaturated hydrocarbylene chain having from 1 to 22 carbon atoms, preferably 2 to 9 carbon atoms, in particular 2 to 4 carbon atoms and especially 2 or 3 carbon atoms, and n is either 0, 1 or 2.

The following examples of alcohols of formula I and II are methanol, ethanol, propanol, isopropanol, butanol, isobutanol, amyl alcohol, hexyl alcohol, heptyl alcohol, isoheptyl alcohol, octyl alcohol, isooctyl alcohol, 2-ethyl-hexyl alcohol, nonyl alcohol, cetyl alcohol, isocetyl alcohol, ethoxy ethanol, butoxy ethanol and unsaturated analogs thereto. Preferred alcohols are isopropanol, isobutanol, octyl alcohol, isooctyl alcohol, 2-ethylhexyl alcohol and nonyl alcohol.

The acid moiety of the esters may be derived from a preferably aliphatic monocarboxylic acid of the formula $R_5COOH$, wherein $R_5$ is hydrogen or a straight-chained or branched, saturated or unsaturated aliphatic hydrocarbyl group with 1 to 30 carbon atoms, preferably 8 to 20 carbon atoms, or a straight-chained or branched, wholly or partly aromatic hydrocarbon group with 6 to 30 carbon atoms, preferably 6 to 20 carbon atoms, and wherein the aliphatic as well as the aromatic acid are optionally substituted by one or two hydroxy groups. Examples of such acids are butyric acid, caproic acid, caprylic acid, decanoic acid, 2-ethyl caproic acid, lauric acid, myristic acid, palmitic acid, stearic acid and hydroxy substituted stearic acid. Mixtures of technical fatty acids may further be used, such as $C_{16}$- and $C_{18}$-fatty acids. Other examples are benzoic acid and salicylic acid.

A preferred class of esters for use in the present compositions consists of esters selected from the group consisting of 2-ethyl-hexyl laurate, 2-ethyl-hexyl myristate, 2-ethyl-hexyl palmitate, 2-ethyl-hexyl stearate, isobutyl stearate, isopropyl myristate, isooctyl esters of $C_{16}$- and $C_{18}$-technical fatty acids and mixtures thereof.

A further preferred class of acid moieties is derived from unsaturated acids, such as oleic acid, ricinoleic acid, linoleic acid or linolenic acid. Examples of corresponding esters are 2-ethyl-hexyloleate and isobutyl oleate, isobutyl ricinoleate, isobutyl linolate and isobutyl linolenate.

Particularly appropriate esters are $C_{2\text{-}20}$-monoalcohol esters of oleic acic, $C_{2\text{-}12}$-monoalcohol esters of lauric acids and myristic acids and $C_{6\text{-}9}$-monoalcohol esters of palmitic acids and stearic acids.

In a further aspect of the invention the acid moiety of the ester is derived from an acid of the general formula $HOOC\text{-}(A)_m\text{-}COOH$, wherein m is 0 or 1, and wherein A designates a straight-chained or branched, saturated or unsaturated, aliphatic hydrocarbylene chain having 1 to 24 carbon atoms, preferably 2 to 16 carbon atoms, optionally substituted by one or two hydroxy groups, or A designates a divalent hydrocarbon group containing one or more aromatic rings, so that the group in total contains 6 to 24 carbon atoms, preferably 6 to 16 carbon atoms, optionally substituted by one or two hydroxy groups.

Examples of dicarboxylic acids are oxalic acid, succinic acid, 2-hydroxysuccinic acid, 2,3-dimethyl succinic acid, glutaric acid, adipic acid, pimelic acid, hexanecarboxylic acid, azelaic acid, sebacic acid and phthalic hexanedicarboxylic acid.

An appropriate ester may also be derived from an acid of the formula HOOC-A'-COOH, wherein A' designates an unsaturated hydrocarbylene chain having 2 to 24 carbon atoms, preferably 2 to 16 carbon atoms.

When the acid moiety in the ester is a dicarboxylic acid, both acid groups should preferably be esterified, but one of the acid groups may also be wholly or partly on free acid form, or optionally wholly or partly be converted to a salt.

Further examples of esters that may be used in the combinations according to the invention are esters, wherein the alcohol moiety is derived from a dialcohol of formula IIa, IIb, IIc or IId.

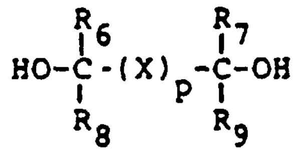

IIa

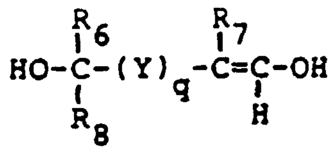

IIb

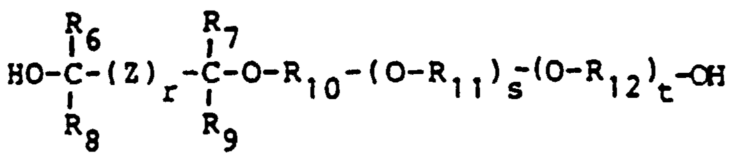

IIc

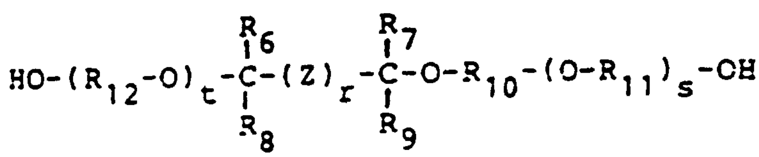

IId

wherein $R_6$, $R_7$, $R_8$ and $R_9$ are the same or different, and wherein each is hydrogen, a straight-chained or branched alkyl or a straight-chained or branched, unsaturated hydrocarbyl chain, p is 0 or 1, q is 0 or 1, r is 0 or 1, s is 0, 1 or 2, t is 0, 1 or 2; X, Y and Z are the same or different, and each is a straight-chained or branched, saturated or unsaturated hydrocarbylene chain having 1 to 15 carbon atoms, wherein the total number of carbon atoms in the dialcohol molecule exclusive of $R_{10}$, $R_{11}$ and $R_{12}$ does not exceed 22, preferably no more than 12, and $R_{10}$, $R_{11}$ and $R_{12}$ individually are a straight-chained or branched, saturated or unsaturated hydrocarbylene chain with 2 to 10 carbon atoms, preferably 2 to 4 carbon atoms and especially 2 or 3 carbon atoms. When the alcohol part in the ester is a dialcohol (glycol), both alcohol groups should preferably be esterified, but the one alcohol group may as well be unesterified and free. Optionally the ester of the dialcohol may advantageously be a mixture of a monoester and a diester.

A preferred class of esters of the above mentioned class is the one wherein the alcohol part is derived from alcohols, selected from the group consistong of ethylene glycol, tetrapolyethylene glycol, propylene glycol, dipropylene glycol, hexylene glycol, dimethylpropane diol and 2,2,4-trimethylene pentane (-1,3)-diol.

The acid moiety in esters, wherein the alcohol moiety is derived from a dialcohol of the formula IIa, IIb, IIc or IId, is derived from monocarboxylic acids of the formula $R_{13}COOH$, wherein $R_{13}$ is hydrogen or a straight-chained or branched, saturated or unsaturated, aliphatic hydrocarbyl group having 1 to 30 carbon atoms, preferably 8 to 20 carbon atoms, or a straight-chained or branched, wholly or partly aromatic hydrocarbon group with 6 to 30 carbon atoms, preferably 6 to 20 carbon atoms, and wherein both the aliphatic or the wholly or partly aromatic carboxylic acid is optionally substituted by 1 or 2 hydroxy groups. This acid may preferably be selected from the group consisting of methanoic acid, acetic acid, propanoic acid, isopropanoic acid, butyric acid, isobutyric acid, lactic acid, valeric acid, caproic acid, isoheptanoic acid, caprylic acid, isocaprylic acid, 2-ethylcaproic acid, nonanoic acid and decanoic acid and unsaturated variants thereof together with benzoic acid and salicylic acid and mixtures of technical $C_{12}$-, $C_{14}$-, $C_{16}$-and $C_{18}$ fatty acids, e.g. technical oleic acid. Various acids may be used for the esterification of the two alcohol groups of the dialcohol.

Preferred esters for use in the compositions according to the invention are thus selected from the group consisting of ethylene glycol diisobutyrate, tetraethylene glycol dioleate, propylene glycol diisobutyrate, propylene glycol dioleate, dipropylene glycol dioleate, hexylene glycol monoisobutyrate, hexylene glycol diisobutyrate, dimethylpropanediol monoisobutyrate, dimethylpropanediol diisobutyrate, 2,2,4-trimethylpentane-(1,3)-diol monoisobutyrate and 2,2,4-trimethylpentane-(1,3)-diol diisobutyrate.

Examples of esters supposed to be particularly useful in herbicidal preparations are: octyl acetate, cetyl acetate, dodecyl acetate, tridecyl acetate; heptyl butyrate, isoheptyl butyrate, octyl butyrate, isooctyl butyrate, 2-ethylhexyl butyrate, nonyl butyrate, isononyl butyrate, cetyl butyrate, isocetyl butyrate; amyl hexanoate, hexyl hexanoate, heptyl hexanoate, isoheptyl hexanoate, octyl hexanoate, 2-ethylhexyl hexanoate, nonyl hexanoate, isononyl hexanoate, cetyl hexanoate, isocetyl hexanoate; propyl octanoate, isopropyl octanoate, butyl octanoate, isobutyl octanoate, amyl octanoate, hexyl octanoate, heptyl octanoate, isoheptyl octanoate, octyl octanoate, isooctyl octanoate, 2-ethylhexyl octanoate, nonyl octanoate, isononyl octanoate, cetyl octanoate, isocetyl octanoate; methyl-2-ethyl hexanoate, ethyl-2-ethyl hexanoate, propyl-2-ethyl hexanoate, isopropyl-2-ethyl hexanoate, butyl-2-ethyl hexanoate, isobutyl-2-ethyl hexanoate, isoamyl-2-ethyl hexanoate, hexyl-2-ethyl hexanoate, heptyl-2-ethyl hexanoate, isoheptyl-2 -ethyl hexanoate, octyl-2-ethyl hexanoate, isooctyl-2-ethyl hexanoate, 2-ethylhexyl-2-ethyl hexanoate, nonyl-2-ethyl hexanoate, isononyl-2-ethyl hexanoate, cetyl-2 -ethyl hexanoate, isocetyl-2-ethyl hexanoate; methyl decanoate, ethyl decanoate, propyl decanoate, isopropyl decanoate, butyl decanoate, isobutyl decanoate, isoamyl decanoate, hexyl decanoate, heptyl decanoate, isoheptyl decanoate, octyl decanoate, isooctyl decanoate, 2-ethylhexyl decanoate, nonyl decanoate, isononyl decanoate, cetyl decanoate, isocetyl decanoate; methyl laurate, methyl laurate, ethyl laurate, propyl laurate, isopropyl laurate, butyl laurate, isobutyl laurate, isoamyl laurate, hexyl laurate, heptyl laurate, isoheptyl laurate, octyl laurate, isooctyl laurate, 2-ethyl-hexyl laurate, nonyl laurate, isononyl laurate, cetyl laurate, isocetyl laurate, methyl oleate, ethyl oleate, propyl oleate, isopropyl oleate, butyl oleate, isobutyl oleate, isoamyl oleate, hexyl oleate, heptyl oleate, isoheptyl oleate, octyl oleate, isooctyl oleate, 2-ethylhexyl oleate, nonyl oleate, isononyl oleate, cetyl oleate, isocetyl oleate; diethyl succinate, dipropyl succinate, diisopropyl succinate, dibutyl succinate, diisobutyl succinate, diisoamyl succinate, diheptyl succinate, diisoheptyl succinate, dioctyl succinate, diisooctyl succinate, di-2-ethylhexyl succinate, dinonyl succinate, diisononyl succinate, dicetyl succinate, diisocetyl succinate; dimethyl adipate, diethyl adipate, dipropyl adipate, diisopropyl adipate, dibutyl adipate, diisobutyl adipate, diisoamyl adipate, dihexyl adipate, diheptyl adipate, diisoheptyl adipate, dioctyl adipate, diisooctyl adipate, di-2-ethylhexyl adipate, dinonyl adipate, diisononyl adipate, dicetyl adipate, diisocetyl adipate, isopropyl myristate, isobutyl myristate, butyl myristate, amyl myristate, hexyl myristate, heptyl myristate, isoheptyl myristate, octyl myristate, 2-ethylhexyl myristate, nonyl myristate, isononyl myristate, cetyl myristate, isocetyl myristate; isopropyl palmitate, isobutyl palmitate, butyl palmitate, amyl palmitate, hexyl palmitate, heptyl palmitate, isoheptyl palmitate, octyl palmitate, 2-ethylhexyl palmitate, nonyl palmitate, isononyl palmitate, cetyl palmitate, isocetyl palmitate; isopropyl stearate, isobutyl stearate, butyl stearate, amyl stearate, hexyl stearate, heptyl stearate, isoheptyl stearate, octyl stearate, 2-ethylhexyl stearate, nonyl stearate, isononyl stearate, cetyl stearate and isocetyl stearate.

In a particular embodiment of the present compositions the oily phase of said compositions includes at least two different selected ester oils.

Preferred compositions are mixtures of selected carbon hydride oils and selected ester oils, in which the ratio of mineral oil/ester oil is 9:1-1:9, preferably 6:1-1:6, in particular 4:1-1:4, and especially 2:1-1:2.

Other interesting herbicidal preparations containing phenmedipham in combination with ethofumesate and/or metamitron, are those containing both mineral oils and ester oils, in which the ratio mineral oil/ester oil is 19:1-1:2, preferably 9:1-9:11 and particularly 5:1-2:1.

Advantageous herbicidal preparations are those in which the quantity of water amounts to no more than 65%, preferably no more than 52%, more preferably no more than 42%, in particular no more than 37% and especially no more than 29% by weight of the total composition.

Interesting herbicidal preparations containing phenmedipham in combination with ethofumesate, are those in which the ratio of weight between phenmedipham and ethofumesate is in the range 6:1 to 1:6, preferably in the range 4:1 to 1:4, particularly in the range 3:1 to 1:3 and especially in the range 2:1 to 1:2.

Interesting herbicidal preparations containing phenmedipham in combination with metamitron, are those in which the ratio of weight between phenmedipham and metamitron is in the range 1:1 to 1:10, preferably in the range 1:1.5 to 1:8, in particular in the range 1:2 to 1:6 and especially in the range 1:3 to 1:5.

Preferred particle sizes of the fine-grained suspended herbicide are those in which 90% on the basis of weight of the suspended herbicide has a particle size below 10$\mu$, preferably below 7$\mu$, rather below 5$\mu$ and especially below 3$\mu$. If the oil phase by dilution with water is emulsified as oil drops below 1$\mu$, the determination of the grain size may be effected with a Malvern particle sizer type 3600 E.

Advantageous compositions in accordance with the invention which contain phenmedipham and/or ethofumesate, and which are characteristic in being easy to manufacture in a controllable manner and are long-time stable are those in which the herbicidal component has either been obtained in an aqueous phase in a finely dispersable form or has been ground in an aqueous dispersion, so that the water content during manufacturing amounts at least to 30%,

preferably at least to 36%, and especially at least to 43% on the basis of weight of the total herbicidal dispersion, and in which the herbicide is obtained with a particle size, so that 90% by weight of the suspended herbicide measured with a Malvern particle sizer of the type 3600 E has a particle size below 10μ, preferably below 7μ, in particular below 5μ and especially below 3μ, which generally is finer compared to what is normally obtainable if the grinding is effected in an oily phase. Grinding in water entails generally the advantage that the aqueous phase for humidifying reasons contains one or more emulsifiers. An admixture with oil and optionally emulsifier is effected after preparing in a finely ground form in water. The completed herbicidal composition must likewise be characterized by containing water in an amount in excess of 18% on the basis of weight of the total composition. The water content must constitute no more than 65%, preferably no more than 52%, in particular no more than 43%, and especially no more than 29%. Extremely active compositions are those containing simultaneously one of the above described selected water insoluble ester oils in an amount of 4 to 77%, preferably in an amount of 12 to 70%, in particular of 18 to 64% and especially of 25 to 50% calculated on the basis of weight of the total composition.

When optimizing emulsified preparations it is standard to adapt the emulsifier system to the solvent and the dissolved substance. It is desirable in the described compositions also to be able to adjust the combination of oils. Besides containing selected carbon hydride oil and/or water insoluble selected ester oils and other traditional oil components the particularly preferred herbicidal compositions also contain emulsion controlling oil components selected from the group consisting of aliphatic, unsaturated, straight-chained or branched $C_{17-25}$ hydrocarbyl carboxylic acids as oleic acid, linoleic acid and linolenic acid and other aliphatic, unsaturated $C_{17-25}$ hydrocarbyl carboxylic acids substituted by one or two hydroxy groups, e.g. ricinoleic acid; aliphatic, saturated and branched $C_{17-25}$ hydrocarbyl carboxylic acids, e.g. isostearic acid and other aliphatic, saturated, branched $C_{17-25}$ hydrocarbyl carboxylic acids substituted by one or two hydroxy groups; aliphatic, saturated or unsaturated, straight-chained or branched $C_{7-16}$ hydrocarbyl carboxylic acids, e.g. isononanoic acid and other aliphatic, saturated or unsaturated, straight-chained or branched $C_{7-16}$ hydrocarbyl carboxylic acids substituted by one or two hydroxy groups, and finally aliphatic, saturated or unsaturated, straight-chained or branched $C_{9-25}$ hydrocarbyl alcohols, preferably $C_{10-21}$ hydrocarbyl alcohols, wherein the total amount of the emulsion controlling oil components constitutes 0.5 to 20%, preferably 1 to 15%, particularly 1.5 to 11% and especially 2 to 8% on the basis of weight of the total composition or, if it is a ready-to-use mixture diluted by the user, calculated on the basis of the weight of the solids content of said mixture.

The grain size of the herbicidally active substances dispersed in the composition affects the viscosity. The amount of dispersed herbicide is also decisive of the viscosity. When the composition solely contains phenmedipham in a concentration of ≦160 g/l, and when phenmedipham has been ground/finely distributed so that a measuring of the particle size determined by a Malvern particle sizer of the type 3600 E by using the low-effect laser light diffraction technique or an equivalent metering method indicates that 90% on the basis of weight of the total amount of phenmedipham has a grain size smaller than 3-4μ, the viscosity at 22°C in the described compositions, measured by a Brookfield viscometer, gear 20, with a spindle of the RV type, will be lower than 1500 cP (mPa • s), preferably lower than 1350 cP, in particular be lower than 1200 cP, and especially be lower than 1000 cP.

Preferred compositions according to the invention are those containing finely ground herbicide selected among phenmedipham, ethofumesate and metamitron in an amount of 1 to 35%, preferably in an amount of 10 to 30% on the basis of weight of the total composition which at 22°C measured by a Brookfield viscometer, gear 20, with a spindle of the RV type has a viscosity lower than 1500 cP (mPa • s), preferably lower than 1350 cP, in particular lower than 1200 cP, and especially lower than 1000 cP.

Traditional solvent-based phenmedipham preparations must have a specific emulsifier content if the biological effect should attain its optimum. Thus, the disclosure of SE patent publication No. 357 486, Schering, states that the ratio between phenmedipham and surfactant must be 2:1 to 1:2 corresponding to the fact that the emulsifier content in a 160 g/l preparation varies between 80 and 320 g/l. The equivalent, NL patent states a ratio of 1:1 to 1:2 corresponding to 160 to 320 g/l emulsifier. Schering's emulsion concentrate Betanal, containing 157 g/l phenmedipham, has a content of about 200 g/l emulsifier, and the previously mentioned oil-containing suspension preparation Betaflow containing 160 g/l phenmedipham and the corresponding product Betanal+ from Schering likewise has an emulsifier content of about 200 g/l. It is therefore surprising that the compositions which according to the invention have a low emulsifier content when the active agent content is the same possess a biological activity on a level with that of Betanal. This also applies to preparations with an emulsifier content for instance lower than 50 g/l. In addition, it is possible to reduce the quantity of oil so that the preparation contains a certain amount of water and still obtain a good, biological effect. The described low-paraffinic mineral oils impart a good chemical stability to the compositions. The described water insoluble ester oils that are easily biologically degradable are to be preferred for ecological reasons and as regards effects.

When the composition contains PMP its pH-value measured in a dilution of 10% in deionized water must range from neutral to moderately acidic. The pH-value should not exceed 6, preferably not exceed 5.5, in particular not exceed 5.0 and especially not exceed 4.7 The pH-value must be at least 2, preferably at least 3.2, in particular at least 3.5 and especially at least 3.8. If the composition contains water insoluble ester oils or esterified emulsifiers it is for storing reasons preferable that the pH-value (10% solution) amounts at least to 3.2 to 3.5.

The emulsifier component of the composition must preferably consist of a mixture of one or more non-ionic emulsifiers and one or more ionic emulsifiers.

Particularly preferred compositions are those in which the emulsifier component of the composition consists of one or more non-ionic emulsifiers and one or more anionic emulsifiers and optionally other stabilizers such as aromatic acid stabilizers.

The non-ionic emulsifier(s) should preferably constitute 50 to 99%, preferably 58 to 97%, in particular 65 to 95% and especially 25 to 90% on the basis of weight of the total emulsifier amount (emulsifier component). The anionic emulsifiers should preferably constitute 1 to 50%, preferably 3 to 42%, in particular 5 to 35% and especially 10 to 25% on the basis of weight of the total emulsifier amount (emulsifier component).

Preferred compositions are those in which the total amount of anionic emulsifiers constitutes no more than 4.4%, rather constitutes no more than 3.8%, preferably constitutes no more than 3%, in particular constitutes no more than 2.4%, and especially constitutes no more than 1.8%, and which simultaneously is at least 0.03%, rather is at least 0.05%, preferably is at least 0.07%, in particular is at least 0.1% and especially is at least 0.14%, and in which the interval limits for instance constitutes 0.03 to 4.4%, rather constitutes 0.05 to 3,8%, preferably constitutes 0.07 to 3.0%, in particular constitutes 0.1 to 2.4% and especially constitutes 0.14 to 1.8%, all the above percentages being on the basis of weight of the total composition or, in case of a ready-to-use mixture diluted by the user, calculated on the basis of weight of the solids content of said mixture.

It is particularly advantageous when the composition contains one or more anionic emulsifiers that it only to a limited extent or not at all contains amine containing emulsifiers (e.g. an ethoxylated amine or an amfolyte), so that a possibly simultaneous content of one or more amine containing emulsifiers is no more than 2.4%, preferably no more than 1.8%, in particular no more than 1.2% and especially no more than 0.6% calculated on the basis of weight of the total composition or, in case of a ready-to-use mixture diluted by the user, calculated on the basis of weight of the solids content of said mixture, and in which the amine containing emulsifiers being available either on un-neutralized form or salt form as regards quantity must be calculated on the form in which they are available in the formulation. It is an advantage that the anionic emulsifier(s) does(do) not simultaneously contain an amide group.

Advantageous compositions containing a mixture of a non-ionic emulsifier and an anionic emulsifier and optionally an amine containing emulsifier are those, in which the total content of the anionic emulsifiers and the possible amine containing emulsifiers constitutes no more than 3.8%, preferably no more than 3%, particularly constitutes no more than 2.4%, and especially constitutes no more than 1.8%, and which simultaneously is at least 0.03%, rather at least 0.05%, preferably at least 0.07%, in particular is at least 0.1% and especially is at least 0.14%, all the given percentages being on the basis of weight of the total composition or, in case of a ready-to-use mixture diluted by the user, calculated on the basis of weight of the solids content of said mixture, and wherein the ionic emulsifier being available in un-neutralized form or sodium chloride form as regards quantity must be calculated on the form in which it is available in the formulation.

Preferred non-ionic emulsifiers are those selected among ethoxylated, propoxylated or co-ethoxylated/propoxylated mono-, di-, tri- or tetra-$C_{1-18}$-alkylphenol, including in particular $C_{4-15}$-alkyl phenol and analog, unsaturated hydrocarbyl phenol; ethoxylated, propoxylated or co-ethoxylated/propoxylated mono-, di- or tri-styrylphenol (tri-(1-phenylethyl)phenol), optionally substituted by one, two, three or four $C_{1-15}$-alkyl groups; ethoxylated, propoxylated or co-ethoxylated/propoxylated naphthol or mono-, di- or tri-styrylnaphthol, optionally substituted by one, two, three or four $C_{1-15}$-alkyl groups; ethoxylated, propoxylated or co-ethoxylated/propoxylated mono- or dicyclohexylphenol or mono-, di- or tri-styryl substituted mono- or di-cyclohexylphenol, optionally further substituted by one, two, three or four $C_{1-15}$-alkyl groups; ethoxylated, propoxylated or co-ethoxylated/propoxylated phenylphenol or mono-, di-or tristyryl phenylphenol, optionally substituted by one, two, three or four $C_{1-15}$-alkyl groups; ethoxylated, propoxylated or co-ethoxylated/propoxylated mono-, di-or tri-benzylphenol, optionally substituted by one, two, three or four $C_{1-15}$-alkyl groups; ethoxylated, propoxylated or co-ethoxylated/propoxylated mono-, di-or tri-benzyl phenylphenol, optionally substituted by one, two, three or four alkyl groups; ethoxylated, propoxylated or co-ethoxylated/propoxylated formalin condensed phenol or naphthol, preferably consisting of maximally 8 phenol-/naphthol-units, and which optionally per aromatic core may be substituted by one, two or three alkyl groups; ethoxylated, propoxylated or co-ethoxylated/propoxylated $C_{8-30}$-hydrocarbyl alcohol, preferably $C_{9-22}$-hydrocarbyl alcohol, which further may optionally be methylated in the terminal OH-group of the polyalkoxylene; mono-carboxylic acid esters of polyethylene glycol, polypropylene glycol and co-polymerised polyglycols of ethylene glycol (ethylene oxide) and propylene glycol (propylene oxide), in which it applies to all three types of polyglycol that the number of alkoxy-units must be at least 4, and a $C_{8-30}$-hydrocarbyl carboxylic acid, preferably a $C_{10-22}$-hydrocarbyl carboxylic acid; dicarboxylic acid esters of polyethylene glycol, polypropylene glycol and copolymerized polyglycols of ethylene glycol (ethylene oxide) and propylene glycol (propylene oxide), in which it applies to all three types of polyglycol that the number of alkoxy-units must be at least 6, and two mutually independent $C_{8-30}$-hydrocarbyl carboxylic acids, preferably two $C_{10-22}$-hydrocarbyl carboxylic acids which may, however, very well be identical; block polymers (copolymerisates) of ethylene oxide and styrene and of ethylene glycol (ethylene oxide) and propylene glycol (propylene oxide) the molecular weight of which is in the interval from 1000 to approximately 20.000

Dalton, preferably from 1800 to 16.000 Dalton.

Other preferred non-ionic emulsifiers are those selected among ethoxylated or co-ethoxylated/propoxylated vegetable oils, e.g. castor oil; fatty acid esters of polyalcohol, e.g. sorbitol, which per se is an emulsifier but which may also further be alkoxylated (ethoxylated, propoxylated or coethoxylated/propoxylated); monoglyceride, diglyceride and polyalcoholate of natural fatty acid which may be further esterified with $C_{1-4}$-monocarboxylic acid (e.g. acetic acid), $C_{1-10}$-dicarboxylic acid (e.g. adipic acid) and $C_{1-6}$-hydroxy-carboxylic acid (e.g. lactic acid) and which may further be alkoxylated. Further preferred non-ionic emulsifiers are those selected among N-$C_{4-16}$-alkyl-pyrrolidone, in particular N-$C_{8-16}$-alkylpyrrolidone, hydrocarbyl carboxylic amide and alkoxylated variants thereof; hydrocarbyl sulfonamide and alkoxylated variants thereof; alkoxylated hydrocarbyl mercaptane, alkoxylated thiophenol and alkoxylated thionaphthol. Further relevant non-ionic emulsifiers are those selected among ethoxylated or co-ethoxylated/propoxylated $C_{8-30}$-hydrocarbyl amine, preferably $C_{8-22}$-hydrocarbyl amine having at least 5 alkoxy groups, in particular with 5 to 15 ethoxy groups.

It applies to the non-ionic emulsifiers that all co-ethoxylated/propoxylated emulsifiers have a molecular weight up to 20.000 Dalton, preferably up to 16.000 Dalton and in particular up to 12.000 Dalton.

Emulsifiers that are solely ethoxylated preferably have a HLB-value of no more than 14, preferably of no more than 13, in particular of no more than 12 and especially of no more than 11, and simultaneously of at least 3, preferably of at least 4, in particular of at least 5 and especially of at least 6, e.g. in the interval of 3 to 14, preferably in the interval of 4 to 13, in particular of 5 to 12 and especially from 6 to 11 (HLB = Hydrophilic-Lipophilic-Balance; HLB-values are theoretically calculated values used in connection with ethoxylated, non-ionic emulsifiers. The HLB-value is directly proportional to the content of oxyethylene. HLB-values range between 0 and 20; a low HLB-value indicates an oil soluble emulsifier and the water solubility increases with the HLB-value.

Examples of ionic emulsifiers that are cationic are $C_8$-$C_{30}$-hydrocarbyl amine, $C_8$-$C_{30}$-hydrocarbyl-di- and -tri-amine, hydrocarbylene-di-amine and ethoxylated, propoxylated or co-ethoxylated/propoxylated $C_{8-30}$-hydrocarbyl amine with no more than 4 alkoxy groups. Other relevant cationic emulsifiers are quaternary amines with at least one group of $C_{8-30}$ hydrocarbyl- and/or hydrocarbylene.

Another type of ionic emulsifiers is amphoteric emulsifiers, characterized by containing at least one group of $C_{8-30}$-hydrocarbyl, preferably a $C_{10-22}$-hydrocarbyl group or at least one group of $C_{8-30}$-hydrocarbylene, preferably a $C_{10-22}$-hydrocarbylene group and in any case at least one amino group and further an anionic group. The anionic group must preferably be selected among carboxylic acid, sulfonic acid and phosphonic acid.

Particularly preferred emulsifier components are those in which the emulsifier component consists of a mixture of a number of non-ionic emulsifiers and a number of anionic emulsifiers. It appears from the above referenced patent applications EP-A2-142670 and EP-A1-243872 that the preferred anionic emulsifier pertains to the phosphate ester type, that is characterized by being extremely effective. It appears from the various examples that the phosphate ester emulsifier always form part of the recipes in larger amounts. The lowest applied quantity of phosphate ester emulsifier is in Example 7, II, in EP-A2-142670. The phosphate ester is reacted with mono ethanol amine to form a salt and constitutes on the basis of weight about 5% of the total composition. It should further be observed that the composition is based on another type of oily component than those preferred in the present application and that the composition described in Example 7, II, is difficultly emulsifiable and furthermore has a limited storage stability.

The inconvenience of the phosphate ester emulsifiers is that they may form calcium salt with the calcareous content in the diluting water. In order to obtain a slighter sensitivity to calcium the phosphate ester emulsifiers in the previously described formulations of the above referenced applications have been used in larger quantities, up to about 15% on the basis of weight of the total composition. For other reasons a high phosphate ester content may be inadvantageous. As mentioned in the opening portion of the present specification this might due to problems related to tank mixing reduce the possibility of tank mixing with other emulsifiable pesticide preparations. Another inconvenience consists in that the phosphate esters are good solvents and that the phosphate ester emulsifier content to a small extent may dissolve the finely ground herbicide, thereby providing crystal growth in the preparation.

It has turned out that an alternative manner of eliminating precipitation is to keep the phosphate ester emulsifier content low so as to limit or totally avoid calcium containing salt deposits. Advantageous emulsifier components are therefore those in which the anionic moiety consists of various types all of which are ingredients in restricted amounts.

Very advantageous compositions are those in which the anionic emulsifiers and optionally other stabilizers as aromatic acid stabilizers wholly or partly are selected from the following types marked a, b, c, d, e, f, g, h and i:

a Phosphate ester emulsifiers preferably selected among those containing at least one aliphatic $C_{8-40}$-hydrocarbyl group, preferably a $C_{10-30}$-hydrocarbyl group, or an aliphatic $C_{8-40}$-hydrocarbylene group, preferably a $C_{10-30}$-hydrocarbylene group, or a monovalent or divalent, straight-chained or branched, wholly or partly aromatic hydrocarbon group having 8 to 40 carbon atoms, preferably 10 to 30 carbon atoms, and in which the emulsifier contains at least one phosphate ester group, that is di- or monoesterified so as to concurrently provide one or two acid groups that may either be free or be wholly or partly converted to salt. Moreover, the hydrocarbon group(s) (hydrocarbylene group(s)) of the phosphate ester emulsifier must be substituted by at least one -OH group preferably alkoxylated (ethoxylated or co-ethoxylated/-propoxylated), and in which the alkoxy group via the terminating -OH group forms part of the phosphate ester group. Preferred types of phosphate ester emulsifiers are mono-and diesters of phosphoric acid and of ethoxylated, propoxylated or co-ethoxylated/propoxylated mono-, di- or trialkylphenol, and of phosphoric acid and of ethoxylated, propoxylated or coethoxylated/propoxylated mono-, di- or tristyrylphenol (tri-1-phenylethyl)phenol), optionally substituted by one, two, three or four alkyl groups, and of phosphoric acid and alkoxylated styrylnaphthol, alkoxylated dicyclohexylphenol or alkoxylated benzylphenol, and of phosphoric acid and ethoxylated, propoxylated or co-ethoxylated/ propoxylated $C_{8-30}$-hydrocarbyl alcohol, preferably $C_{10-22}$-hydrocarbyl alcohol and of phosphoric acid and non-alkoxylated $C_{8-22}$-hydrocarbyl alcohol, preferably $C_{10-18}$-hydrocarbyl alcohol. The number of alkoxy groups of the phosphate ester must not exceed 40 oxyalkylene units, preferably not exceed 25 oxyalkylene units.

b Sulfonic acids, preferably selected among benzene sulfonic acid, substituted by one, two or three $C_{1-30}$-alkyl- and/or $C_{2-30}$-alkenyl groups, or benzene sulfonic acid, preferably substituted by one, two or three $C_{4-16}$-alkyl- and/or $C_{4-16}$-alkenyl-groups, or selected among $C_{8-50}$-alkyl sulfonic acid, $C_{8-50}$-alkenyl sulfonic acid or $C_{8-50}$-chloroalkyl sulfonic acid, preferably $C_{8-30}$-alkyl sulfonic acid, $C_{8-30}$-alkenyl sulfonic acid or $C_{8-30}$-chloroalkyl sulfonic acid, in particular $C_{10-22}$-alkyl sulfonic acid, $C_{10-22}$-alkenyl sulfonic acid or $C_{10-22}$-chloroalkyl sulfonic acid, or selected among non-naphthalene-containing petroleum or oil with a carbon chain length of 8 to 60 atoms, preferably 10 to 40 atoms that are mono-, di- or tri-sulfonated, and in which all of the sulfonic acid groups are available as a free acid or are wholly or partly converted to salt.

c Esters or semi-esters of sulfosuccinic acid (sulfosuccinate) wherein the sulfonic acid group and optionally one of the carboxylic acid groups are available as free acid or are wholly or partly neutralized as salt, and wherein one or both carboxylic acid groups are esterified. The alcohol used in the esterification may be selected among $C_{8-30}$ hydrocarbyl alcohols, in particular a $C_{10-22}$ hydrocarbyl alcohol; phenol substituted by one, two or three $C_{2-30}$-alkyl and/or alkylene groups; benzyl alcohol, optionally substituted by alkyl, (poly)phenylphenol, inter alia tristyrylphenol, wherein each aromatic ring may be substituted by one, two or three $C_{2-30}$-alkyl- and/or alkenyl groups; or formalin condensed phenol having up to 8 groups of formalin per molecule, and wherein each phenol ring may be substituted by one, two or three $C_{2-30}$-alkyl- and/or alkylene groups, and wherein preferably each phenol group is esterified with sulfosuccinic acid. Particularly preferred sulfosuccinic esters are those in which the above mentioned alcohols or phenols are at first alkoxylated with 1 to 40 oxyalkylene units, e.g. 1 to 40 oxyethylene units, 1 to 40 oxypropylene units or a combination of in total 1 to 40 oxyethylene units and oxypropylene units.

d Mono-sulfate ester derivatives preferably selected among mono-sulfate esters of $C_{8-20}$-alkyl alcohol or $C_{8-20}$-alkenyl alcohol either non-ethoxylated or ethoxylated with 1 to 8 oxyalkylene units, e.g. 1 to 8 oxyethylene units; and selected among monosulfate esters of phenylpolyalkylene glycolether alcohol, substituted by one, two or three $C_{2-30}$-alkyl- and/or alkenyl groups, and wherein the group of polyalkylene glycolether is constituted by 2 to 40 oxyalkylene units, preferably mono-sulfate esters of phenylpolyethylene glycolether alcohol, substituted by one, two or three $C_{2-30}$-alkyl and/or alkenyl groups, and wherein the polyethylene glycol group is constituted by 2 to 40 oxyethylene units; and selected among mono-sulfate esters of benzyl-substituted poly-alkylene glycolether alcohol or polyphenyl polyalkylene glycolether alcohol and alkylated derivatives thereof, such as mono-sulfate ester of tristyrylphenol polyethylene glycolether, wherein each aromatic ring may be substituted by one, two or three $C_{1-30}$-alkyl- and/or alkenyl groups, and wherein the polyethylene glycol group is composed of 2 to 40 oxyethylene units, and wherein all of the mono-sulfate esters are available as free acid or are wholly or partly converted to salt.

e Naphthalene sulfonic acid derivatives preferably selected among naphthalene sulfonic acid, optionally substituted by one, two or three $C_{1-12}$-alkyl- and/or $C_{2-12}$-alkenyl groups, and which are available as free acid or wholly or partly converted to salt, and corresponding naphthalene sulfonic acid that is formalin condensed.

f Sulfonated carboxylic acid derivatives, preferably selected among straight-chained or branched, saturated or unsaturated $C_{8-30}$-hydrocarbyl carboxylic acid substituted by one or two sulfonic acid groups, or mono-, di-, or triglycerides of the same sulfonated carboxylic acids available as free acid or which are wholly or partly converted to salt.

g Aliphatic $C_{8-30}$-hydrocarbylene-dicarboxylic acids, preferably $C_{10-20}$-hydrocarbylene dicarboxylic acid and aliphatic, chloro-substituted, $C_{8-30}$-hydrocarbylene-dicarboxylic acid, preferably chloro-substituted $C_{10-22}$-hydrocarbylene-dicarboxylic acid.

$C_{4-20}$-alkyl- or $C_{4-20}$-alkenyl substituted, straight-chained or branched, saturated or unsaturated $C_{1-10}$-hydrocarbylene-dicarboxylic acid is particularly preferred, and straight-chained or branched $C_{8-16}$-alkyl-or $C_{8-16}$-alkenyl succinic acid is extremely preferred, e.g. straight-chained or branched dodecyl or dodecenyl succinic acid. The dicarboxylic acids may preferably be available as acid or may wholly or partly be converted to salt.

h Polycarboxylic acids preferably prepared by polymerization or copolymerization, and which are polymerized from at least one of the following group of monomers consisting of acrylic acid, $C_{1-15}$-alkylacrylic acid, maleic acid, maleic acid anhydride, mono- or di-$C_{1-15}$-alkyl maleic acid and mono- or di-$C_{1-15}$-alkyl maleic acid anhydride, and

wherein the remaining monomers optionally may be selected from the group consisting of vinyl pyrrolidone and ethylene, the latter one of which is either substituted by a straight-chained or branched, aliphatic $C_{1-20}$ alkyl or a wholly or partly aromatic hydrocarbon group with 6 to 20 carbon atoms, and wherein the molecular weight of the polymer/copolymer is in the interval from 1,000 to 50,000 Dalton, rather in the interval from 2,000 to 20,000 Dalton, preferably in the interval from 3,000 to 10,000 Dalton, and in particular in the interval from 5,000 to 8,000 Dalton, and wherein the polycarboxylic acid may be available as a free acid or may be wholly or partly converted to salt, and/or may optionally be partially esterified with polyalkylene glycol, e.g. polyethylene glycol and/or polypropylene glycol, the polyalkylene glycol being moreover methylated in the terminating OH-gruppe.

(The chemical stability increases, provided the composition further contains an acid, organic or inorganic, retaining the pH in the interval 3 to 5. The acid may be partially neutralized to salt. It has turned out that a group of aromatic carboxylic acids besides acting as buffers may stabilize the emulsion when the composition is diluted in water and prevent the formation of sticky precipitations. Said group of aromatic acid stabilizers or the salts thereof do not per se need to be emulsifiers or their salts do not need per se to be emulsifiers and are described under item i).

i Benzoic acid, hydroxybenzoic acid, dihydroxybenzoic acid, mono-, di- or tri-$C_{1-6}$-hydrocarbyl-benzoic acid, mono-, di- or tri-$C_{1-6}$-hydrocarbyl-hydroxybenzoic acid, mono-, di- or tri-$C_{1-6}$-hydrocarbyldihydroxybenzoic acid, benzene dicarboxylic acid, benzene tricarboxylic acid, benzene tetracarboxylic acid, mono-, di- or tri-$C_{1-6}$-hydrocarbyl-benzene dicarboxylic acid, mono-, di- or tri-$C_{1-6}$-hydrocarbyl-benzene tricarboxylic acid or mono-, di- or tri-$C_{1-6}$-hydrocarbyl-benzene tetracarboxylic acid, in which the acids may be available as free acid or may be wholly or partly converted to salt.

Preferred salts of the acids mentioned under items a to i are monovalent salts, e.g. salts of sodium, potassium, lithium, ammonium, lower alkylamine, lower alkylalkanol amine and alkanol amine, preferably those having no more than 7 carbon atoms, in particular no more than 6 carbon atoms. Examples of the latter are methyl amine, ethyl amine, propyl amine, dimethyl amine, diethyl amine, diethylethanol amine, monoethanol amine, diethanol amine, triethanol amine and isopropanol amine.

Advantageous compositions are those containing one ore more phosphate esters, described above under item a, and in which the total amount of phosphate ester according to the specification in total amounts to at least 0.03%, rather is at least 0.05%, preferably amounts at least to 0.07%, in particular is at least 0.1% and especially amounts to at least 0.14%, and which at the same time constitutes no more than 4.4%, rather constitutes no more than 3.8%, preferably constitutes no more than 3%, in particular constitutes no more than 2.4% and especially constitutes no more than 1.8% on the basis of weight of the total composiition or, if it is actually a ready-to-use mixture diluted by the user, calculated on the basis of weight of the solids content of said mixture.

Other advantageous compositions are those containing one or more sulfonic acids as described above under item b, and wherein the total amount of sulfonic acid would be specified as amounting at least to 0.03%, rather amounts at least to 0.05%, preferably is at least 0.07%, in particular is at least 0.1% and especially is at least 0.14%, and which simultaneously constitutes no more than 4.4%, rather constitutes no more than 3.8%, preferably constitutes no more than 3%, in particular constitutes no more than 2,4% and especially constitutes no more than 1.8% on the basis of weight of the total composition or, if it is actually a ready-to-use mixture diluted by the user, calculated on the basis of weight of the solids content of said mixture.

Other advantageous compositions are those containing one or more sulfosuccinic acids described above under item c, and in which the total quantity of sulfonic acid is specified as total amounts of no less than 0.03%, rather no less than 0.05%, preferably no less than 0.07%, particularly no less than 0.1% and especially no less than 0.14%, and which at the same time does not exceed 4.4%, rather does not exceed 3.8%, preferably does not exceed 3%, particularly does not exceed 2.4% and especially does not exceed 1.8% on the basis of weight of the total composition or if it is a ready-to-use mixture diluted by the user, calculated on the weight basis of the solids content of said mixture.

Other advantageous compositions are those containing one or more $C_{8-30}$-hydrocarbylene-dicarboxylic acids and/or chloro-substituted $C_{8-30}$-hydrocarbylene dicarboxylic acids, as described under item g, and in which the total quantity of dicarboxylic acid is specified in total amounts of at least 0.03%, rather at least 0.05%, preferably at least 0.07%, in particular at least 0.1% and especially amounts to at least 0.14%, and which concurrently constitutes no more than 4.4%, rather no more than 3.8%, preferably constitutes no more than 3%, in particular no more than 2.4% and especially constitutes no more than 1.8% on the basis of weight of the total composition or, if it is a ready-to-use mixture diluted by the user, calculated on the basis of weight of the solids content of said mixture.

Other advantageous compositions are those containing one or more polycarboxylic acids as described under item h, and wherein the total quantity of polycarboxylic acid is specified to be in total at least 0.03%, rather at least 0.05%, preferably amounts at least to 0.07%, particularly is at least 0.1% and especially is at least 0.14%, and which concurrently does not exeed 4.4%, rather does not exceed 3.8%, preferably does not exceed 3%, particularly does not exceed 2.4% and especially does not exceed 1.8% on the basis of weight of the total composition or, if it is a ready-to-use mixture diluted by the user, calculated on the basis of weight of the solids content of said mixture.

Other advantageous compositions are those containing one or more aromatic acid stabilizers as described under item i, and in which the total quantity of acid stabilizer is specified to be in total no less than 0.03%, rather no less than 0.05%, preferably no less than 0.07%, particularly no less than 0.1% and especially no less than 0.14%, and which at the same time does not exceed 4.4%, rather does not exceed 3.8%, preferably does not exceed 3%, particularly does not exceed 2.4% and especially does not exceed 1.8% on the basis of weight of the total composition or, if it is a ready-to-use mixture diluted by the user, calculated on the weight basis of the solids content of said mixture.

Other advantageous compositions are those containing at least one anionic emulsifier as defined above under items a, b, c, d, e, f, g, and h or an acid stabilizer, as defined under item i, and in which the total quantity of emulsifier or acid stabilizer within each individual group amounts to at least 0.03%, rather at least 0.05%, preferably at least 0.07%, in particular at least 0.1% and especially amounts to at least 0.14%, and which concurrently does not exceed 4.4%, rather does not exceed 3.8%, preferably does not exceed 3%, in particular does not exceed 2.4% and especially does not exceed 1.8% on the basis of weight of the total composition or, if it is a ready-to-use mixture diluted by the user, calculated on the basis of weight of the solids content of said mixture.

More advantageous compositions are those containing at least two components selected each from their respective group and comprising the anionic emulsifier components as defined above under items a, b, c, d, e, f, g and h, and/or an acid stabilizer as defined under item i, and wherein the total quantity of emulsifier(s) and optionally acid stabilizer within each of said respective groups amounts at least to 0.03%, rather at least 0.05%, preferably amounts at least to 0.07%, particularly is at least 0.1% and especially is at least 0.14%, and which concurrently does not exceed 4.4%, rather does not exceed 3.8%, preferably does not exceed 3%, particularly does not exceed 2.4% and especially does not exceed 1.8% on the basis of weight of the total composition or, if it is a ready-to-use mixture diluted by the user, calculated on the basis of weight of the solids content of said mixture.

Specially preferred compositions are those containing at least three components selected each from a respective group and comprising the anionic emulsifier components as defined above under items a, b, c, d, e, f, g, and h and/or an acid stabilizer, as defined under item i, and in which the total quantity of emulsifier and optionally acid stabilizer within each individual of said three groups amounts to at least 0.03%, rather at least 0.05%, preferably at least 0.07%, in particular at least 0.1% and especially amounts to at least 0.14%, and which concurrently does not exceed 4.4%, rather does not exceed 3.8%, preferably does not exceed 3%, in particular does not exceed 2.4% and especially does not exceed 1.8% on the basis of weight of the total composition or, if it is a ready-to-use mixture diluted by the user, calculated on the basis of weight of the solids content of said mixture.

Other preferred compositions are those in which the total quantity of anionic emulsifier components as defined above under items a, b, c, d, e, f, g and h, in total amount to at least 0.03%, rather at least 0.05%, preferably amounts at least to 0.07%, particularly is at least 0.1% and especially is at least 0.14%, and which concurrently does not exceed 4.4%, rather does not exceed 3.8%, preferably does not exceed 3%, particularly does not exceed 2.4% and especially does not exceed 1.8%, all percentages being on the basis of weight of the total composition or, if it is a ready-to-use mixture diluted by the user, calculated on the basis of weight of the solids content of said mixture.

Other compositions are those in which the anionic emulsifiers are wholly or partly selected among lignin sulfate, N-acrylsarkoside and alkyl sulfamidocarboxylic acid.

Compositions are stabilized in the moderately acidic pH-area with an acid component in which the acid component is either a free acid or a partially neutralized salt. Appropriate for stabilizing the composition due to its buffer effect are such compositions containing myristic acid, acetic acid, propionic acid, chloroacetic acid, chloropropionic acid, lactic acid, malic acid, tataric acid, citric acid, oxalic acid, boric acid and/or phosphoric acid.

Besides functioning as a buffer the oxalic acid may have a calcium-precipitating effect on the diluent water, thereby increasing the emulsifying stability in the calcareous water. Oxalic acid is therefore a particularly advantageous acid component.

A group of polymer substances which at 60°C are solids and which preferably via a dilatation process is stably admixable in water, such as polyvinyl alcohol, polyvinyl pyrrolidone compounds, methyl cellulose, (poly)hydroxyethyl-cellulose, (poly)hydroxypropyl-cellulose and (poly)hydroxypropyl methyl-cellulose may apparently coat the surface of the finely ground herbicide so that the polymer in the same manner as charged, anionic emulsifiers can prevent oil and herbicidal particles from conglutinating upon diluting the preparation in water. The designation generally practised in chemical language usage for the above identified celluloses with the prefix (poly)hydroxyethyl- or (poly)hydroxypropyl is without the prefix (poly)-. When using (poly)- in this description it is to specify that each glycose ring in the cellulose molecule to a certain, but restricted extent may be substituted by various groups of hydroxyethyl or hydxroxypropyl, which may possibly be in alignment of each other so as to be mutually interconnected via ether bindings.

With the view of further improve the tank mixable properties of the compositions with other pesticides it is therefore also advantageous that they contain at least one polymer that is a solid at 60°C and which chiefly by dilatation by itself is stably dilutable (soluble) in water at 20°C and which at the same time has a molecular weight of at least 7.000 Dalton, preferably of at least 10.000 Dalton and in particular of at least 13.000 Dalton, in that neither does the polymer

include polycarboxylates nor copolymers of oxyethylene and oxypropylene with at least 80% by weight of polyoxyethylene and polyoxypropylene or hydrophilic biopolymers, for which the polymerization is effected by an industrially controlled fermentation process (an example of this is xanthene rubber) and in which the total content of the polymeric compound(s) amounts to 0.04 to 20% by weight, rather 0.05 to 15% by weight, preferably 0.07 to 10% by weight, particularly 0.1 to 8% by weight and especially 0.15 to 5% by weight, calculated on the basis of weight of the total composition or, if it is a ready-to-use mixture diluted by the user, calculated on the basis of weight of the solids content of said mixture.

In the following the described polymers are designated polymeric stabilizers. Preferred polymeric stabilizers forming part of the compositions in amounts just mentioned above are selected among non-ionic ethers of cellulose, polyvinyl alcohol, polyvinyl alcohol derivatives, polyvinyl pyrrolidone and pyrrolidone variants.

Particularly preferred non-ionic ethers of cellulose are ($C_{1-2}$-alkyl) cellulose, ((poly)hydroxy-$C_{1-6}$-alkyl) cellulose and ((poly)hydroxy-$C_{1-6}$-alkyl)($C_{1-12}$-alkyl) cellulose, in particular ($C_1$-alkyl) cellulose, ((poly)hydroxy-$C_{1-4}$-alkyl) cellulose and ((poly)hydroxy-$C_{1-4}$-alkyl)-($C_{1-3}$-alkyl) cellulose such as methyl-cellulose, (poly)hydroethyl cellulose, (poly)hydroxypropyl cellulose, (poly)hydroxybutyl cellulose, (poly)hydroxy-ethyl-methyl cellulose, (poly)hydroxy-ethylethyl cellulose, (poly)hydroxypropyl-methyl cellulose and (poly)hydroxybutyl-methyl-cellulose and hydrophobically modified variants thereof, e.g. reaction products, in which the defined cellulose ethers have reacted with aldehydes or difunktional aldehydes.

Preferred polyvinyl alcohol derivatives are polyvinyl alcohol, in which up to 35%, preferably 1 to 30% and especially 8 to 25% of the alcohol groups of the polyvinyl alcohol are esterified with a $C_{1-4}$ hydrocarbylcarboxylic acid, e.g. with acetic acid to acetate. Moreover, the polyvinyl alcohol may be wholly or partly converted to methyl ether or ethyl ether. Such polyvinyl alcohols are preferred, wherein up to 30% of the alcohol groups of the polyvinyl alcohol is converted to ether with methanol, ethanol, polyoxyethylene and/or polyoxypropylene. Other preferred copolymerisates on the basis of polyvinyl alcohol are those in which at least 35% by mole, preferably at least 60% by mole of the copolymer is composed of vinyl alcohol and/or vinyl alcohol acetate. Copolymerisates are particularly preferred in which the residual polymer is constituted by polyvinyl pyrrolidone.

Preferred polyvinyl pyrrolidone derivatives are alkylated polyvinyl pyrrolidone and polyvinyl pyrrolidone copolymerisates, in which at least 25% by mole, preferably at least 40% by mole of the copolymer is composed of vinyl pyrrolidone. The number of carbon atoms in the alkyl groups of the polymeric stabilizer-must preferably be in the range from 1 to 12, in particular 1 to 6 and especially from 1 to 3. At the same time the number of alkyl groups must not be so large that the polymer at 20°C is not still stably dilutable in water. In copolymers partially composed of vinyl pyrrolidone, the remaining monomer should preferably be selected among vinyl alcohol, vinyl acetate and styrene.

The molecular weight of the polyvinyl alcohol or polyvinyl alcohol derivative is not particularly decisive of the effect. Polyvinyl alcohol is normally preferred, the molecular weight of which is in the interval between 7.000 to 200.000 Dalton, preferably in the interval 10.000 to 175.000 Dalton and especially in the interval 13.000 to 125.000 Dalton, or polyvinyl alcohol, which as a 4% solution in water at 20°C has a viscosity in the interval between 1 to 60 cP (mPa • s), preferably in the interval 2 to 40 cP (mPa • s), determined by a Brookfield LVF viscosimeter. The viscosity of the water dilutable cellulose ethers, polyvinylpyrrolidone and polyvinylpyrrolidone compounds available in the composition should as solutions of 2% in water at 20°C be low, e.g. down to approximately 2 cP (mPa • s), preferably down to 5 cP (mPa • s). It applies generally that the upper limit to the viscosity is primarily defined for practical circumstances and as regards a solution of 1% in water it must not exceed approximately 10.000, rather not exceed 6.000, preferably not exceed approximately 3.000, particularly not exceed approximately 1.000 and especially not exceed approximately 500 cP (mPa • s) determined by a Brookfield LVF viscosimeter, or a Brookfield viscosimeter according to the instructions given by the supplier of the raw materials.

The molecular weight of the polymeric stabilizer may preferably not be below 800.000, rather not below 500.000, particularly no less than 175.000 and especially no less than 125.000 Dalton.

It has turned out that particularly advantageous polymeric stabilizers are those that are not stably admixable in water at 85°C, e.g. in a concentration of 1% by weight. If the polymeric stabilizer has been dissolved at a lower temperature it might upon heating form a gel that may possibly be stable.

It may be desirable to add to the composition one or more glycol components in an amount of 0.5 to 12% by weight, preferably in an amount of 1 to 8% by weight and especially in an amount of 1.5 to 6% by weight, calculated on the basis of weight of the total composition, and in which the glycol component may for instance be selected among ethylene glycol, propylene glycol, hexylene glycol, polyglycols, such as di-, tri-and tetraethylene glycol and di-, tri- and tetra-propylene glycol, glycolmethyl ether, glycolethyl ether, butylglycol, butyldiethylene glycol, propylene glycolmethyl ether, dipropylene glycol methyl ether and tripropylene glycol methyl ether. The glycol components may have a promoting effect on the emulsion stability of the diluted product, have a visosity modifying effect and prevent flocculation of the composition.

Other adjuvants which are for instance added to improve the low temperature resistance are inorganic salts, such as sodium chloride and potassium nitrate and amine salts, such as monoethanolamine hydrochloride and triethanolamine phosphate, preferably in amounts of 1 to 5% by weight.

In order to suppress the tendency to precipitate a compact pesticidal residue during the storage of the suspension it may be advantageous to add a filler. Examples of fillers are naturally available and synthetic types of clay and silicates, e.g. naturally available silicium dioxides, such as diatomaceous earth; magnesium silicates, e.g. talcum types; magnesium aluminium silicates, e.g. attapulgites and vermiculites; aluminium silicates, e.g. kaolinites, mont-morillonites and types of mica; synthetic, hydrated silicium oxide units and synthetic calcium silicates or aluminium silicates; natural resins and synthetic resins, e.g. coumarone resins, polyvinylchloride and styrene polymers and styrene copolymers; and fertilizers as solids, e.g. superphosphates. Inorganic fillers are preferred. Fillers such as bentonite and hectorite and organic derivatives thereof, such as Bentone, are particularly preferred. If a filler is incorporated in the pesticide preparation, the amount thereof will be 0.1 to 15% by weight, preferably 0.2 to 10% by weight, in particular 0.5 to 5% by weight and especially 1 to 3% by weight. Besides the separation suppressing effect an added filler will frequently also improve the grinding of the pesticidal ingredient, in particular if the grinding is effected in a wet condition in a pearl mill. If the inorganic filler is added after the grinding process, it exerts a more sedimentation suppressing effect. This is particularly clear when the filler is constitited by needle-shaped crystals as is the case with attapulgite.

In interesting herbicidal compositions according to the invention for use in beet fields the emulsifier component contains at least a non-ionic emulsifier and at least an anionic emulsifier, in which the non-ionic emulsifier(s) is/are ethoxylated or co-ethoxylated/propoxylated, and in which the hydrophobic parts preferably are selected from the group consisting of mono-, di- or tri-styryl phenol, naphthol, mono-, di- or tri-styryl naphthol, dicyclohexyl phenol, mono-, di- or tri-styryl-dicyclohexyl phenol, phenyl phenol, mono-, di- or tri-styryl-phenyl phenol, benzyl phenol, mono-, di- or tri-styryl-benzyl phenol, formalin-condensed phenol or formalin-condensed naphthol, in which all of the above alkoxylated emulsifiers may further be substituted by one, two, three or four $C_{1-15}$-alkyl groups, and in which the hydrophobic part may as well be selected from mono-, di-, tri- or tetra-$C_{1-18}$-alkyl phenol and $C_{8-30}$-hydrocarbyl alcohol, and the group of non-ionic emulsifiers further includes mono-carboxylic acid esters of polyethylene glycol and co-polymerisated glycols of ethylene glycol (ethylene oxide) and propylene glycol (propylene oxide), in which it applies to both types of polyglycols that the number of alkoxylene units must be no less than 4, and a $C_{8-30}$-hydrocarbyl-carboxylic acid, dicarboxylic acid esters of polyethylene glycol and copolymerisated polyglycols of ethylene glycol (ethylene oxide) and propylene glycol (propylene oxide), in which it applies to both types of polyglycols that the number of alkoxy units must be at least 6 and two mutually independent $C_{8-30}$-hydrocarbylcarboxylic acids, and further comprises the group of non-ionic emulsifiers, block polymers (copolymerisates) of ethylene glycol (ethylene oxide) and propylene glycol (propylene oxide), the molecular weight of which is in the range from 1.500 to 20.000 Dalton, preferably from 1.800 to 16.000 Dalton, in that it applies to all, non-ionic co-ethoxylated/propoxylated emulsifiers that they must have a molecular weight up to 20.000, preferably up to 16.000 and especially up to 12.000 Dalton, and that said ethoxylated emulsifiers have a HLB-value not exceeding 14, preferably not exceeding 13, in particular not exceeding 12 and especially not exceeding 11, and at the same time at least 3, preferably 4, in particular at least 5 and especially no less than 6, e.g. in the interval of 3 to 14, preferably in the interval of 4 to 13, in particular in the interval from 5 to 12 and especially in the interval from 6 to 11; the selected water-insoluble ester oils having from 10 to 60 carbon atoms are esters of an aliphatic, straight-chained or branched, saturated or unsaturated $C_{1-30}$-hydrocarbyl alcohol optionally alkoxylated with up to 3 alkoxy groups which are preferably ethoxy- and/or propoxy groups, and a monocarboxylic acid, that may be formic acid or which is directly adhered on a straight-chained or branched, saturated or unsaturated, aliphatic hydrocarbyl group with from 1 to 30 carbon atoms, preferably 8 to 20 carbon atoms, optionally substituted by one or two hydroxy groups, or a straight-chained or branched, wholly or partly aromatic hydrocarbon group with from 6 to 30 carbon atoms, preferably from 6 to 20 carbon atoms; or they are water insoluble esters with from 10 to 60 carbon atoms of a straight-chained or branched, saturated or unsaturated $C_{1-22}$-hydrocarbylene dialcohol ($C_{1-22}$-hydrocarbylene glycol), optionally alkoxylated with up to 5 alkoxy groups, preferably ethoxy- and/or propoxy groups, and a monocarboxylic acid, that may be formic acid, or which is directly adhered to a saturated or unsaturated hydrocarbyl group with from 1 to 30 carbon atoms, optionally substituted with one or two hydroxy groups, preferably from 8 to 20 carbon atoms, or a straight-chained or branched, wholly or partly aromatic hydrocarbon group with from 6 to 30 carbon atoms, preferably 6 to 20 carbon atoms; or they are water insoluble esters having from 10 to 60 carbon atoms of a straight-chained or branched, saturated or unsaturated $C_{1-24}$-hydrocarbylene dicarboxylic acid, preferably a $C_{2-16}$-hydrocarbylene dicarboxylic acid optionally substituted by one or two hydroxy groups, or of a dicarboxylic acid containing a divalent hydrocarbon group containing one or more aromatic rings so that the group in total contains from 6 to 24 carbon atoms, preferably 6 to 16 carbon atoms, optionally substituted by one or two hydroxy groups, and a straight-chained or branched, saturated or unsaturated $C_{1-30}$-hydrocarbyl alcohol, optionally alkoxylated with up to 3 alkoxy groups, preferably ethoxy and/or propoxy groups; and in which the total amount of anionic emulsifier does not exceed 4.4% by weight, rather does not exceed 3.8% by weight, preferably does not exceed 3% by weight, particularly does not exceed 2.4% by weight, and especially does not exceed 1.8% by weight, and in which said total amount is no less than 0.03% by weight, rather no less than 0.05% by weight, preferably no less than 0.07% by weight, particularly no less than 0.1% by weight, and especially is no less than 0.14% by weight, and in which a possibly con-current content of one or more amine containing emulsifiers does not exceed 2.4% by

weight, preferably does not exceed 1.8% by weight, in particular does not exceed 1.2% by weight and especially does not exceed 0.6% by weight, in which all the indicated percentages are calculated on the basis of weight of the total composition or, if it is a ready-to-use mixture diluted by the user, calculated on the basis of weight of the solids content of said mixture.

The composition may optionally further include benzoic acid, hydroxybenzoic acid, dihydroxybenzoic acid, mono-, di- or tri-$C_{1-6}$-hydrocarbylbenzoic acid, mono-, di- or tri-$C_{1-6}$-hydrocarbyl-hydroxybenzoic acid, mono-, di- or tri-$C_{1-6}$-hydrocarbyl-dihydroxybenzoic acid, benzene dicarboxylic acid, benzene tricarboxylic acid, benzene tetracarboxylic acid, mono-, di- or tri-$C_{1-6}$-hydrocarbyl-benzene dicarboxylic acid, mono-, di- or tri-$C_{1-6}$-hydrocarbyl-benzene tricarboxylic acid or mono-, di- or tri-$C_{1-6}$-hydrocarbylbenzene tetracarboxylic acid, and in which the acid may be available as a free acid or be wholly or partly neutralized as a salt, and in which the total content of acid-/acidsalt constitutes from 0.04 to 6% by weight, rather 0.05 to 3.8% by weight, preferably 0.07 to 3.0% by weight, in particular 0.1 to 2.4% by weight, and especially 0.14 to 1.8% by weight on the basis of weight of the total composition or, if it is a ready-to-use mixture diluted by the user, calculated on the basis of weight of the solids content of said mixture.

Corresponding interesting herbicide preparations analogous to the compositions just stated above are those containing phenmedipham in combination with either ethofumesate and/or metamitron, and in which content and quantities in all respects are identical with the compositions just stated above.

The compositions are used in diluting with water to the use concentration which normally constitutes from 0.2 to 10% by weight, preferably 0.5 to 4% by weight, calculated on the final use mixture. The dosage quantities of the use mixtures of the diluted products normally constitute 20 to 500 l/ha, preferably 80 to 200 l/ha. The spraying is carried out in spring shortly after sprouting. General dosage quantities of the active substances per ha will for phenmedipham normally constitute 100 to 1.500 g, preferably 200 to 1.000 g, for ethofumesate 100 to 1.500 g, preferably 200 to 1.000 g and for metamitron 300 to 5.000 g/ha, preferably 500 to 3.000 g/ha.

It is also the diluted use mixtures that present favourable properties. Said use mixtures may optionally by mixing be prepared by the user from a non-oily suspension preparation containing one, two or three of the active beet herbicides and an emulsifiable oil concentrate. The invention thus also includes ready-to-use mixtures diluted by the user and in which the ingredients of the composition in this situation are calculated on the basis of the solids content of said mixture, wherein only such components are included, as also stated above, which are either solids or have a boiling point at 760 mm Hg at more than 210°C, so that solvents having a boiling point below 210°C are not taken into account when calculating the solids content.

List of Used Components.

1) Viscosity 15 cSt at 40°C, carbon distribution according to ASTM D2140:

$C_A$ (aromatic carbon) = 1%
$C_N$ (naphthenic carbon) = 45%
$C_P$ (paraffinic carbon)= 54%.
Aniline point: 90°C.

2) Solvent-refined paraffin oil (Norsk Hydro), Viscosity at 40°C: 20 cSt.

Carbon distribution according to ASTM D2140:
$C_A$ = 4%, $C_N$ = 30%, $C_P$ = 66%.
Aniline point: 95°C.

3) Solvent-refined paraffin oil (Shell),

Viscosity at 40°C: 27 cSt.
Carbon distribution according to ASTM D 2140:
$C_A$ = 5%, $C_N$ = 33 %, $C_P$ = 62%.
Aniline point: 99°C.

4) High-boiling petroleum, flash point 65 to 70°C.
5) Ethoxylated dinonyl phenol (9 oxyethylene units per molecule) (Berol).
6) Ethoxylated nonyl phenol (4 oxyethylene units per molecule) (Berol).
7) Co-ethoxylated/propoxylated fatty alcohol (Hoechst).

8) Ethoxylated coconut alkyl amine (10 oxyethylene units per molecule) (Hoechst).
9) 70% solution of coconut-alkyl-β-aminopropanoic acid in an alcoholic mixture (Kenogard).
10) 64% Sodium-oleyl-N-methyl-tauride (Hoechst).
11) Attapulgite clay (Chemie Mineralien G.M.B.H.).
12) Hydro-treated naphtenic oil from Shell, viscosity at 20°C: 22 cSt. Carbon distribution according to ASTM D 2140: $C_A$ = 12%, $C_N$ = 43 %,

$C_P$ = 45%.
Aniline point 71°C.

13) Technical 2-ethylhexyl oleate (Oleofina).
14) Technical 2-ethylhexyl stearate (Oleofina).
15) Ethoxylated nonylphenol (6 oxyethylene units per molecule) (Berol).
16) Ethoxylated nonylphenol (8 oxyethylene units per molecule) (ICI)
17) Co-ethoxylated/-propoxylated nonylphenol (Berol).
18) Ethoxylated castor oil (40 oxyethylene units per molecule) (Hoechst).
19) Polyethoxylated triglyceride (HLB = 14,4)(ICI).
20) Dodecenyl succinic acid anhydride from BP. Converted in all recipes to salt by reaction with base, e.g. monoethanol amine in the presence of water.
21) Mixture of alkylnaphthalene sulfonates (DeSoto).
22) Acidic phosphoric ester of ethoxylated alkyl phenol (Berol).
23) Acidic phosphoric ester of ethoxylated alkyl phenol (GAF).
24) Acidic phosphoric ester of ethoxylated alkyl phenol (GAF).
25) Sodium salt of copolymerised 2,4,4-trimethyl-1-pentene and maleic acid anhydride (molecular weight: 5.000-7.000 Dalton) (Rhône-Poulenc).
26) Technical dodecylbenzene sulfonic acid (Berol).
27) 40% sodium polyacrylate (molecular weight: 3.000-8.000 Dalton) (Protex).
28) $C_{12-18}$-alkyl sulfonate, 60% (Hoechst).
29) Polyvinyl alcohol, degree of hydrolysis:

appr. 83%, viscosity of 4% solution at 20°C:
appr. 3 cP (mPa • s), estimated molecular weight
appr. 20.000 Dalton (Hoechst).

30) Polyvinyl alcohol, degree of hydrolysis :

appr. 73%, viscosity of 4% solution at 20°C:

appr. 10 cP, estimated molecular weight:

appr. 68.000 Dalton (Hoechst).

31) Polyvinyl alcohol, degree of hydrolysis:

appr. 80%, viscosity of 4% solution at 20°C:
appr. 4 cP, estimated molecular weight:
appr. 27.000 Dalton (Hoechst).

32) Polyvinyl alcohol, degree of hydrolysis:

appr. 98,5%, viscosity of 4% solution at 20°C:
appr. 3 cP, estimated molecular weight:
appr. 15.000 Dalton (Hoechst).

33) Polyvinyl alcohol, degree of hydrolysis:

appr. 88%, viscosity of 4% solution at 20°C:
appr. 40 cP, estimated molecular weight:

appr. 120.000 Dalton (Hoechst).

34) Cetyl ether of hydroxyethyl cellulose (Aqualon)
35) (Poly)hydroxyethyl cellulose, viscosity of 1% solution in water at 20°C: appr. 2000 to 2500 cP (Aqualon).
36) Low-viscous methyl cellulose, molecular weight: appr. 13,000 to 15,000 Dalton, viscosity of 2% solution in water: appr. 15 cP (DOW).
37) Low-viscous (poly)hydroxypropyl methyl cellulose, viscosity of 2% solution in water: appr. 450 cP, (Courtaulds Chemicals & Plastics).
38) Methyl-cellulose, viscosity of 2% solution in water: appr. 450 cP (DOW).
39) Partially ethoxylated copolymerisate of $C_{12-14}$-alkylethylene/maleic acid (maleic acid-anhydride), molecular weight: appr. 20.000 Dalton (Akzo).
40) Ethoxylated castor oil (appr. 90 oxyethylene units per molecule) (Berol).
41) Technical propylene glycol dioleate (Oleofina)
42) Technical ricinoleic acid (Oleofina).
43) Hydrophobic-modified (poly)hydroxyethyl cellulose (Berol).
44) Phosphate ester triethanol amine salt of tristyryl-phenolpoly(15)oxyethylene alcohol (Rhône-Poulenc).
45) 40% Lauryl alcohol polyoxyethylene alcohol sulfonated succinic acid ester salt (monoester) (Rhône-Poulenc).
46) Kerosene, boiling point 190 to 205°C, aromatic content <0,1%.
47) 70% sodium lauryl-trioxyethylene alcohol sulfate (Albright of Wilson).
48) Formalin-condensed naphthalenesulfonic acid : Na-salt (84%) (Harcros).
49) Fatty acid sulfonate neutralized to salt (Harcros).
50) 62% Petroleum sulfonate with an average molecular weight of 520 Dalton (Witco).
51) Polyphenol ether sulfate (Berol).
52) Tristyrylphenol poly(15)oxyethylene alcohol sulfate (Harcros).
53) 2-Ethylhexyl sebacate (diester).
54) Dioleic acid ester of polyethylene glycol (M=200 Dalton) containing 2% free oleic acid (KVK AGRO).
55) Technical n-butyl oleate (Oleofina).
56) Ethoxylated nonyl phenol (10 oxyethylene units per molecule) (Berol).
57) Ethoxylated branched $C_{9-11}$-alkyl alcohol (5-oxyethylene units per molecule) (Berol).
58) Ethoxylated branched $C_{9-11}$-alkyl alcohol (7 oxyethylene units per molecule) (Berol).
59) Ethoxylated castor oil (18 oxyethylene units per molecule) (Berol).
60) Acidic phosphoric ester of ethoxylated alkyl alcohol (Harcros).
61) Water-soluble vinylpyrrolidone/vinylacetate copolymer in a molar ratio of 60/40 (GAF).
62) Water-soluble alkylated vinylpyrrolidone polymer (GAF).
63) Sodium sulfosuccinic acid octyl ester (Cyanamide).

Concurrently with the present patent application a parallel patent application is filed, relating to oily suspension concentrates containing PMP, ethofumesate and/or metamitron, in which the examples primarily show the definition of the used polymeric stabilizers. The examples illustrated in said parallel application may be used as a supplement to the present application. In order to facilitate the clearness the same list of chemicals has been used with the same numbering in the two specifications. On the other hand the lists of chemicals may include chemicals that do not form part of the examples described in the application concerned.

In the following Examples "special oils" are marked with an asterisk (*).

<u>Example 1</u> [Not of the invention]

The Examples deal with suspensions containing metamitron and phenmedipham, in which the detergent content is simultaneously low. All previous examples of such compositions are based on paraffinic mineral oil, see Example 7 in patent application EP 142,679 and Examples 1 to 4 in patent application EP 243,872. The compositions 1b and 1c in Table I are optimized as regards the emulsion property, and as regards emulsion stability as well as storage stability they are on a level with the properties described in the above referenced patent applications.

The compositions 1a, 1b and 1c are obtained by mixing at first mineral oil and petroleum. Subsequently, the emulsifiers have been added in the stated order, and a thorough stirring has been effected prior to the addition of the perchloric acid, following which phenmedipham (PMP) and metamitron were added and stirred into the preparation. The grinding has been effected three times at a periphery velocity of appr. 10 m/sec. on a 0.6 l Dyno-Mill at a dosing ratio of appr. 3 l/h.

After the grinding the Attagel is stirred in, thereby offering the best, physical storage stability. Post-mixing has been effected on a high-speed-mixer to a homogeneous, liquid paste.

The dilution emulsion test was carried out by preparing 3 vol% solutions (100 ml) in deionized water and municipal tap water. A stirring was effect for one hour on a magnetic stirrer in a 150 ml beaker. Then the emulsions were allowed to rest for one hour and were visually compared to each other. All tests showed a limited tendency to liberate oil. But all the evaluations showed that sample 1a clearly offered the most stable emulsions.

Tank mixing experiments with beet pesticides have not been carried out because none of the recipes has been optimized in this respect.

The sedimentation test was effected with a plain spatula which was slowly inserted into the undiluted storage samples that had being standing at 25°C in a 100 ml test glass without being shaken. Sample 1a gave a clear, hard glass sound as the spatula impinged on the bottom. This was not the case with samples 1b and 1c and showed clearly that a coherent sedimentation layer had settled on the bottom of said glasses.

The Examples show that the replacement of paraffinic mineral oil by naphthenic mineral oil offers an increased emulsifying stability as well as an increased storage stability which latter feature is extremely surprising.

The 10% high-boiling petroleum available in all three samples is added to impart to the compositions a reasonably low viscosity and is for this reason desirable. From a toxilogical point of view petroleum is undesired in the products.

Conclusion: Naphthenic mineral oil offers an increased emulsifying stability as well as an increase storage stability.

Table 1

| Raw material component | 1a | 1b | 1c | |
|---|---|---|---|---|
| | Composition in % by weight | | | |
| Active component: | | | | |
| PMP, tekn. 97% | 6.7 | 6.7 | 6.7 | |
| Metamitron, 97 | 24.8 | 24.8 | 24.8 | |
| Oil: | | | | |
| Aromatic-free oil 1)(*) | 43.6 | | | Napht.oil |
| Hydropar 19 2) | | 43.6 | | Paraff.oil |
| Shell HVI 60 3) | | | 43.6 | Paraff.oil |
| Petroleum 4) | 10 | 10 | 10 | Petroleum |
| Emulsifier component: | | | | |
| Berol 269 5) | 2.6 | 2.6 | 2.6 | Non-ionic |
| Berol 26 6) | 2.4 | 2.4 | 2.4 | Non-ionic |
| Genapol 2909 7) | 0.8 | 0.8 | 0.8 | Non-ionic |
| Genamine C100 8) | 0.6 | 0.6 | 0.6 | Containing Amine |
| Ampholyt SKKP-70 9) | 1.9 | 1.9 | 1.9 | Containing Amine |
| Arkopon T, pulv 10) | 0.6 | 0.6 | 0.6 | Anionic emulsifier |
| Perchloric acid, 70% | 1 | 1 | 1 | Partially converted to salt |
| Inorganic filler: | | | | |
| Attagel 40 11) | 5 | 5 | 5 | |

| Summed recipe: | | | |
|---|---|---|---|
| Active content, techn. | 31.5 | 31.5 | 31.5 |
| Emulsifier comp. | 8.8 | 8.8 | 8.8 |
| Miscellaneaous | 1.1 | 1.1 | 1.1 |
| Inorganic filler | 5 | 5 | 5 |

Tabel 1 (continued)

| | 1a | 1b | 1c |
|---|---|---|---|
| Emulsifiability: Dilution 3%. | | | |
| D.W.[a]: | good | reasonable | reasonable |
| T.W.[b]: | good | reasonable | reasonable |
| Emulsifiability after 6 months 3% dilution | | | |
| D.W.[a]: | reason-able | not accept. | not accept. |
| T.W.[b]: | reason-able | not accept. | not accept. |
| Sedimentation after 6 months at 25°C | none | clear tendency | clear tendency |

a) D.W. = Deionized water
b) T.W. = Tap water, 20-25°C

**Example 2** [Not of the invention]

The examples show a biological screening comparison test carried out as field experiments between 160 g/l oil-containing PMP-suspension concentrates with only 4% emulsifier, and the oil-containing suspension concentrate actually marketed by Schering, marketed under the trade name Betanal+ containing 16% PMP and 19% emulsifier. (Experience as regards emulsion preparations in which the PMP is dissolved in the oily phase shows that a specific quantity of the emulsifier component is necessary to obtain a sufficiently good biological effect (cf. SE patent publication No. 357,486). The optimum quantity of emulsifier amounts to appr. 20% by weight, corresponding to what is normal in all commercial preparations.

The compositions 2b, 2c, 2d and 2e were prepared by firstly admixing the PMP in the oily phase and subsequently adding the emulsifier components and water obtained as a pre-mixing by mixing at first water + monoethanol amine and DDSA. The remaining ionic emusifiers are then added and finally the non-ionic emulsifiers in the indicated order. Formic acid and Attagel are subsequently added. The grinding was effected three times on a 0.6 l Dyno-mill at a

circumferential velocity of appr. 10 m/sec. and at a dosing velocity of appr. 3 l/h, or until appr. 90% of the particles had a grain size not exceeding 5μ.

As regards samples 2d and 2e a post-grinding was performed after adding oxalic acid, monoethanol amine salt and oxalic acid-K-salt which was not completely converted to salt. The purpose of the additions is to prevent calcium from the diluting water from reacting with the anionic emulsifiers and forming hardly soluble Ca-salts. The oxalic acid salts react with the calcium ions in the water and form hardly soluble calcium oxalate. This contributes to improving the longlife emulsion stability in hard water.

The biological testing was effected in lots of 2 x 12 meter with 4 repetitions. In experiment 9032 the beet type was Amethyst sown on 31 March 1990, and in experiment 9033 the beet type was Matador sown on 8 April 1990. In experiment 9032 the beets were sprayed first time on 2 May and second time on 8 May. In experiment 9033 the beets were sprayed first time on 1 May and second time on 9 May. All dosages were of 3 l/ha. A non-treated lot and lots treated completely as the experimental lots were included as reference, treated with Betanal (160 g/l PMP-containing emulsion concentrate) and Betanal+ (160 g/l PMP-containing suspension concentrate). Experiment 2a indicates the summed recipe of Betanal+. Recipe compositions of Betanal are not included in the scheme, the formulation type being totally different.

The biological effect in % is calculated according to the following formula:

$$100 \times \frac{\text{g weed per m}^2\text{ of treated lot}}{\text{g weed per m}^2\text{ of untreated lot}}$$

The quantity of weed of the untreated lot is stated uttermost to the left in the scheme.

In both experiments Betanal and Betanal+ had the same biological effect, so that column 2a states both the biological effect of Betanal as well as of Betanal+.

Conclusion: Even though there have been great differences in the content of emulsifiers of the preparations, all of the preparations have presented a satisfactory biological effect.

**Table 2**

| Raw material Component | 2a | 2b | 2c | 2d | 2e |
|---|---|---|---|---|---|
| | Composition in % | | | | |
| **Active component:** | | | | | |
| PMP, tekn 97 % | | 17.0 | 17.0 | 16.3 | 16.3 |
| **Oil:** | | | | | |
| Gravex 921 [12] (*) | | | | 64.2 | 64.2 |
| Isononanoic acid | | 6.5 | 6.5 | 5.2 | 5.2 |
| Oleic acid | | 2.0 | 2.0 | 1.9 | 1.9 |
| Radia 7331 [13] (*) | | | 66.5 | | |
| Radia 7131 [14] (*) | | 66.4 | | | |
| **Emulsifier component:** | | | | | |
| Berol 02 [15] | | 1.1 | 1.0 | 0.5 | 0.5 |
| Berol 269 [5] | | 0.2 | 0.2 | 0.1 | 0.1 |
| Berol 26 [6] | | 0.1 | | | |
| Synperronic NX [16] | | | 0.2 | 0.4 | 0.4 |
| Berol 922 [17] | | 0.5 | 0.5 | 0.3 | 0.3 |
| Emulsogen EL [18] | | 0.15 | 0.15 | 0.1 | 0.1 |
| Atlox 1285 [19] | | | | 0.2 | 0.2 |
| DDSA [20] | | 0.3 | 0.3 | 0.3 | 0.3 |
| Morwet EFW [21] | | | | 0.2 | 0.2 |
| Berol 724 [22] | | 0.6 | 0.6 | 0.55 | 0.55 |
| Gafac RE 410 [23] | | 0.6 | 0.6 | 0.65 | 0.65 |
| Gafac RE 610 [24] | | 0.2 | 0.2 | 0.1 | 0.1 |
| Tarryn P 126 [25] | | 0.2 | 0.1 | | |
| Monoethanolamin | | 0.25 | 0.25 | 0.2 | 0.2 |
| **Polymer stabilizer:** | | | | | |
| Mowiol 3/83 [29] | | 0.3 | 0.3 | 0.3 | 0.3 |

Table 2 (continued)

| | 2a | 2b | 2c | 2d | 2e |
|---|---|---|---|---|---|
| Raw material | Composition in % | | | | |
| Component | | | | | |
| Water, acid and filler: | | | | | |
| Attagel 40 [11)] | | 2.0 | 2.0 | 1.4 | 1.4 |
| Formic acid | | 0.4 | 0.4 | 0.2 | 0.2 |
| Oxalic acid MEA-salt | | | | 6.0 | |
| Oxalic acid-K-salt | | | | | 6.0 |
| Water | | 1.2 | 1.2 | 0.9 | 0.9 |
| Summed recipe: | | | | | |
| Active content, 97% | 17.5 | 17 | 17 | 16.3 | 16.3 |
| Oil | 58 | 74.9 | 75 | 71.3 | 71.3 |
| Emulsifier comp. | 19 | 4.2 | 4.1 | 3.6 | 3.6 |
| Polymer stabilizer | | 0.3 | 0.3 | 0.3 | 0.3 |
| Water, acid and filler | 5.5 | 3.6 | 3.6 | 8.5 | 8.5 |
| Density | 0.96 | 0.98 | 0.98 | 0.97 | 0.97 |
| pH (1:10) | 3.0 | 3.05 | 3.15 | 2.9 | 3.1 |
| Dosage l/ha | 3 | 3 | 3 | 3 | 3 |
| g PMP/ha. | 480 | 485 | 485 | 460 | 460 |
| % biological effect: | | | | | |
| Experiment 9032 | | | | | |
| Effect: | 100% | 100% | 100% | 99% | 99% |
| (untreated: 2828 g/m$^2$) | | | | | |
| Experiment 9033 | | | | | |
| Effect: | 99% | 100% | 100% | 98% | 99% |
| (untreated: 2102 g/cm$^2$) | | | | | |

**Example 3**

The examples show comparison testing between Betanal+ (charge No. 902), sample 3a and a composition, sample 3b, described in accordance with this invention.

The composition 3b is obtained by preparing at first a 50% aqueous dispersion of PMP in water. The aqueous PMP-slurry further contained 1.25% of Berol 02, 0.625% of Berol 922 and 0.625% of Berol 724. After mixing to obtain sample 3b it corresponds to 4 g/l, 2 g/l and 2 g/l, respectively. The grinding was effected three times on a 0.6 l Dyno-mill at a circumferential velocity of appr. 10 m/sec. and at a dosing velocity of appr. 3 l/h, or until at least 90% of the particles had a grain size not exceeding 5 μ. The salicylic acid was subsequently dissolved in Radia 7131. The remaining oils were added and mixing was effected. A little water and the emulsifiers which had not been used for the preparation of the PMP-suspension were then mixed and subsequently added to the oil mixture, and agitation was effected. Then the ground PMP-suspension was added, Mowiol was added as a 30% solution and finally the remaining amount of water and Attagel was added.

The composition 3b was thoroughly stirred on a high-speed-mixer, and a final, not particularly effective grinding on a "Mini-mill" was effected, manufactured by Eiger Engineering LTD Warrington, Cheshire, England, Model M 50 VSE TFV, filled with appr. 35 ml 1 mm Zirconium balls. The purpose of the grinding was primarily to split agglomerated Attagel.

Betanal+ (charge nr. 302) was used as reference 3a-I. Since the product was comparatively coarse-grained, a sample of Betanal+ was ground on a 0.6 l Dyno-mill, so that the grain size of the larger particles was reduced from about 20μ to 5μ corresponding to sample 3b. This sample was named 3a-II.

The storing experiments were carried out for a period of 40 days, during which the samples were alternately stored at room temperature (25°C) and at 55°C. The switching was effected manually every day and no samples were switched at week-ends. The measurings of the particle size were effected on evaluation by micro-examination and appear from the scheme. Sample No. 3b differed completely from samples 3a-I and 3a-II, which were not substantially different, even though the particle size of the samples initially had been very unequal. The accelerated testings correspond to a storage for several years under normal storing conditions and are much harder compared to what a product is generally subjected to.

Conclusion: Sample 3b was decisively better than samples 3a-I and 3a-II. The observed, restricted crystal growth in sample 3b does not appear to involve problems, neither as regards the storage stability nor the biological effect.

Table 3

| Raw material Component | 3a | 3b | |
|---|---|---|---|
| | Composition in % | | |
| Active component: | | | |
| PMP, techn. 97% | | 17.0 | |
| Oil: | | | |
| Gravex 921 [12] (*) | | 8.0 | |
| Radia 7131 [14] (*) | | 32.0 | |
| Isononanoic acid | | 4.2 | |
| Oleic acid | | 1.6 | |
| Emulsifier component: | | | |
| Berol 02 [15] | | 1.5 | Non-ionic emuls. |
| Berol 922 [17] | | 0.5 | Non-ionic emuls. |
| Emulsogen EL [18] | | 0.1 | Non-ionic emuls. |
| DDSA [20] | | 0.4 | Emuls. type g |
| Berol 724 [22] | | 0.4 | Emuls. type a |
| Gafac RE 410 [23] | | 0.3 | Emuls. type a |
| Sulfosoft [26] | | 0.2 | Emuls. type b |
| † Acrylon A11 [27] | | 0.4 | Emuls. type h |
| Monoethanol amine | | 0.2 | |
| Acid stabiliser: | | | |
| Salicylic acid | | 1.0 | Stabiliz. type i |
| Polymer stabilizer: | | | |
| Mowiol 3/83 [29] | | 0.3 | |
| Water and filler: | | | |
| Water | | 30.4 | |
| Attagel | | 1.5 | |
| Summed recipe: | | | |
| Active content, 97% | 17.5 | 17.0 | |
| Oil | 58 | 45.8 | |
| Emulsifier component | 19 | 4.0 | |
| Acid stabilizer | | 1.0 | |
| Polymer stabilizer | | 0.3 | |
| Water, acid and filler | 5.5 | 31.9 | |

† Delivered as an aqueous solution, but stated on the basis of the solids content.

| Sample | 3a-I | 3a-II | 3b |
|---|---|---|---|
| pH (1:10) | 3.0 | 3.0 | 3,75 |
| Particle size Start: | | | |
| 90% < appr. | 20μ | 5μ | 5μ |
| Date | 30.8.90 | 30.8.90 | 30.8.90 |
| Particle size After 40 days alternately at 25°C/55°C | | | |
| 90% < appr. | 30μ | 30μ | 10μ |
| Fraction of very small particles | none | few | extremely many |
| Date | 9.10.90 | 9.10.90 | 9.10.90 |

## Example 4

The Example illustrates the stability of ester oil in the described composition.
Sample 3b was stored for 42 days constantly at 55°C. The content of liberated 2-ethylhexyl alcohol was analyzed both before and after the storing to 0.03% and 0.05%, resp., and corresponds to an increase of 0.02% absolute.
The content of esterified 2-ethylhexyl alcohol in Radia 7131 (2-ethylhexyl stearate) was appr. 33% corresponding to appr. 10.5% in sample 3b. The decomposition of 0.02% absolute corresponds to a relative decomposition of appr. 0.2%, which is extremely low.
A storage at 55°C for 42 days corresponds to a storage of several years under normal conditions.

## Example 5

The examples show comparison test between different suspensions containing appr. 100 g/l PMP and 100 g/l ethofumesate. In the actual systems the influence of the water content and the pH on properties, such as stability of active substances, physical stability, emulsion stability and the tendency to crystal growth was examined.
The patent literature shows apparently no examples of analogous products, in which both PMP and ethofumesate have been suspended in an oil containing, liquid phase. In comparison with the samples provided in accordance with the present invention a formulation has been prepared which corresponds to the marketed product Betaren+, from which appr. 4% mineral oil has been removed, thereby providing space for appr. 100 g/l PMP and 100 g/l ethofumesate. This product was ground on a Dyno-mill so that 90% of the particles had a particle size not exceeding 5 μ.
Moreover, a total of 25 different samples have been prepared for mutual comparison. All the recipes are included in the chief recipe in Table 5, wherein the amount of water, Gravex 921 oil, oleic acid and isononoic acid in total constitutes 70.3% by weight. Six sets of samples have been prepared for which the water quantity was being varied from 2% to 49%, and for each set of samples four sub-samples were prepared with pH-values of 3, 3.7, 4.5 and 5.5, respectively. The fine tunings were effected with very small amounts of concentrated hydrochloric acid or monoethanol amine.
All samples are prepared according to the same principle as described in Example 2.

The samples have been stored at 45°C. The evaluation was effected after 45 and 87 days and appears from the Tables. After 45 days the samples with a water content of 2% and 49% were discarded, because they had a tendency either to sediment or to gelatinize.

Conclusion: Samples with a small water content have a tendency to sediment.

Samples with a large water content has a tendency to gelatinize.

A low pH may in unison with a higher water content cause the product to become viscous by storing.

The emulsifiability appears to be dependent on the pH but is of course also dependent on the formulation proper.

An initiating instability of PMP is noticed at pH 5.5. The decomposition may, however, not be characterized as unacceptable and particularly not if the water content is high (39%).

A limited tendency to crystal growth is noticed after 87 days of storage, independent of pH. The crystal growth decreases at increasing water content. It is a characteristic feature that all samples have a fairly high content of fine-grained active substance.

In comparison, the "Betanal+"-copy shows a pronounced tendency to crystal growth after 45 days of storage at 45°C. At the same time the sample had become rather viscous and could only after thorough agitation be homogenized again. The emulsifiability could after the 45 days merely be characterized as reasonable, but not good. A tendency to decomposition of ethofumesate was observed.

Table 5a

| Raw material component | Composition by % | |
|---|---|---|
| Active component: | | |
| PMP, techn. 97% | 10.3 | |
| Ethofumesate, techn. 97% | 10.3 | |
| Oil + water in total: | 70.15 | |
| Emulsifier component: | | |
| Berol 02 [15)] | 1.05 | Non-ionic emuls. |
| Berol 269 [5)] | 0.3 | Non-ionic emuls. |
| Synperronic NX [16)] | 0.6 | Non-ionic emuls. |
| Berol 922 [17)] | 0.45 | Non-ionic emuls. |
| Berol 192 [40)] | 0.45 | Non-ionic emuls. |
| Emulsogen EL [18)] | 0.15 | Non-ionic emuls. |
| Atlox 1285 [19)] | 0.3 | Non-ionic emuls. |
| DDSA [20)] | 0.7 | Emulsif. type g |
| Morwet EFW [21)] | 0.3 | Emulsif. type e |
| Berol 724 [22)] | 0.7 | Emulsif. type a |
| Gafac RE 410 [23)] | 0.45 | Emulsif. type a |
| Sulfosoft [26)] | 0.3 | Emulsif. type b |
| +Acrylon A11 [27)] | 0.5 | Emulsif. type h |
| Monoethanolamin | 0.2 | |
| Polymer stabilizer: | | |
| Mowiol 3/83 [26)] | 0.3 | |
| Filler of inorganic acid: | | |
| Attagel % [11)] | 1.5 | |
| Formic acid, 85% | 1.0 | |
| Summed recipe: | | |
| Active content, 97% | 20.6 | |
| Emulsifier component | 6.45 | |
| Polymer stabilizer | 0.3 | |
| Filler and inorg. acid | 2.35 | |
| Oil and water | 70.30 | |

+Delivered as an aqueous solution, but indicated on the basis of the solids content.

Table 5b

Storage at 45°C

| Composition | | No. | pH | Evaluation after 45 days Appearance | Evaluation after 87 days Appearance | Evaluation after 87 days Emulsifiability |
|---|---|---|---|---|---|---|
| Water | : 2.05% | 1 | 3 | | | |
| Gravex 921(*) | :63.25% | 2 | 3.7 | | | |
| Oleic acid | : 2 % | 3 | 4.5 | | | |
| Isononanoic acid | : 3 % | 4 | 5.5 | | | |
| Water | : 6.05% | 5 | 3 | free-flowing | free-flowing | bad |
| Gravex 921(*) | :59.24% | 6 | 3.7 | " | " | good |
| Oleic acid | : 2 % | 7 | 4.5 | " | " | good |
| Isononanoic acid | : 3 % | 8 | 5.5 | " | precipitation | reasonable |
| Water | :17.55% | 9 | 3 | free-flowing | viscous | bad |
| Gravex 921 (*) | :49 % | 10 | 3.7 | " | partially viscous | reasonable |
| Oleic acid | : 1.5 % | 11 | 4.5 | " | free-flowing | good |
| Isononanoic acid | : 2.25% | 12 | 5.5 | " | " | reasonable |
| Water | :27.55% | 13 | 3 | free-flowing | viscous | bad |
| Gravex 921 (*) | :39 % | 14 | 3.7 | " | partially viscous | bad |
| Oleic acid | : 1.5 % | 15 | 4.5 | " | free-flowing | good |
| Isononanoic acid | : 2.25% | 16 | 5.5 | " | " | good |
| Water | :39.2 % | 17 | 3 | free-flowing | viscous | bad |
| Gravex 921 (*) | :29 % | 18 | 3.7 | " | partially viscous | bad |
| Oleic acid | : 0.85% | 19 | 4.5 | " | free-flowing | reasonable |
| Isononanoic acid | : 1.25% | 20 | 5.5 | " | " | good |
| Water | : 49.2 % | 21 | 3 | Gelatinized | | |
| Gravex 921 (*) | : 19 % | 22 | 3.7 | " | | |
| Oleic acid | : 0.85% | 23 | 4.5 | " | | |
| Isononanoic acid | :1.25% | 24 | 5.5 | " | | |

Compositions No. 1–12 are not of the invention

Table 5c

| No. | PMP at 45°C start | PMP at 45°C 45 days | PMP at 45°C 87 days | Ethofumesate at 45°C start | Ethofumesate at 45°C 45 days | Ethofumesate at 45°C 87 days | 87 days at 45°C Particle size 90 ≤ appr. |
|---|---|---|---|---|---|---|---|
| 5 | 9.5 | 9.4 | 9.5 | 9.7 | 9.6 | 9.7 | |
| 6 | 9.4 | 9.4 | 9.3 | 9.6 | 9.6 | 9.6 | 15µ |
| 7 | 9.4 | 9.4 | 9.3 | 9.6 | 9.7 | 9.7 | rather fine-grained |
| 8 | 9.3 | 8.8 | 8.6 | 9.5 | 9.2 | 9.3 | |
| 9 | 9.4 | 9.4 | 9.5 | 9.4 | 9.4 | 9.4 | |
| 10 | 9.3 | 9.3 | 9.4 | 9.4 | 9.4 | 9.5 | |
| 11 | 9.3 | 9.3 | 9.3 | 9.4 | 9.4 | 9.5 | 10 to 15µ |
| 12 | 9.2 | 9.1 | 9.0 | 9.3 | 9.4 | 9.5 | very fine-grained |
| 13 | 9.4 | 9.4 | 9.5 | 9.5 | 9.5 | 9.5 | |
| 14 | 9.4 | 9.4 | 9.4 | 9.4 | 9.5 | 9.5 | |
| 15 | 9.4 | 9.3 | 9.4 | 9.4 | 9.5 | 9.5 | 10µ |
| 16 | 9.4 | 9.1 | 8.9 | 9.4 | 9.4 | 9.5 | very fine-grained |
| 17 | 9.9 | 9.9 | 10.0 | 10.1 | 10.0 | 9.9 | |
| 18 | 9.9 | 9.8 | 9.8 | 10.1 | 10.1 | 9.9 | 10µ |
| 19 | 9.8 | 9.9 | 9.9 | 10 | 10.1 | 10.0 | very fine-grained |
| 20 | 9.8 | 9.7 | 9.6 | 10 | 10 | 10.0 | |
| "Betanal+" with | start | 45 days | | start | 45 days | | |
| 10% PMP | 10.4% | 10.3% | | 10.6% | 10.3% | | 20 to 25µ |
| + 10% ethofumesate | | | | | | | very fine-grained |
| pH (1:10):3,1 | | | | | | | |

the sample had become rather viscous after resting the 45 days in the heating chamber and could only difficultly be made homogeneous again. Emulsifiabiity after 45 days in heating chamber may only be characterized as reasonable.

**Example 6**

The examples show comparison tests between the marketed product Betanal+ and the composition sample 3b, described in Example 3. The purpose of the comparison is to evaluate the tank mixing properties of the products with other pesticides.

Traditional testing methods of evaluating the emulsion stability are based on agitating the samples in different qualities of water and letting the samples rest in sedimentation glasses and to effect at different times a visual evaluation of precipitated material both at the top and at the bottom. If tank mixing experiments with the above mentioned two products are carried out according to the same principle, the testing frequently shows that the products in the tank mixture with other pesticides do not provide inconvenient precipitations.

In practical circumstances oily suspension preparations frequently behave in another way, since there is a non-unimportant risk that a more or less intense contact between the suspended oil drops and solid particles by the dissolution of the emulsifier component in the water phase results in an adhesion between oil and particles. When carrying out a relevant testing it is therefore necessary that the mixtures are stirred constantly.

In the described tank mixing experiments that appear from Table 6, the agitation is effected in a 150 ml beaker by stirring moderately quickly with a magnet. In all experiments the quantity of water amounts to 100 ml. The tank mixture is effected by dispersing at first the oil-containing PMP-preparation in water, following which the second pesticidal preparation is added while stirring. The samples were evaluated after ½ hour, 1 hour and 2 hours, after the agitation had been stopped for two minutes,

Conclusion: The experiments show unambiguously that preparation 3b is better suited for tank mixing with Nortron and Fusilade than the nowadays marketed product Betanal+. It appears that Betanal+ in a tank mixture with Nortron preferably has to be as acidic as possible. It appears, however, to be unrealistic to lower the pH-value of Betanal+.

Table 6a

| Preparation | Sample 3b | | Betanal+ charge 902 1) | |
|---|---|---|---|---|
| Dilution water | De-ionized water | Municipal water 20-25°dH | De-ionized water | Municipal water 20-25°dH |
| Stirring with magnet for 2 h: without mixing with product | tight emulsion no precipitation | tight emulsion no precipitation | tight emulsion no precipitation | tight emulsion no precipitation |
| 1% PMP preparation + 1% Nortron 2) and stirring for 2 h: | | | | |
| 4) PMP conc. not adjusted | tight emulsion no precipitation | tight emulsion no precipitation | 2 h: coating | ½ h: coating |
| 5) PMP conc. adjusted with HCl | " " | " " | 2 h: coating | 2 h: coating |
| 6) PMP conc. adjusted with monoethanol amine | " " | " " | ½ h: coating | ½ h: coating |
| 1% PMP preparation + 1% Fusilade 3) and stirring for 2 h | tight emulsion no precipitation | tight emulsion no precipitation | 2 h: coating | 2 h: small coating |

1) Oil containing suspension concentrate with 160 g/l PMP from Schering AG
2) Emulsion concentrate with 200 g/l ethofumesate from Schering AG
3) Emulsion concentrate with 250 g/l fluazifop-butyl from ICI

| | Sample 3b | Betanal+ |
|---|---|---|
| 4) with no pH-setting, pH (1:10) | 3.8 | 3.1 |
| 5) +0,2 g/l conc. HCl, pH (1:10) | 3.4 | 2.9 |
| 6) +0,1-0,2 g/l MEA, pH (1:10) | 4.4 | 3.5 |

**Example 7**

The purpose of this series of experiments is to illustrate the importance of the polymeric stabilizer in connection with tank mixing of oil-containing PMP-preparations with Fusilade.

Composition 7 was prepared as the basic recipe of the tested formulations. The composition appears from Table 7 and the preparing procedure was correspondingly as described for composition 3b in Example 3.

920 parts by weight of composition 7 were agitated with different quantities of 30% by weight of Mowiol 3/83 solution varying from 10 and up to 600 parts by weight. In case the total amount of mixture did not exceed 1000 parts by weight it was diluted with water up to 1000.

The emulsion stability of the samples was tested under thorough stirring with a magnet in 150 ml beaker containing 100 ml liquid. The samples were evaluated after 2 hours. The agitation was effected in deionized water and tap water, alone and in mixture with Fusilade, respectively. All concentrations were at 1% by volume.

Conclusion: The samples to which no solution of Mowiol was added, provided within one hour by stirring in tank mixing with Fusilade distinct, precipitated coatings at the bottom and on the magnet. In contradiction thereto, none of the other mixtures showed a tendency to cause precipitations. It should, however, be observed that certain admixtures corresponding to that the Mowiol amount of the concentrate varied from 5.3 to 9.1% by weight, on standing had a tendency at the top of the beakers to precipitate very small amounts of oil. But it was an essential cosmetic problem without any practical importance. The mixtures which in the concentrate contained 11.8% by weight of Mowiol, did not show the same tendency and offered very stable emulsions. The same was the case when the Mowiol amount varied from 0.3 to 2.4% by weight.

Table 7a

| | 7 | |
|---|---|---|
| Raw material component | composition in parts by weight | |
| Active component: | | |
| PMP, techn. 97% | 170 | |
| Oil: | | |
| Gravex 921 [12)] [(*)] | 80 | |
| Radia 7131 [14)] [(*)] | 320 | |
| Isononanoic acid | 42 | |
| Oleic acid | 16 | |
| Emulsifier component: | | |
| Berol o2 [15)] | 15 | Non-ionic emuls. |
| Berol 922 [17)] | 6 | Non-ionic emuls. |
| Berol 724 [22)] | 4 | Emuls. type a |
| Gafac RE 410 [23)] | 2 | Emuls. type a |
| +Hostapur SAS 60 [28)] | 1 | Emuls. type b |
| Sulfosoft [27)] | 2 | Emuls. type b |
| +Acrylon A 11 [26)] | 3 | Emuls. type h |
| Monoethanol amine | 1 | |
| Acid stabilizer: | | |
| Salicylic acid | 10 | |
| Water and filler: | | |
| Water | 233 | |
| Attagel 40 [11)] | 15 | |
| Summed recipe: | | |
| Active content | 170 | |
| Oil | 458 | |
| Emulsifier component | 34 | |
| Acid stabilizer | 10 | |
| Water and filler | 248 | |
| In total | 920 | pH (1:10) : 3,9 |

+Delivered as an aqueous solution but indicated on the basis of solids content.

Table 7b

| Sample | Parts 30% Mowiol 3/83 29) | Parts by weight in total | % by weight Mowiol | Stirring on magnet stirrer for 2 hours: De-ionized water 1% solution | De-ionized water 1%+1% Fusilade | 20-25°dH 1% sol. | tap water 1%+1% Fusilade |
|---|---|---|---|---|---|---|---|
| 7-1 | - | 1000 | 0 | 2 h: neat | ½ h: coating | 2 h: neat | ½ h: coating |
| 7-2 | 10 | 1000 | 0.3 | 2 h: neat | 2 h: neat | 2 h: neat | 2 h: neat |
| 7-3 | 20 | 1000 | 0.6 | 2 h: neat | 2 h: neat | 2 h: neat | 2 h: neat |
| 7-4 | 40 | 1000 | 1.2 | 2 h: neat | 2 h: neat | 2 h: neat | 2 h: neat |
| 7-5 | 80 | 1000 | 2.4 | 2 h: neat | 2 h: neat | 2 h: neat | 2 h: neat |
| 7-6 | 200 | 1120 | 5.3 | 2 h: neat | 2 h: neat | 2 h: * | 2 h: neat |
| 7-7 | 300 | 1220 | 7.4 | 2 h: * | 2 h: * | 2 h: * | 2 h: neat |
| 7-8 | 400 | 1320 | 9.1 | 2 h: * | 2 h: * | 2 h: * | 2 h: neat |
| 7-9 | 600 | 1520 | 11.8 | 2 h: neat | 2 h: neat | 2 h: neat | 2 h: neat |

* neat, but may on standing precipitate oil

**Example 8**

The examples in this series of experiments illustrate the influence exerted by various, selected polymeric stabilizers by tank mixing of oil containing PMP-preparations with Fusilade.

A pre-concentrate corresponding to composition 7 in Table 7 was used as the basis of the recipes. 80 parts by weight of various, water-based polymeric solutions were added to 920 parts by weight of said composition, so that the compositions in total attained an amount of 1000 parts by weight. The final compositions appear from Table 8. Tank mixing with Fusilade was effected so that the concentrations of the PMP-preparations and Fusilade in all mixtures constituted 1% by volume of each preparation. The tank mixtures were evaluated after stirring for two hours in deionized water and in tap water. The results appear from Table 8.

Conclusion: The experiments clearly show that the tested polymers present a stabilizing effect and that they hamper the precipitation of conglutinated material of finely ground pesticide and oil in the prepared use solutions.

Table 8

| Sample | Polymer | % by weight in preparation | Stirring on magnet stirrer 1% + 1% Fusilade | | | |
|---|---|---|---|---|---|---|
| | | | Deionized water | | Tap water | |
| 1 | none | - | ½ h: coating | | ½ h: coating | |
| 2 | Mowiol 10/74 [30)] | 0.3 | 2 h: | neat | 2 h: | neat |
| 3 | Mowiol 4/80 [31)] | 0.3 | " | " | " | " |
| 4 | Mowiol 3/98 [32)] | 0.3 | " | " | " | " |
| 5 | Mowiol 40/88 [33)] | 0.3 | " | " | " | " |
| 6 | Natrosol 250/HR [35)] | 0.2 | " | " | " | " |
| 7 | Natrosol 250/HR [35)] | 0.5 | " | " | " | " |
| 8 | Natrosol 250/HR [35)] | 0.8 | " | " | " | " |
| 9 | Methocel A 15LW [36)] | 0.5 | " | " | " | " |
| 10 | Celacol HPM 450 [37)] | 0.5 | " | " | " | " |
| 11 | " | 4 | " | " | " | " |

**Example 9**

The examples in this series of experiments illustrate the influence exerted on the emulsifying stability by various, selected anionic emulsifiers.

The recipes of the compositions appear from Table 9. The samples were prepared according to the same principle as composition 3b i example 3.

Conclusion: Already between composition 9a and 9b, both of which merely contain two anionic emulsifiers the emulsion testings show great differences. Sample 9a presents a too inferior emulsifying stability, whereas the emulsion stability of sample 9b is close to the acceptable. Samples 9c and 9e have presented an optimum stability in the emsulsions experiments. Stirring for six hours in tank mixing is a very hard testing. It appears to indicate acceptability if the samples after stirring for 2 to 3 hours together with Fusilade do not provide deposits on the magnet.

Table 9

| Raw material component | 9a | 9b | 9c | 9d | Emulsifier type |
|---|---|---|---|---|---|
| | Composition in % | | | | |
| Active component: | | | | | |
| PMP, techn. 97% | 17 | 17 | 17 | 17 | |
| Oil: | | | | | |
| Gravex 921 [12] (*) | 8 | 8 | 8 | 8 | |
| Radia 7131 [14] (*) | 32 | 32 | 32 | 32 | |
| Isononanoic acid | 4.2 | 4.2 | 4.2 | 4.2 | |
| Oleic acid | 1.6 | 1.6 | 1.6 | 1.6 | |
| Emulsifier component: | | | | | |
| Berol 02 [15] | 1.5 | 1.5 | 1.5 | 1.5 | Non-ion. |
| Berol 922 [17] | 0.5 | 0.5 | 0.5 | 0.5 | Non-ion. |
| Emulsogen EL [18] | 0.1 | 0.1 | 0.1 | 0.1 | Non-ion. |
| DDSA [20] | - | - | 0.2 | 0.2 | type g |
| Berol 724 [22] | 0.2 | 0.4 | 0.4 | 0.4 | type a |
| Gafac RE 410 [23] | - | - | 0.2 | 0.2 | type a |
| *Hostapur SAS 60[28] | - | - | - | 0.1 | type b |
| Sulfosoft [26] | - | - | 0.2 | 0.2 | type b |
| *Acrylon A 11 [27] | 0.3 | 0.3 | 0.3 | 0.3 | type h |
| Monoethanol amine | - | 0.1 | 0.1 | 0.1 | |
| Acid stabilizer: | | | | | |
| Salicylic acid | 1 | 1 | 1 | 1 | |
| Polymeric stabilizer: | | | | | |
| Mowiol 3/83 [29] | 0.3 | 0.3 | 0.3 | 0.3 | |
| Water and filler: | | | | | |
| Water | 31.8 | 31.5 | 20.9 | 20.8 | |
| Attagel 40 [11] | 1.5 | 1.5 | 1.5 | 1.5 | |

*Delivered as an aqueous solution but is indicated on the basis of the solids content.

Table 9 (continued)

| Raw material component | 9a | 9b | 9c | 9d |
|---|---|---|---|---|
| | Composition in % | | | |
| Summed recipe | | | | |
| Active content, 97% | 17 | 17 | 17 | 17 |
| Oil | 45.8 | 45.8 | 45.8 | 45.8 |
| Emulsifier comp. | 2.6 | 2.9 | 3.5 | 3.6 |
| Acid stabilizer | 1 | 1 | 1 | 1 |
| Polymeric stabilizer | 0.3 | 0.3 | 0.3 | 0.3 |
| Water and filler | 33.3 | 33.0 | 32.4 | 32.3 |
| pH-setting (1:10) with MEA/HCl to | 3.9 | 3.9 | 3.8 | 3.8 |
| Stirring with magnet in 1% dilution | | | | |
| Deionized water: | 1h: deposit | 3h:neat 6h:greasy | 6h:neat | 6h:neat |
| Tap-water: | 1h: deposit | 6h:neat | 6h:neat | 6h:neat |
| Stirring with magnet in 1% dilution + 1% Fusilade. | | | | |
| Deionized water: | 1h:small deposit | 2h:small deposit | 4h:neat 5h: deposit | 6h:neat |
| Tap water: | 1h: deposit | 2h: deposit | 5h:neat | 6h:neat |

**Example 10**

The examples in this series of experiments illustrate the influence exerted by a selected, anionic emulsifier on the emusifying stability.

A pre-concentrate corresponding to composition 7, Table 7, was used as the basis of the recipes. 80 parts by weight of water in which a little anionic detergent was dissolved was added to 920 parts by weight of this composition, so that the compositions in total were constituted by 1000 parts by weight. As the detailed composition by and large appears from Table 7, the illustrated composition 10 in Table 10 is a partially summed recipe, in which only the emulsifier composition is specified.

Conclusion: The anionic emulsifier type h exerts in the illustrated composition a clear effect on the emulsifying stability in tank mixture with Fusilade.

Table 10

| | 10a | 10b | |
|---|---|---|---|
| Raw material component | Composition in % | | Emulsifier type |
| PMP, techn. 97% | 17.0 | 17.0 | |
| Oil | 45.8 | 45.8 | |
| Emulsifier component: | | | |
| Berol 02 [15)] | 1.5 | 1.5 | Non-ion. |
| Berol 922 [17)] | 0.6 | 0.6 | Non-ion. |
| Berol 724 [22)] | 0.4 | 0.4 | type a |
| Gafac RE 410 [23)] | 0.2 | 0.2 | type a |
| * Hostapur SAS 60 [28)] | 0.1 | 0.1 | type c |
| Sulfosoft [26)] | 0.2 | 0.2 | type b |
| * Acrylon A 11 [27)] | 0.3 | 0.3 | type h |
| Dapral GE 202 [39)] | | 1.0 | type h |
| Monoethanol amine | 0.1 | 0.1 | |
| Acid stabilizer | 1 | 1 | |
| Water and filler | 32.8 | 31.8 | |
| pH adjusted (1:10) | | | |
| with HCl/MEA to | 3.9 | 3.9 | |
| Stirring with magnet in 1% dilution. | | | |
| Deionized water: | 3h:neat | 3h:neat | |
| Tap water: | 3h:neat | 3h:neat | |
| Stirring with magnet in 1% dilution +1% Fusilade. | | | |
| Deionized water: | ½h:deposit | 3h:neat | |
| Tap water: | ½h:deposit | 3h:neat | |

* Delivered as an aqueous solution, but is indicated on the basis of solids content.

## Example 11

This series of experiments shows examples of optimized recipes with different oil compositions and a somewhat different emulsifier composition.

The preparing procedure was the same as that described for Composition 3b in Example 3.

Conclusion: All the compositions 11a to 11d present a high emulsifying stability, both in dilutions alone and in admixture with Fusilade.

Table 11

| Raw material comp. | 11a | 11b | 11c | 11d | Emulsifier |
|---|---|---|---|---|---|
| | Composition in % | | | | |
| Active component: | | | | | |
| PMP, techn., 97% | 17 | 17 | 17 | 17 | |
| Oil: | | | | | |
| Gravex 921 [12] (*) | 8 | 8 | 8 | 8 | |
| Radia 7131 [14] (*) | 32 | 24 | 32 | 32 | |
| Radia 7204 [41] (*) | | 12 | | | |
| Isonanoic acid | | | 4.2 | 4.2 | |
| Oleic acid | 1.5 | 1.8 | 1.6 | 1.6 | |
| Radiacid 0198 [42] | 1.7 | | | | |
| Emulsifier component: | | | | | |
| Berol 02 [15] | 1.5 | 1.5 | 1.5 | 1.5 | Non-ion. |
| Berol 922 [17] | 0.6 | 0.6 | 0.6 | 0.6 | Non-ion. |
| DDSA [20] | 0.4 | 0.3 | | | type g |
| Berol 724 [22] | 0.4 | 0.4 | 0.4 | 0.4 | type a |
| Gafac RE 410 [23] | 0.3 | 0.3 | 0.1 | 0.2 | type a |
| + Hostapur SAS 60 [28] | | | | 0.2 | type b |
| Sulfosoft [26] | 0.2 | 0.2 | 0.2 | 0.2 | tybe b |
| + Acrylon A 11 [27] | | | | 0.2 | type h |
| Monoethanolamin | 0.2 | 0.2 | 0.1 | 0.1 | |
| Acid stabilizer: | | | | | |
| Salicylic acid | 1 | 1 | 1 | | |
| Benzoic aid | | | | 1 | |
| Polymeric stabilizer: | | | | | |
| Mowiol 3/83 [29] | 0.3 | 0.3 | 0.6 | 0.6 | |
| Water and filler: | | | | | |
| Water | 33.4 | 30.9 | 31.2 | 30.7 | |
| Attagel 40 | 1.5 | 1.5 | 1.5 | 1.5 | |

+ Delivered as an aqueous solution but is indicated on the basis of the solids content.

| | 11a | 11b | 11c | 11d |
|---|---|---|---|---|
| Summed recipe: | | | | |
| Active content, 97% | 17 | 17 | 17 | 17 |
| Oil | 43.2 | 45.8 | 45.8 | 45.8 |
| Emulsifier component | 3.6 | 3.5 | 2.9 | 3.4 |
| Acid stabilizer | 1 | 1 | 1 | 1 |
| Polymeric stabilizer | 0.3 | 0.3 | 0.6 | 0.6 |
| Water and filler | 34.9 | 32.4 | 32.7 | 32.2 |
| pH-adjusted (1:10) with HCl/MEA to | 3.7 | 3.8 | 4.1 | 3.9 |
| Stirring with magnet in 1% dilution | | | | |
| Deionized water: | 4h:neat | 4h:neat | 4h:neat | 4h:neat |
| Tap water: | 4h:neat | 4h:neat | 4h:neat | 4h:neat |
| Stirring with magnet in 1% dilution +1% Fusilade. | | | | |
| Deionized water: | 4h:neat | 4h:neat | 4h:neat | 4h:neat |
| Tap water: | 4h:neat | 4h:neat | 4h:neat | 4h:neat |

**Example 12**

This series of experiments show examples of optimized recipes containing both PMP and ethofumesate.

The preparing procedure was similar to that described for composition 3b in example 3. The ethofumesate was ground separately as an aqueous dispersion containing 515 g techn. ethofumesate, 10 g Berol 02 and 475 g water. The grinding was effected on a 0.6 l Dynomill with a circumferential velocity of appr. 10 m/sec. This pre-mixture was an ingredient of the final composition in the same manner as the aqueous pre-mixed PMP suspension.

Conclusion: The compositions 12a and 12b are well suited for tank mixing with Fusilade.

Table 12

| Raw material component | Composition in % 12a | 12b | Emulsifier type |
|---|---|---|---|
| Active component: | | | |
| PMP, techn., 97% | 10.5 | 10.5 | |
| Ethofumesate, techn., 97% | 10.5 | 10.5 | |
| Oil: | | | |
| Gravex 921 [12] (*) | 21 | 22 | |
| Radia 7131 [14] (*) | 21 | 12 | |
| Radia 7204 [41] (*) | | 10 | |
| Isononanoic acid | 4 | | |
| Oleic acid | 1.4 | 1 | |
| Emulsifier component: | | | |
| Berol 02 [15] | 1.7 | 1.6 | Non-ion. |
| Berol 922 [17] | 0.5 | 0.5 | Non-ion. |
| Berol 26 [6] | 0.1 | 0.1 | Non-ion. |
| Berol 192 [40] | 0.2 | 0.2 | Non-ion. |
| Emulsogen El [18] | 0.1 | 0.1 | Non-ion. |
| DDSA [20] | 0.1 | 0.1 | type g |
| Berol 724 [22] | 0.3 | 0.3 | type a |
| Gafac RE 410 [23] | 0.2 | 0.2 | type a |
| Sulfosoft [26] | 0.2 | 0.2 | type b |
| + Acrylon A11 [27] | | 0.2 | type h |
| Monoethanol amine | 0.1 | 0.1 | |
| Acid stabilizer: | | | |
| Salicylic acid | 1 | 1 | |
| Polymeric stabilizer: | 0.3 | 0.3 | |
| Mowiol 3/83 [29] | | | |
| Water and filler: | | | |
| Water | 25.8 | 29.1 | |
| Attagel 40 [11] | 1.0 | | |

+ Delivered as an aqueous solution but indicated on the basis of the solids content.

Table 12 (continued)

| | 12a | 12b |
|---|---|---|
| Summed recipe: | | |
| Active content, 97% | 21 | 21 |
| Oil | 47.4 | 45 |
| Emulsifier comp. | 3.5 | 3.6 |
| Acid stabilizer | 1 | 1 |
| Polymeric stabilizer | 0.3 | 0.3 |
| Water and filler | 26.8 | 29.1 |
| pH adjusted (1:10) with HCl/MEA to | 4.0 | 4.0 |
| Stirring with magnet in 1% dilution. | | |
| Deionized water: | 4h: neat | 4h: neat |
| Tap water: | 4h: neat | 4h: neat |
| Stirring with magnet in 1% dilution + 1% Fusilade. | | |
| Deionized water: | 4h: neat | 4h: neat |
| Tap water: | 4h: neat | 4h: neat |

## Example 13

This series of experiments show examples of optimized recipes with different anionic emulsifier compositions.

The compositions 13a, 13b and 13c were prepared by grinding at first 50% aqueous dispersion of PMP in water. The aqueous PMP-slurry further contained 1,25% Berol 02, 0.625% Berol 922 and 0.625% Berol 724. After mixing to samples 13a to 13c it corresponds to 4 g/l, 2 g/l, 2 g/l, respectively. Grinding was carried out three times on a 0.6 l Dyno-mill at a circumferential velocity of appr. 10 m/sec. and at a dozing velocity of appr. 3 l/h, or till at least 90% of the particle had a grain size not exceeding 4 μ.

The methocel was prepared as a 5% pre-concentrate in water.

The remaining amount of water was used for diluting the aqueous PMP slurry. An optional content of Acylon A11 and DDSA was subsequently added separately while stirring, the DDSA having at first been reacted with monoethanol amine and water as stated under Example 2. The methocel pre-concentrate was admixed therein. The residual emulsifier amount, exclusive from the monoethanol amine, was admixed to a pre-concentrate and then diluted in the aqueous PMP slurry. Under thorough agitation the Attagel was slurried into the PMP-slurry to form a homogeneous paste. The monoethanol amine was then added.

The oil components plus salicylic acid and benzoic acid were dissolved to obtain an oily pre-concentrate and while stirring the the aqueous paste slurry was added. Finally the pH value was set by a supplementary addition of monoethanol amine.

Conclusion: All the compositions 13a to 13c present a great emulsifying stability, both in dilutions alone and in admixture with Fusilade.

Table 13

| Raw material comp. | 13a | 13b | 13c | Emulsifier type |
|---|---|---|---|---|
| | Composition in % | | | |
| Active component: | | | | |
| PMP, techn., 97% | 17 | 17 | 17 | |
| Oil: | | | | |
| Gravex 921 [12] (*) | 8 | 8 | 8 | |
| Radia 7131 [14] (*) | 23 | 23 | 23 | |
| Radia 7204 [41] (*) | 11 | 11 | 11 | |
| Oleic acid | 1.4 | 1.4 | 1.4 | |
| Emulsifier component: | | | | |
| Berol 02 [15] | 1.7 | 1.7 | 1.7 | Non-ion. |
| Berol 922 [17] | 0.6 | 0.6 | 0.6 | Non-ion. |
| Berol 724 [22] | 0.4 | 0.4 | 0.4 | type a |
| Gafac RE 410 [23] | | | 0.2 | type a |
| Soprophor FL [44] | 0.5 | | | type a |
| + Alkasurf SS-LA-3 [45] | | 0.2 | | type c |
| Agrilan F 524 [49] | | | 0.4 | type f |
| Sulfosoft [26] | | | | type b |
| Monoethanol amine | 0.1 | 0.1 | 0.1 | |
| Acid stabilizer: | | | | |
| Salicylic acid | 0.4 | 0.4 | 0.4 | |
| Benzoic acid | 0.6 | 0.6 | 0.6 | |
| Polymeric stabilizer: | | | | |
| Methocel A15 LV [36] | 0.25 | 0.25 | 0.25 | |
| Water and filler: | | | | |
| Water | 34.05 | 34.35 | 33.95 | |
| Attagel 40 [11] | 1 | 1 | 1 | |

+ Delivered as an aqueous solution but indicated on the basis of the solids content.

Table 13 (continued)

| | 13a | 13b | 13c |
|---|---|---|---|
| Summed recipe: | | | |
| Active content, 97% | 17 | 17 | 17 |
| Oil | 43.4 | 43.4 | 43.4 |
| Emulsifier comp. | 3.3 | 3.0 | 3.4 |
| Acid stabilizer | 1 | 1 | 1 |
| Polymeric stabilizer | 0.25 | 0.25 | 0.25 |
| Water and filler | 35.05 | 35.35 | 34.95 |
| pH adjusted (1:10) with HCl/MEA | 3.9 | 3.9 | 3.9 |
| Stirring with magnet in 1% dilution. | | | |
| Deionized water: | 3h:neat | 3h:neat | 3h:neat |
| Tap water: | 3h:neat | 3h:neat | 3h:neat |
| Stirring with magnet in 1% dilution + 1% Fusilade. | | | |
| Deionized water: | 3h:neat | 3h:neat | 3h:neat |
| Tap water: | 3h:neat | 3h:neat | 3h:neat |

**Example 14**

This series of experiments shows examples of optimized recipes with different anionic emulsifier compositions.

The compositions 14a to 14f have been prepared in a similar manner as the compositions from Example 13. However, the amount of Berol 02 which has not be used for the grinding of the PMP, has been added to the oily mixture which was admixed in the water slurry while in Example 13 it was together with the remaining emulsifier components dissolved directly in the water phase.

Conclusion: Al the compositions 14a to 14f present a high emulsifying stability, in dilutions alone as well as in admixture with Fusilade.

Table 14

| Raw material comp. | 14a | 14b | 14c | Emulsifier type |
|---|---|---|---|---|
| | Composition in % | | | |
| Active component: | | | | |
| PMP, techn., 97% | 17 | 17 | 17 | |
| Oil: | | | | |
| Gravex 921 12)(*) | 8 | 8 | 8 | |
| Radia 7131 14)(*) | 23 | 23 | 23 | |
| Radia 7204 41)(*) | 11 | 11 | 11 | |
| Oleic acid | 1.4 | 1.4 | 1.4 | |
| Emulsifier component: | | | | |
| Berol 02 15) | 1.7 | 1.7 | 1.7 | Non-ion |
| Berol 922 17) | 0.6 | 0.6 | 0.6 | Non-ion |
| Berol 724 22) | 0.4 | 0.4 | 0.4 | type a |
| Gafac RE 410 23) | | 0.2 | 0.2 | type a |
| Aerosol OT 63) | 0.5 | | | type c |
| Empicol ESC 70 47) | | 0.35 | | type d |
| Agrilan WP 145 48) | | | 0.4 | type e |
| Monoethanol amine | 0.1 | 0.1 | 0.1 | |
| Acid stabilizer: | | | | |
| Salicylic acid | 0.4 | 0.4 | 0.4 | |
| Benzoic acid | 0.6 | 0.6 | 0.6 | |
| Polymeric stabilizer: | | | | |
| Methocel A15 LV 36) | 0.25 | 0.25 | 0.25 | |
| Water and filler: | | | | |
| Water | 34.05 | 34.0 | 33.95 | |
| Attagel 40 11) | 1 | 1 | 1 | |

Table 14 (continued)

| | 14a | 14b | 14c |
|---|---|---|---|
| **Summed recipe:** | | | |
| Active content, 97% | 17 | 17 | 17 |
| Oil | 43.4 | 43.4 | 43.4 |
| Emulsifier comp. | 3.3 | 3.35 | 3.4 |
| Acid stabilizer | 1 | 1 | 1 |
| Polymeric stabilizer | 0.25 | 0.25 | 0.25 |
| Water and filler | 35.05 | 35.00 | 34.95 |
| pH adjusted (1:10) with HCl/MEA | 3.9 | 3.9 | 3.9 |
| Stirring with magnet in 1% dilution | | | |
| Deionized water: | 3h:neat | 3h:neat | 3h:neat |
| Tap water: | 3h:neat | 3h:neat | 3h:neat |
| Stirring with magnet in 1% dilution + 1% Fusilade. | | | |
| Deionized water: | 3h:neat | 3h:neat | 3h:neat |
| Tap water: | 3h:neat | 3h:neat | 3h:neat |

Table 14 (2)

| Raw material comp. | 14d | 14e | 14f | Emulsifier type |
|---|---|---|---|---|
| | Composition in % | | | |
| Active component: | | | | |
| PMP, techn., 97% | 17 | 17 | 17 | |
| Oil: | | | | |
| Gravex 921 [12)] (*) | 8 | 8 | 8 | |
| Radia 7131 [14)] (*) | 23 | 23 | 23 | |
| Radia 7204 [41)] (*) | 11 | 11 | 11 | |
| Oleic acid | 1.4 | 1.4 | 1.4 | |
| Emulsifier component: | | | | |
| Berol 02 [15)] | 1.7 | 1.7 | 1.7 | Non-ion |
| Berol 922 [17)] | 0.6 | 0.6 | 0.6 | Non-ion |
| Berol 724 [22)] | 0.4 | 0.4 | 0.4 | type a |
| Gafac RE 410 [23)] | 0.2 | 0.2 | 0.2 | type a |
| Sulfosoft [26)] | | | | type b |
| Petronate HH [50)] | 0.5 | | | type b |
| Berol 987 [51)] | | | 0.3 | type d |
| Lankro ECD 1604 [52)] | | 0.4 | | type d |
| Monoethanol amine | 0.1 | 0.1 | 0.1 | |
| Acid stabilizer: | | | | |
| Salicylic acid | 0.4 | 0.4 | 0.4 | |
| Benzoic acid | 0.6 | 0.6 | 0.6 | |
| Polymeric stabilizer: | | | | |
| Methocel A15 LV [36)] | 0.25 | 0.25 | 0.25 | |
| Water and filler: | | | | |
| Water | 33.85 | 33.95 | 34.05 | |
| Attagel 40 [11)] | 1 | 1 | 1 | |

Table 14 (2) (continued)

| | 14d | 14e | 14f |
|---|---|---|---|
| **Summed recipe:** | | | |
| Active content, 97% | 17 | 17 | 17 |
| Oil | 43.4 | 43.4 | 43.4 |
| Emulsifier comp. | 3.5 | 3.4 | 3.3 |
| Acid stabilizer | 1 | 1 | 1 |
| Polymeric stabilizer | 0.25 | 0.25 | 0.25 |
| Water and filler | 34.85 | 34.95 | 35.05 |
| pH adjusted (1:10) with HCl/MEA | 3.9 | 3.9 | 3.9 |
| Stirring with magnet in 1% dilution. | | | |
| Deionized water: | 3h:neat | 3h:neat | 3h:neat |
| Tap water: | 3h:neat | 3h:neat | 3h:neat |
| Stirring with magnet in 1% dilution + 1% Fusilade. | | | |
| Deionized water: | 3h:neat | 3h:neat | 3h:neat |
| Tap water: | 3h:neat | 3h:neat | 3h:neat |

## Example 15

This series of experiments show examples of optimized recipes with different compositions of oils. Moreover, the exemplified compositions have been subjected to storage stability testings and control of the emulsifying stability while stirring with other available beet herbicides which by experience are difficult to mix in tank with PMP-preparations.

The compositions 15a to 15h have been prepared by grinding at first a 50% aqueous dispersion of PMP in water, in the same manner as stated under Example 13. 0.15% of xanthane rubber was, however, further added to the aqueous PMP slurry in order to prevent sedimentation during grinding, corresponding to about 0.05% in the final product. After the grinding supplementary amount of 0.1% xanthane rubber was added in example 15b and after dilution with water in order to thicken the product and thereby preventing separation during storage.

Testing: The emulsifying stability was tested under thorough agitation in a 150 ml beaker containing 100 ml water which was either deionized (designated by a D) or was municipal 20 to 25°dH hard tap water (designated by a H). The reason of this testing is that suspended particles together with emulsified oil in diluted, aqueous solutions have a tendency to precipitate greasy deposits due to the affinity between oil and slurried solids (in this respect see further Example 6 and the patent specification).

1% by vol. of the PMP preparation was used in all the experiments re the emulsifying stability. In the tank mixing experiments 1 and ½% by vol., respectively, of the mixture preparation were used. Apart from the mixture with Goltix WG the PMP-product was emulsified at first in the water. After 1 to 2 minutes the mixture preparation was added undiluted while stirring.

The samples were inspected after 1, 2 and 3 hours. In the cases where precipitations occurred (including the formation of light-dispersable fine-grained granules) the time has only been marked in the very few situations where the precipitations were observed within 3 hours, in the remaining cases it is implicit that the precipitation was observed after 3 hours (3 h).

The particle size may be measured electronically by laser light but the measuring must then be effected prior to adding the oil, the measuring instrument being not able to distinguish satisfactorily between oil drops and herbicidal particles. After the addition of oil the determination of the particle size is effected by microexamination and the observations were compared to previous observations, in which an electronical measuring of the particle size had been effected beforehand.

Storage: The Cipac metod 46.1.3 (Emulsifiable Concentrates, Cipac Handbook I, p. 952) is used for the storing test.

The storage temperature was at 54°C ± 2°C. Two sets of measurings have been carried out. The first set has been evaluated after a fortnight as the method prescribes. The second set has been evaluated after 28 days corresponding to the double loading.

Conclusion: The chemical stability is satisfactory for all samples.

For all the sample the tendency to crystal growth is very small and decicively lower compared to the observations of Betanal+. (see e.g. experiment 5).

The tank mixing testings present by and large fine results. In most cases there has not occured any form of precipitations. In the few cases of precipitations, these precipitations have consisted in very fine-grained, voluminous particles in which the quantity of precipitation has been very small (designated small light-dispersable granules).

Said observations could be described as slight imperfections which do not involve practical problems. The products show in relation to comparable, marketed products decisive advantages as regards tank mixing, which for beet herbicides must be held to constitute a very important parameter.

Biological effect:

The Examples 15a to 15h have been tested biologically with Betanal as reference. Two treatment by spraying were practised with an interval of appr. 10 days. There was a dosage of 480 g/l PMP in each spraying. For all samples the effect in relation to Betanal were in the interval: satisfactory to extremely satisfactory.

Table 15

| Raw material comp. | 15a | 15b | 15c | Emulsifier type |
|---|---|---|---|---|
| | Composition in % | | | |
| Active component: | | | | |
| PMP, techn., 97% | 17 | 16.5 | 12.7 | |
| Oil: | | | | |
| Gravex 921 [12] (*) | 8 | 5.3 | 8 | |
| Radia 7131 [14] (*) | 23 | 15.3 | 23 | |
| Radia 7204 [41] (*) | 11 | 7.3 | 11 | |
| Oleic acid | 1.4 | 1.0 | 1.4 | |
| Emulsifier component: | | | | |
| Berol 02 [15] | 1.7 | 1.7 | 1.7 | Non-ion. |
| Berol 922 [17] | 0.6 | 0.6 | 0.6 | Non-ion. |
| DDSA [20] | 0.3 | 0.3 | 0.3 | type g |
| Berol 724 [22] | 0.4 | 0.4 | 0.4 | type a |
| Gafac RE 410 [23] | 0.3 | 0.2 | 0.2 | type a |
| Sulfosoft [26] | 0.2 | 0.2 | 0.2 | type b |
| Monoethanol amine | 0.2 | 0.2 | 0.2 | |
| Acid stabilizer | | | | |
| Salicylic acid | 0.6 | 0.6 | 0.6 | |
| Benzoic acid | 0.4 | 0.4 | 0.4 | |
| Polymeric stabilizer | | | | |
| Mowiol 10/74 | 0.1 | 0.1 | 0.1 | |
| Methocel A15 LV | 0.15 | 0.15 | 0.15 | |
| Water + adjuvant: | | | | |
| Water | 33.6 | 48.6 | 38.01 | |
| Attagel 40 | 1 | 1 | 1 | |
| Xanthane rubber | 0.05 | 0.15 | 0.04 | |

Table 15(1) (continued)

| | | 15a | 15b | 15c |
|---|---|---|---|---|
| **Summed recipe:** | | | | |
| Active content, 97% | | 17 | 16.5 | 12.7 |
| Oil | | 43.4 | 28.9 | 43.4 |
| Emulsifier comp. | | 3.7 | 3.6 | 3.6 |
| Acid stabilizer | | 1 | 1 | 1 |
| Polymeric stabilizer | | 0.25 | 0.25 | 0.25 |
| Water + adjuvant | | 34.65 | 49.75 | 39.05 |
| pH adjusted (1:10) with HCl/MEA to | | 3.9 | 3.9 | 3.9 |
| Density | | 0.98 | 1.00 | 0.975 |
| Viscosity (Brookfield) at 22°C | | 900 cP | 650 cP | 1000 cP |

| Specifications: | | Example 15a | | |
|---|---|---|---|---|
| | | Start | 14 days | 28 days |
| Active content PMP | | 16.1% | 16.1% | 16.1% |
| Particle size | | ≤5μ | ≤5μ | appr.5μ |
| Emulsion | D | neat | neat | neat |
| stability by 1% | H | neat | neat | neat |
| +1% Fusilade | D | neat | neat | neat |
| | H | neat | neat | neat |
| +1% Nortron | D | small light disp.gran. | 2h:small light disp.gran. | 2h: small light disp.gran. |
| | H | neat | neat | small light disp.granul. |
| +1% Goltix WG | D | neat | neat | neat |
| | H | neat | neat | neat |
| +½% Avadex BW | D | neat | neat | neat |
| | H | neat | neat | neat |

Table 15(1) (continued)

| Specifications | | Example 15b start | 14 days | 28 days |
|---|---|---|---|---|
| Active content PMP | | 16.1% | 16.1% | 16.0% |
| Particle size | | ≤5 µ | ≤5µ | appr. 5µ |
| Emulsion | D | neat | neat | neat |
| stability by 1% | H | neat | neat | neat |
| +1% Fusilade | D | neat | neat | neat |
| | H | neat | neat | neat |
| +1% Nortron | D | small light disp.gran. | neat | 2h:small light disp.gran. |
| | H | neat | neat | neat |
| +1% Goltix WG | D | neat | neat | neat |
| | H | neat | neat | neat |
| +1% Avadex BW | D | neat | neat | neat |
| | H | small light disp.gran. | neat | neat |

| Specifications: | | Example 15c start | 14 dage | 28 dage |
|---|---|---|---|---|
| Active content PMP | | 12.3% | 12.3% | 12.3% |
| Particle size | | ≤5 µ | ≤5µ | appr. 5µ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | neat | neat |
| | H | neat | neat | neat |
| +1% Goltix WG | D | neat | neat | neat |
| | H | neat | neat | neat |
| +1% Avadex BW | D | neat | neat | neat |
| | H | neat | neat | neat |

Table 15(2)

| Raw material comp. | 15d | 15e | 15f | Emulsifier type |
|---|---|---|---|---|
| | Composition in % | | | |
| Active component: | | | | |
| PMP, techn., 97% | 17 | 17 | 17 | |
| Oil: | | | | |
| Gravex 921 [12] (*) | 8 | 8 | 8 | |
| Radia 7131 [14] (*) | 31 | 32 | | |
| Reomol DDS [53] (*) | | | 35 | |
| Isononanoic acid | 4.2 | | | |
| O leic acid | 1.6 | 1.5 | 0.5 | |
| Radiacid 0198 [42] | | 1.3 | | |
| Emulsifier component: | | | | |
| Berol 02 [15] | 1.7 | 1.6 | 1.7 | Non-ion. |
| Berol 922 [17] | 0.6 | 0.6 | 0.6 | Non-ion. |
| DDSA [20] | | 0.2 | 0.1 | type g |
| Berol 724 [22] | 0.4 | 0.4 | 0.4 | type a |
| Gafac RE 410 [23] | 0.2 | 0.3 | 0.2 | type a |
| + Hostapur SAS 60 [28] | | 0.1 | | type b |
| Sulfosoft [26] | 0.2 | 0.2 | 0.2 | type b |
| + Acrylon A 11 [27] | 0.3 | | 0.3 | type h |
| Monoethanol amine | 0.2 | 0.2 | 0.2 | |
| Acid stabilizer: | | | | |
| Salicylic acid | | 0.5 | 0.5 | |
| Benzoic acid | 1 | 0.5 | 0.5 | |
| Polymeric stabilizer: | | | | |
| Mowiol 10/74 | 0.1 | 0.1 | 0.1 | |
| Methocel A15 LV | 0.15 | 0.15 | 0.15 | |
| Water + adjuvant: | | | | |
| Water | 32.3 | 34.3 | 33.5 | |
| Attagel | 1 | 1 | 1 | |
| Xanthane rubber | 0.05 | 0.05 | 0.05 | |

+ Delivered as an aqueous solution but indicated on the basis of the solids content.

Table 15(2) (continued)

| | 15d | 15e | 15f |
|---|---|---|---|
| **Summed recipe:** | | | |
| Active content, 97% | 17 | 17 | 17 |
| Oil | 44.8 | 42.8 | 43.5 |
| Emulsifier component | 3.6 | 3.6 | 3.7 |
| Acid stabilizer | 1 | 1 | 1 |
| Polymeric stabilizer | 0.25 | 0.25 | 0.25 |
| Water + adjuvant | 33.35 | 33.35 | 34.55 |
| pH adjusted (1:10) with HCl/MEA to | 3.9 | 3.9 | 3.9 |
| Density | 0.98 | 0.98 | 0.995 |
| Viscosity (Brookfield) at 22°C | 800 cP | 800 cP | 1000 cP |

| Specifications: | | Example 15d Start | 14 days | 28 days |
|---|---|---|---|---|
| Active content | PMP | 16.2% | 16.1% | 16.1% |
| Particle size | | ≤5µ | ≤5µ | appr. 5µ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | neat | neat |
| | H | neat | neat | neat |
| +1% Goltix WG | D | neat | neat | neat |
| | H | neat | neat | neat |
| +½% Avadex BW | D | neat | neat | neat |
| | H | neat | neat | neat |

Example 15(2) (continued)

| Specifications: | | Example 15e Start | 14 days | 28 days |
|---|---|---|---|---|
| Active content PMP | | 16.4% | 16.3% | 16.3% |
| Particle size | | ≲5μ | ≲5μ | appr. 5μ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | neat | 2h:small light disp. gran. |
| | H | neat | neat | neat |
| +1% Goltix WG | D | neat | neat | neat |
| | H | neat | neat | neat |
| +½% Avadex BW | D | neat | neat | neat |
| | H | neat | neat | neat |

| Specifications: | | Example 15f Start | 14 days | 28 days |
|---|---|---|---|---|
| Active content PMP | | 16.3% | 16.2% | 16.3% |
| Particle size | | ≲5μ | ≲5μ | appr. 5μ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | neat | neat |
| | H | neat | neat | neat |
| +1% Goltix WG | D | neat | neat | neat |
| | H | neat | neat | neat |
| +½% Avadex BW | D | neat | neat | neat |
| | H | neat | neat | neat |

## Table 15(3)

| Raw material comp. | 15g Composition in % | 15h Composition in % | Emulsifier type |
|---|---|---|---|
| Active component: | | | |
| PMP, techn., 97% | 17 | 16.2 | |
| Oil: | | | |
| Gravex 921 [12] (*) | 8 | | |
| Radia 7040 [55] (*) | 24 | | |
| Radia 7204 [41] (*) | 10 | | |
| Ester oil 911014 [54] | | 26 | |
| Oleic acid | 1.4 | 0.6 | |
| Emulsifier component: | | | |
| Berol 02 [15] | 1.55 | 0.4 | Non-ion. |
| Berol 922 [17] | 0.6 | 3.2 | Non-ion. |
| Berol 26 [6] | 0.15 | | Non-ion. |
| Berol 09 [56] | | 1.0 | Non-ion. |
| Berol 535 [57] | | 0.8 | Non-ion. |
| Berol 537 [58] | | 1.6 | Non-ion. |
| Berol 196 [59] | | 0.4 | Non-ion. |
| DDSA [20] | 0.3 | | type g |
| Berol 724 [22] | 0.4 | 1.2 | type a |
| Gafac RE 410 [23] | 0.3 | | type a |
| Phospholan PDB3 [60] | | 1.0 | type a |
| Sulfosoft [26] | 0.2 | | type b |
| Monoethanol amine | 0.2 | 0.2 | |
| Acid stabilizer: | | | |
| Salicylic acid | 0.4 | | |
| Benzoic acid | 0.6 | | |
| Polymeric stabilizer: | | | |
| Mowiol 10/74 | 0.1 | 0.15 | |
| Methocel A15 LV | 0.15 | 0.15 | |

Table 15(3) (continued)

| | 15g | 15h |
|---|---|---|
| Water + adjuvant: | | |
| Water | 33.6 | 36.05 |
| Propylene glycol | | 8.0 |
| Attagel 40 | 1 | |
| Xanthane rubber | 0.05 | 0.05 |
| Manganchelate solution 6% Mn as $Na_2Mn$-EDTA-salt | | 3 |
| Summed recipe: | | |
| Active content, 97% | 17 | 16.2 |
| Oil | 43.4 | 26.6 |
| Emulsifier comp. | 3.7 | 9.8 |
| Acid stabilizer | 1 | |
| Polymeric stabilizer | 0.25 | 0.3 |
| Water + adjuvant | 34.65 | 47.1 |
| pH adjusted (1:10) with HCl/MEA to | 4.0 | 3.9 |
| Density | 0.99 | 1.03 |
| PMP i g/l | 160 | 161 |
| Viscosity Brookfield at 22°C | 800 cP | 700 cP |

Specifications: Example 15g

| | | Start | 14 days | 28 days |
|---|---|---|---|---|
| Active content PMP | | 16.1% | 16.0% | 16.1% |
| Particle size | | ≤5μ | appr. 5μ | appr. 5μ |
| Emulsion | D | neat | neat | neat |
| stability by 1% | H | neat | neat | neat |
| +1% Fusilade | D | neat | neat | neat |
| | H | neat | neat | neat |

Table 15(3) (continued)

| Specifications: | | Example 15g | | |
|---|---|---|---|---|
| | | Start | 14 days | 28 days |
| +1% Nortron | D | neat | small light disp.gran. | neat |
| | H | neat | small light disp.gran. | small light disp.gran. |
| +1% Goltix WG | D | neat | neat | neat |
| | H | neat | neat | neat |
| +½% Avadex BW | D | neat | neat | neat |
| | G | neat | neat | neat |

| Specifications: | | Example 15h | | |
|---|---|---|---|---|
| | | Start | 14 days | 28 days |
| Active content | PMP | 15.7% | 15.6% | 15.7% |
| Paticle size | | ≲5μ | 5-10μ | 5-10μ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | 2h:small light disp.gran. | neat |
| | H | neat | 2h:small light disp.gran. | neat |
| +1% Goltix WG | D | neat | neat | neat |
| | H | neat | neat | neat |
| +½% Avadex BW | D | neat | 2h:small light disp.gran. | neat |
| | H | small deposit | 2h:small deposit | neat |

**Example 16** [Not of the invention]

This series of experiments is a continuation of Example 15 in which the oil compositions have been varied.

The compositions are, however, prepared in another manner as the water content thereof is small.

The compositions 16a, 16b and 16c have been prepared by mixing at first all the oil components and optionally acid stabilizers to an oily solution. Then, the emulsifier components have been prepared as a pre-mixture and have been mixed with the oily phase. Afterwards the PMP was mixed therein. The polymeric stabilizers have been admixed individually as 5% aqueous solutions. Finally, Attagel and optionally formic acid have separately been added.

The mixture has been ground on a pearl mill through three passes, so that the particle size on an average did not exceed 5µ, which was controlled on evaluation in microscope.

The samples were tested in the same manner as in Example 15.

Conclusion: the PMP stability and the tank mixing properties are held to be satisfactory. Moreover, the tendency to crystal growth is slight.

Biological effect: The Examples 16a, 16b and 16c have been biologically tested with Betanal as reference. Two treatments by spraying were practised with an internal of approximately 10 days. A dosage of 400 g/l PMP was used for each spraying. For all samples the effect in relation to Betanal in the interval was extremely satisfactory.

Table 16

| Raw material comp. | 16a | 16b | 16c | Emulsifier type |
|---|---|---|---|---|
| | Composition in % | | | |
| Active component: | | | | |
| PMP, techn., 97% | 17 | 17 | 17 | |
| Oil: | | | | |
| Gravex 921 [12] (*) | 60 | 55 | 29.2 | |
| Radia 7131 [14] (*) | 5 | 10 | 29.15 | |
| Isononanoic acid | | | 7 | |
| Oleic acid | 1.8 | 1.8 | 1.8 | |
| Radiacid 0198 [42] | 1.5 | 1.5 | | |
| Emulsifier component: | | | | |
| Berol 02 [15] | 2 | 2 | 2 | Non-ion. |
| Berol 922 [17] | 0.4 | 0.4 | 0.3 | Non-ion. |
| Berol 26 [6] | | | 0.1 | Non-ion. |
| Synperonic NX [16] | 0.4 | 0.4 | | Non-ion. |
| Atlox 1285 [19] | 0.2 | 0.2 | | Non-ion. |
| Emulsogen EL [18] | | | 0.1 | Non-ion. |
| DDSA [20] | 0.4 | 0.4 | 0.2 | type g |
| Berol 724 [22] | 0.6 | 0.6 | 0.6 | type a |
| Gafac RE 410 [23] | 0.1 | 0.1 | 0.3 | type a |
| + Hostapur SAS 60 [28] | 0.1 | 0.1 | | type b |
| Sulfosoft [26] | 0.2 | 0.2 | 0.35 | type b |
| Morwet EFW [21] | 0.2 | 0.2 | | type e |
| + Acrylon A 11 [27] | 0.5 | 0.5 | 0.4 | type h |
| Monoethanol amine | 0.2 | 0.2 | 0.2 | |
| Acid stabilizer: | | | | |
| Salicylic acid | | | 0.5 | |
| Benzoic acid | | | 0.5 | |
| Polymeric stabilizer: | | | | |
| Mowiol 10/74 | 0.15 | 0.15 | 0.2 | |
| Methocel A15 LV | 0.15 | 0.15 | 0.2 | |

+ Delivered as an aqueous solution but indicated on the basis of solids content.

Table 16 (continued)

| | 16a | 16b | 16c |
|---|---|---|---|
| Water + adjuvant: | | | |
| Water | 7.1 | 7.1 | 8.4 |
| Attagel 40 | 1.5 | 1.5 | 1.5 |
| Formic acid, 85% | 0.5 | 0,5 | |
| Summed recipe: | | | |
| Active content, 97% | 17 | 17 | 17 |
| Oil | 68.3 | 68.3 | 67.15 |
| Emulsifier comp. | 5.3 | 5.3 | 4.55 |
| Acid stabilizer | | | 1 |
| Polymeric stabilizer | 0.3 | 0.3 | 0.4 |
| Water + adjuvant | 9.1 | 9.1 | 9.9 |
| pH adjusted (1:10) with HCl/MEA to | 3.9 | 3.9 | 3.9 |
| Density | 0.975 | 0.975 | 0.97 |
| Viscosity (Brookfield) at 22°C | 800 cP | 600 cP | 500 cP |

Specifications: Table 16a

| | | Start | 14 days | 28 days |
|---|---|---|---|---|
| Active content PMP | | 16.7% | 16.7% | 16.6% |
| Particle size | | 5-10µ | appr. 10µ | appr. 10µ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | neat | neat |
| | H | neat | neat | neat |
| +1% Goltix | D | neat | neat | neat |
| | H | neat | neat | small deposit |
| +½% Avadex BW | D | neat | neat | neat |
| | H | neat | neat | neat |

Table 16 (continued)

| Specifications: | | Example 16b | | |
|---|---|---|---|---|
| | | start | 14 days | 28 days |
| Active content PMP | | 16.7% | 16.5% | 16.7% |
| Particle size | | 5-10μ | appr. 10μ | appr. 10μ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | neat | neat |
| | H | neat | small light disp.gran. | neat |
| +1% Goltix WG | D | neat | neat | neat |
| | H | neat | neat | neat |
| +½% Avadex BW | D | neat | neat | neat |
| | H | neat | neat | neat |

| Specifications: | | Example 16c | | |
|---|---|---|---|---|
| | | start | 14 days | 28 days |
| Active content PMP | | 16.9% | 16.9% | 16.9% |
| Particle sizxe | | 5-10 μ | appr.10μ | appr. 10μ |
| Emulsion | D | neat | neat | neat |
| stability by 1% | H | neat | neat | neat |
| +1% Fusilade | D | neat | neat | neat |
| | H | neat | neat | neat |
| +1% Nortron | D | neat | small light disp.gran. | neat |
| | H | neat | small light disp.gran. | neat |
| +1% Goltix WG | D | neat | neat | neat |
| | H | neat | neat | neat |
| +½% Avadex BW | D | neat | neat | neat |
| | H | neat | neat | neat |

**Example 17**

This series of experiments show two examples of optimized recipes containing both PMP and Ethofumesate.

The compositions 17a and 17b are prepared by preparing at first 50% dispersions of PMP and Ethofumesate, respectively, in water. The aqueous ethofumesate dispersion contained 51.5% of 97% ethofumesate, 46.8% water, 1% Berol 0.2, 0.5% Berol 724 and 0.2% monoethanol amine. (pH of 5% solution: 7). Grinding was effected on a pearl mill so that the 90% ≦7μ. PMP dispersion was prepared as referenced in Example 15.

The PMP dispersion was diluted by mixing with the remaining amount of water. Then the Ethofumesate dispersion was added and agitation was effected. The remaining mixture was carried out according to the procedure as described under Example 13.

The samples have been tested in the same manner as in Example 15. It is added that Ethofumesate liquefies at rather more than 50°C. Instead of storing at (54 ± 2)°C the samples have therefore been stored double as long as prescribed, and at (45 ± 1)°C.

Conclusion: The stability of PMP and of Ethofumesate is satisfactory. Likewise, the tank mixing properties are evaluated to be satisfactory. The tendency to crystal growth is acceptable.

Biological testing: The products have been tested biologically by 2 dosages à 1.8 l per ha corresponding to a dosage each time of 180 g/ha of PMP as well as of Ethofumesate. Betaron* from Schering containing 100 g/l Ethofumesate and 80 g/l PMP was used as reference, and which was further sprayed two times in a dosage of 2 l per ha corresponding to a dosage each time of 200 g/l Ethofumesate and 160 g/l PMP.

Examples 17a and 17b of these experiments showed a better effect than Betaron which contains solvent.

Table 17

| Raw material comp. | 17a | 17b | Emulsifier type |
|---|---|---|---|
| | Composition in % | | |
| Active component: | | | |
| Ethofumesate, techn., 97% | 10.3 | 10.3 | |
| PMP, techn., 97% | 10.3 | 10.3 | |
| Oil: | | | |
| Gravex 921 [12)] (*) | 20 | 18 | |
| Radia 7131 [14)] (*) | 7 | 14 | |
| Radia 7204 [41)] (*) | 7 | | |
| Isononanoic acid | | 3 | |
| Oleic acid | 0.8 | 1.1 | |
| Emulsifier component: | | | |
| Berol 02 [15)] | 1.65 | 1.75 | Non-ion. |
| Berol 922 [17)] | 0.5 | 0.5 | Non-ion. |
| Emulsogen EL [18)] | 0.2 | 0.1 | Non-ion. |
| Berol 192 [40)] | 0.2 | 0.2 | Non-ion. |
| DDSA [20)] | 0.2 | | type g |
| Berol 724 [22)] | 0.4 | 0.5 | type a |
| Gafac RE 410 [23)] | 0.15 | 0.15 | type a |
| Sulfosoft [26)] | 0.2 | 0.2 | type b |
| Acrylon A 11 [27)] | 0.2 | | type h |
| Monoethanol amine | 0.2 | 0.2 | |
| Acid stabilizer: | | | |
| Salicylic acid | | 0.5 | |
| Benzoic acid | 1 | 0.5 | |
| Polymeric stabilizer: | | | |
| Mowiol 10/74 | 0.15 | 0.15 | |
| Methocel A15 LV | 0.15 | 0.15 | |
| Water + adjuvant: | | | |
| Water | 38.37 | 37.37 | |
| Attagel 40 | 1 | 1 | |
| Xanthane rubber | 0.03 | 0.03 | |

Table 17 (continued)

| | 17a | 17b |
|---|---|---|
| **Summed recipe:** | | |
| Active content, 97% | 20.6 | 20.6 |
| Oil | 34.8 | 36.1 |
| Emulsifier comp. | 3.9 | 3.6 |
| Acid stabilizer | 1 | 1 |
| Polymeric stabilizer | 0.3 | 0.3 |
| Water + adjuvant | 39.4 | 38.4 |
| pH adjusted (1:10) with HCl/MEA til | 3.9 | 3.9 |
| Density | 1.01 | 1.01 |
| Viscosity (Brookfield) at 22°C | 700 cP | 400, cP |

Example 17a

| Specifications: | | Start | 28 days |
|---|---|---|---|
| Active content PMP | | 9.8 | 9.9% |
| Ethofumesate | | 10.3 | 10.3 |
| Particle size | | ≤7µ | 7-15µ |
| Emulsion | D | neat | neat |
| stability by 1% | H | neat | neat |
| +1% Fusilade | D | neat | neat |
| | H | neat | neat |
| +1% Nortron | D | neat | neat |
| | H | neat | neat |
| +1% Goltix WG | D | neat | neat |
| | H | neat | neat |
| +½% Avadex BW | D | neat | neat |
| | H | neat | neat |

Table 17 (continued)

| Specifications | | Example 17b Start | 28 days |
|---|---|---|---|
| Active content PMP | | 9.9 | 9.9 |
| Ethofumesate | | 10.1 | 10.1 |
| Particle size | | ≲7μ | 7-15μ |
| Emulsion | D | neat | neat |
| stability by 1% | H | neat | neat |
| +1% Fusilade | D | neat | neat |
| | H | neat | neat |
| +1% Nortron | D | neat | neat |
| | H | neat | neat |
| +1% Goltix WG | D | neat | neat |
| | H | neat | neat |
| +½% Avadex BW | D | neat | neat |
| | H | neat | neat |

**Example 18** [Not of the invention]

An example of a recipe is shown which both contains PMP and Metamitron and which both alone and in tank mixing with Fusilade has good emulsifiability.

The composition has been prepared analogously with Example 16. All the oil components have at first been mixed to form a clear oil solution. Then the emulsifier components were prepared as a pre-mixture and mixed with the oily phase. Then PMP and Metamitron were added. The polymeric stabilizers have been agitated as an aqueous pre-solution containing both 10% Mowiol 10/74 and 10% Methocel A15 LV. Subsequently, Attagel was admixed and finally the remaining water amount that was not contained in the emulsifiers and in the solution of the polymeric stabilizer.

The samples were tested for storage stability (full and double testing period after the Cipac method 46.1.3.), in which the active content, the tendency to crystal growth and the emulsifiability unmixed without and with Fusilade have been tested.

Conclusion: The PMP-stability, the Metamitron stability and the emulsifiability are satisfactory. The tendency to crystal growth is slight. The product differs as regards the emulsion stability decisively from the examples described in EP-0,142,670-A2 and EP-0,243,872-A1, including both PMP and Metamitron. Moreover, the composition in Example 18 may be mixed in tank with Fusilade.

Conclusion: The PMP-stability, the Metamitron stability and the emulsifiability are satisfactory. The tendency to crystal growth is small. As regards the emulsion stability the product differs decisively from the examples described in EP-142,670-A2 and EP-243,872-A1 which contain both PMP and Metamitron. Moreover, the composition in Example 18 is mixed in tank with Fusilade.

Table 18

| Raw material comp. | Composition in % 18 | Emulsifier type |
|---|---|---|
| Active component: | | |
| Metamitron, 98% | 21 | |
| PMP, techn., 97% | 6.2 | |
| Oil: | | |
| Gravex 921 12) (*) | 43 | |
| Halpasol 46) | 10 | |
| Radia 7131 14) (*) | 5 | |
| Oleic acid | 1.8 | |
| Radiacid 0198 42) | 1.5 | |
| Emulsifier component: | | |
| Berol 02 15) | 1.8 | Non-ion. |
| Berol 922 17) | 0.4 | Non-ion. |
| Synperonic NX 16) | 0.6 | Non-ion. |
| Atlox 1285 19) | 0.2 | Non-ion. |
| DDSA 20) | 0.4 | type g |
| Berol 724 22) | 0.6 | type a |
| Gafac RE 410 23) | 0.1 | type a |
| Sulfosoft 26) | 0.2 | type b |
| + Hostapur SAS 60 28) | 0.1 | type b |
| Morwet EFW 21) | 0.2 | type e |
| + Acrylon A 11 27) | 0.4 | type h |
| Monoethanol amine | 0.2 | |
| Polymeric stabilizer: | | |
| Mowiol 10/74 | 0.15 | |
| Methocel A15 LV | 0.15 | |
| Water + adjuvant: | | |
| Water | 4 | |
| Attagel 40 | 2 | |

+ Delivered as an aqueous solution but indicated on the basis of the solids content.

Table 18 (continued)

| | 18 | | |
|---|---|---|---|
| Summed recipe: | | | |
| Active content, techn. | 27.2 | | |
| Olie | 61.3 | | |
| Emulsifier comp. | 5.2 | | |
| Polymeric stabilizer | 0.3 | | |
| Water + adjuvant | 6 | | |
| pH adjusted (1:10) with HCl/MEA til | 3.9 | | |
| Storing experiments at (54 ± 2°C) | Start | 14 days | 28 days |
| Active content PMP | 6.2 | 6.2 | 6.1 |
| Metamitron | 21.5 | 21.4 | 21.5 |
| Particle size | 5-15µ | 10-15µ | 10-15µ |
| Stirring with magnet in 1% dilution: | | | |
| Deionized water | neat | neat | neat |
| Tap water | neat | neat | neat |
| Stirring with magnet in 1% dilution + 1% Fusilade: | | | |
| Deionized water | neat | neat | neat |
| Tap water | neat | neat | neat |

## Claims

1. Herbicidal compositions in which the herbicidal component is suspended in fine-grained form in a flowable oil-containing liquid phase, containing at least one component selected from the group of beet herbicides consisting of phenmedipham (methyl-(3-(3-tolylcarbamoyloxy)phenyl)carbamate), ethofumesate ((±)-2-ethoxy-2,3-dihydro-3,3-dimethyl-benzofuran-5-yl, methane sulfonate) and metamitron (4-amino-4,5-dihydro-3-methyl-6-phenyl-1,2,4-triazin-5-one), so that the total quantity of herbicide therein constitutes 1 to 50% by weight, and further containing

water, one or more emulsifiers, special oils as defined below and optionally other oils and a filler, and wherein said liquid phase is capable of forming an oil-in-water emulsion when the composition is mixed with water, characterized in that said special oils are chosen from the group of selected ester oils, which are ester oils with one or two ester groups per molecule and with an initial boiling point of at least 210°C, and selected carbon hydride oils, which are carbon hydride oils with an initial boiling point of at least 230°C and with an aniline point determined according to DIN 51775 not exceeding 90°C, the special oils being present in an amount of either 4 to 77% by weight of the selected ester oils, or 12 to 77% by weight of the selected carbon hydride oils or a mixture of the selected carbon hydride oils and the selected ester oils; that the special oils are emulsified in the liquid phase; that the content of water is from 18 to 65% by weight; and that the content of said emulsifier(s) is from 1 to 18% by weight; wherein all given expressions for the contents of the compositions in % by weight are calculated on the basis of the weight of the total composition.

2. Herbicidal compositions according to claim 1, characterized in that the total quantity of herbicide amounts to 1 to 45% by weight, calculated on the basis of the weight of the total composition.

3. Herbicidal compositions according to claims 1 to 2, characterized in that the total content of the special oils constitutes 8 to 77% by weight of the selected ester oils, or 12 to 77% by weight of the selected carbon hydride oils or of a mixture of the selected carbon hydride oils and the selected ester oils, calculated on the basis of the weight of the total composition.

4. Herbicidal compositions according to claims 1 to 3, characterized in that the solubility of the special oils in water at 20°C is preferably below 1% by weight and that the solubility of phenmedipham in the special oils is preferably below 3% by weight.

5. Herbicidal compositions according to claim 4, characterized in that the solubility of phenmedipham in the special oils is below 1% by weight.

6. Herbicidal compositions according to claims 1 to 5, characterized in that they are two- or multicomponent compositions containing phenmedipham in combination with ethofumesate and/or metamitron.

7. Herbicidal compositions according to claims 1 to 6, characterized in that the selected ester oils have from 8 to 72 carbon atoms, preferably 10 to 60 and in particular 12 to 46 carbon atoms per molecule.

8. Herbicidal compositions according to claims 1 to 7, characterized in that the total quantity of herbicide amounts to 4 to 40% by weight, in particular 7 to 35% by weight and especially 10 to 30% by weight, calculated on the basis of the weight of the total composition.

9. Herbicidal compositions according to claims 1 to 7, characterized in that the total content of the special oils constitutes 12 to 77% by weight, in particular 18 to 60% by weight and especially 25 to 64% by weight, calculated on the basis of the weight of the total composition.

10. Herbicidal compositions according to claims 1 to 7, characterized in that the total emulsifier content constitutes 1 to 13% by weight, preferably 1.5 to 13% by weight, in particular 2 to 9% by weight and especially 2.5 to 5% by weight, on the basis of the weight of the total composition.

11. Herbicidal compositions according to claims 1 to 10, characterized in that the selected carbon hydride oils have an aniline point determined according to DIN 51775 which in particular does not exceed 85°C and especially does not exceed 82.5°C.

12. Herbicidal compositions according to claims 1 to 11, characterized by containing, besides the special oils as defined in claim 1, from 0.5 to 20% by weight, calculated on the basis of the weight of the total composition, of emulsion controlling oil components selected from the group of aliphatic, unsaturated, straight-chained or branched $C_{7-16}$ hydrocarbyl carboxylic acids, aliphatic, saturated and branched $C_{17-25}$ hydrocarbyl carboxylic acids and aliphatic, saturated and branched $C_{17-25}$ hydrocarbyl carboxylic acids and aliphatic, unsaturated, straight-chained or branched $C_{7-25}$ hydrocarbyl carboxylic acids, said hydrocarbyl carboxylic acids being optionally substituted by one or two hydroxy groups, and aliphatic, saturated or unsaturated, straight-chained or branched $C_{9-25}$, preferably $C_{10-21}$ hydrocarbyl alcohols.

**13.** Herbicidal compositions according to claims 1 to 12, characterized in that the emulsifiers include at least one non-ionic emulsifier and at least one anionic emulsifier.

**14.** Herbicidal compositions according to claim 13, characterized in that the total amount of anionic emulsifier constitutes from 0.03 to 4.4% by weight, and at the same time an optional content of one or more amine containing emulsifiers does not exceed 2.4% by weight, the percentages being calculated on the basis of the total composition.

**15.** Herbicidal compositions according to claim 14, characterized in that the anionic emulsifier(s) is/are selected among ethoxylated, propoxylated or co-ethoxylated/propoxylated mono-, di-, tri- or tetra-$C_{1-18}$-alkylphenol, including in particular $C_{4-15}$-alkyl phenol and analog, unsaturated hydrocarbyl phenol; ethoxylated, propoxylated or co-ethoxylated/propoxylated mono-, di- or tri-styrylphenol (tri-(1-phenylethyl)phenol), optionally substituted by one, two, three or four $C_{1-15}$-alkyl groups; ethoxylated, propoxylated or co-ethoxylated/propoxylated $C_{8-30}$-hydrocarbyl alcohol, preferably $C_{9-22}$-hydrocarbyl alcohol, which further may optionally be methylated in the terminal OH-group of the polyalkoxylene group; monocarboxylic acid esters of polyethylene glycol, polypropylene glycol and co-polymerized polyglycols of ethylene glycol (ethylene oxide) and propylene glycol (propylene oxide), in which it applies to all three types of polyglycol that the number of alkoxy-units must be at least 4, and a $C_{8-30}$-hydrocarbyl carboxylic acid, preferably a $C_{10-22}$-hydrocarbyl carboxylic acid; dicarboxylic acid esters of polyethylene glycol, polypropylene glycol and copolymerized polyglycols of ethylene glycol (ethylene oxide) and propylene glycol (propylene oxide), in which it applies to all three types of polyglycol that the number of alkoxy-units must be at least 6, and two mutually independent $C_{8-30}$-hydrocarbyl carboxylic acids, preferably two $C_{10-22}$-hydrocarbyl carboxylic acids and block polymers (copolymerisates) of ethylene glycol) (ethylene oxide) and propylene glycol (propylene oxide) the molecular weight of which is in the interval from 1000 to approximately 20.000 Dalton.

**16.** Herbicidal compositions according to claims 1 to 15, characterized by containing from 0.04 to 20% by weight, calculated on the basis of the weight of the total compositions, of at least one polymer which at 60°C is a solid and which preferably via a dilatation by itself becomes stably dissolvable/dilutable in water at 20°C and which at the same time has a molecular weight of at least 7000 Dalton, in that neither does the polymer include polycarboxylates nor copolymers of oxyethylene and oxypropylene with at least 80% by weight of polyoxyethylene and polyoxypropylene or biopolymers, for which the polymerization is effected by an industrially controlled fermentation process.

**17.** Herbicidal compositions according to claims 1 to 16, characterized in that they are available as a ready-to-use mixture diluted by the user, all the stated percentages being calculated on the basis of weight of the solids content of said mixture, as defined in the specification.

**Patentansprüche**

**1.** Herbizide Zusammensetzungen, worin der herbizide Bestandteil in feinkörniger Form in einer fliessbaren, ölhaltigen Flüssigkeitsphase enthaltend mindestens einen aus der Gruppe von Rübenherbiziden bestehend aus Phenmedipham (Methyl(3-(3-tolylcarbamoyloxy)phenyl)carbamat), Ethofumesat ((±)-2-Ethoxy-2,3-dihydro-3,3-dimethylbenzofuran-5-yl, Methansulfonat) und Metamitron (4-Amino-4,5-dihydro-3-methyl-6-phenyl-1,2,4-triazin-5-on) ausgewählten Bestandteil suspendiert ist, so dass die gesamte Menge von darin befindlichen Herbiziden 1-50 Gew.-% ausmacht, und ferner Wasser, einen oder mehrere Emulgatoren, Spezialöle wie nachstehend erwähnt, und wahlfrei andere Öle und einen Füllstoff enthalten, und worin die Flüssigkeitsphase, wenn die Zusammensetzung mit Wasser vermischt ist, eine Öl-in-Wasser-Emulsion bilden kann,
dadurch **gekennzeichnet,** dass erwähnte Spezialöle aus der Gruppe von ausgewählten Esterölen gewählt sind, d.h. Esteröle mit einer oder zwei Estergruppen pro Molekül und einem Initialsiedepunkt von mindestens 210°C, sowie ausgewählte Carbonhydridöle mit einem Initialsiedepunkt von mindestens 230°C und mit einem Anilinpunkt bestimmt entsprechend DIN 51775 und nicht 90°C übersteigend, wobei die Spezialöle in einer Menge von entweder 4-77 Gew.-% der ausgewählten Esteröle oder 12-77 Gew.-% der ausgewählten Carbonhydridöle oder einer Mischung der ausgewählten Carbonhydridöle und der ausgewählten Esteröle vorhanden sind; dass die Spezialöle in der Flüssigkeitsphase emulgiert sind; dass der Wassergehalt 18-65 Gew.-% beträgt; und dass der Gehalt an Emulgator(en) 1-18 Gew.-% beträgt; wobei sämtliche Angaben der Gewichtsprozente der Zusammensetzungen auf Basis des Gewichts der gesamten Zusammensetzung berechnet sind.

**2.** Herbizide Zusammensetzungen nach Anspruch 1, dadurch **gekennzeichnet,** dass die gesamte Menge von Herbiziden 1-45 Gew.-%, berechnet auf Basis des Gewichts der gesamten Zusammensetzung, beträgt.

3. Herbizide Zusammensetzungen nach Anspruch 1-2, dadurch **gekennzeichnet,** dass der Gesamtgehalt an Spezialölen 8-77 Gew.-% der ausgewählten Esteröle oder 12-77 Gew.-% der ausgewählten Carbonhydridöle oder einer Mischung der ausgewählten Carbonhydridöle und der ausgewählten Esteröle, berechnet auf Basis des Gewichts der gesamten Zusammensetzung, beträgt.

4. Herbizide Zusammensetzungen nach Anspruch 1-3, dadurch **gekennzeichnet,** dass die Löslichkeit der Spezialöle in Wasser bei 20°C vorzugsweise unter 1 Gew.-% ist, und dass die Löslichkeit von Phenmedipham in den Spezialölen vorzugsweise unter 3 Gew.-% liegt.

5. Herbizide Zusammensetzungen nach Anspruch 4, dadurch **gekennzeichnet,** dass die Löslichkeit von Phenmedipham in den Spezialölen unter 1 Gew.-% ist.

6. Herbizide Zusammensetzungen nach Anspruch 1-5, dadurch **gekennzeichnet,** dass sie Zwei-oder Multikomponenten-Zusammensetzungen sind, die Phenmedipham in Kombination mit Ethofumesat und/oder Metamitron enthalten.

7. Herbizide Zusammensetzungen nach Anspruch 1-6, dadurch **gekennzeichnet,** dass die ausgewählten Esteröle 8-72 Kohlenstoffatome, vorzugsweise 10-60 und insbesondere 12-46 Kohlenstoffatome pro Molekül aufweisen.

8. Herbizide Zusammensetzungen nach Anspruch 1-7, dadurch **gekennzeichnet,** dass die Gesamtmenge an Herbiziden 4-40 Gew.-%, vorwiegend 7-35 Gew.-% und insbesondere 10-30 Gew.-%, berechnet auf Basis des Gewichts der gesamten Zusammensetzung, beträgt.

9. Herbizide Zusammensetzungen nach Anspruch 1-7, dadurch **gekennzeichnet,** dass der Gesamtgehalt an Spezialölen 12-77 Gew.-%, vorwiegend 18-60 Gew.-% und insbesondere 25-64 Gew.-%, berechnet auf Basis des Gewichts der gesamten Zusammensetzung, beträgt.

10. Herbizide Zusammensetzungen nach Anspruch 1-7, dadurch **gekennzeichnet,** dass der Gesamtgehalt an Emulgatoren 1-13 Gew.-%, vorzugsweise 1,5-13 Gew.-%, vorwiegend 2-9 Gew.-% und insbesondere 2,5-5 Gew.-%, berechnet auf Basis des Gewichts der gesamten Zusammensetzung, beträgt.

11. Herbizide Zusammensetzungen nach Anspruch 1-10, dadurch **gekennzeichnet,** dass die ausgewählten Carbonhydridöle einen Anilinpunkt bestimmt entsprechend DIN 51775 aufweisen, der vor allem nicht 85°C übersteigt, und insbesondere nicht 82,5°C übersteigt.

12. Herbizide Zusammensetzungen nach Anspruch 1-11, enthaltend abgesehen von 0,5-20 Gew.-% der Spezialöle, berechnet auf Basis des Gewichts der gesamten Zusammensetzung, wie in Anspruch 1 angegeben, aus der Gruppe aliphatischer, ungesättigter, geradkettiger oder verzweigter $C_{7-16}$ Hydrocarbyl-carboxylsäure ausgewählte emulsionskontrollierende Ölkomponenten, und aliphatische, gesättigte und verzweigte $C_{17-15}$ Hydrocarbylcarboxylsäuren sowie aliphatische, ungesättigte, geradkettige oder verzweigte $C_{7-25}$ Hydrocarbyl-carboxylsäuren, wobei erwähnte Hydrocarbyl-carboxylsäuren wahlweise durch eine oder zwei Hydroxygruppen, und aliphatische, gesättigte oder ungesättigte, geradkettige oder verzweigte $C_{9-25}$, vorzugsweise $C_{10-21}$ Hydrocarbyl-Alkohole substituiert sind.

13. Herbizide Zusammensetzungen nach Anspruch 1-12, dadurch **gekennzeichnet,** dass die Emulgatoren mindestens einen nicht-ionischen Emulgator und mindestens einen anionischen Emulgator umfassen.

14. Herbizide Zusammensetzungen nach Anspruch 13, dadurch **gekennzeichnet,** dass die Gesamtmenge von anionischem Emulgator 0,03-4,4 Gew.-% beträgt, und gleichzeitig ein wahlfreier Gehalt eines oder mehrerer amin-enthaltender Emulgatoren nicht 2,4 Gew.-% übersteigt, welche Prozente auf Basis der gesamten Zusammensetzung berechnet sind.

15. Herbizide Zusammensetzungen nach Anspruch 14, dadurch **gekennzeichnet,** dass der anionische Emulgator (die anionischen Emulgatoren) ausgewählt ist (sind) unter ethoxyliertem, propoxyliertem oder co-ethoxyliertem/propoxylieretem Mono-, Di-, Tri- oder Tetra-$C_{1-18}$-alkylphenol, umfassend vor allem $C_{4-15}$-Alkylphenol und Analog, ungesättigtes Hydrocarbylphenol; ethoxyliertes, propoxyliertes oder co-ethoxyliertes/propoxyliertes Mono-, Di- oder Tristyrylphenol (Tri-(1-phenylethyl)phenol, wahlfrei substituiert durch eine, zwei, drei oder vier $C_{1-15}$-Alkylgruppen; ethoxyliertem, propoxyliertem oder co-ethoxyliertem/propoxyliertem $C_{8-30}$-Hydrocarbylalkohol, vorzugsweise

$C_{9-22}$-Hydrocarbylalkohol, der ferner wahlfrei in der letzten OH-Gruppe der Polyalkoxylengruppe methyliert sein kann; Monocarboxylsäureestern von Polyethylenglycol, Polypropylenglycol und co-polymerisierten Polyglycolen von Ethylenglycol (Ethylenoxyd) und Propylenglycol (Propylenoxyd), wobei für alle drei Gruppen von Polyglycolen gilt, dass die Anzahl von Alkoxyeinheiten mindestens 4 sein muss; und eine $C_{8-30}$-Hydrocarbyl-Carboxylsäure, vorzugsweise eine $C_{10-22}$-Hydrocarbyl-Carboxylsäure; Dicarboxylsäureestern von Polyethylenglycol, Polypropylenglycol und copolymerisierten Polyglycolen von Ethylenglycol (Ethylenoxyd) und Propylenglycol (Propylenoxyd), wobei für alle drei Gruppen von Polyglycol gilt, dass die Anzahl von Alkoxyeinheiten mindestens 6 sein muss, und zwei untereinander unabhängigen $C_{8-30}$-Hydrocarbyl-Carboxylsäuren, vorzugsweise zwei $C_{10-22}$-Hydrocarbyl-Carboxylsäuren und Blockpolymere (Copolymerisate von Ethylenglycol) (Ethylenoxyd) und Propylenglycol (Propylenoxyd), dessen Molekulargewicht im Intervall von 1000 bis etwa 20.000 Dalton liegt.

**16.** Herbizide Zusammensetzungen nach Anspruch 1-15, dadurch **gekennzeichnet,** dass sie 0,04-20 Gew.-%, berechnet auf Basis des Gewichts der gesamten Zusammensetzung, von mindestens einem Polymer enthalten, welches bei 60°C ein Feststoff ist, und welches vorzugsweise durch eine Selbstdilatation bei 20°C in Wasser beständig verdünnbar/auflösbar ist und gleichzeitig ein Molekulargewicht von mindestens 7.000 Dalton aufweist, dass das Polymer weder Polycarboxylate noch Co-Polymere von Oxyethylen und Oxypropylen mit mindestens 80 Gew.-% Polyoxyethylen und Polyoxypropylen oder Biopolymere enthält, deren Polymerisation über einen industriell kontrollierten Gärungsprozess durchgeführt worden ist.

**17.** Herbizide Zusammensetzungen nach Anspruch 1-16, dadurch **gekennzeichnet,** dass sie als ein vom Benutzer verdünntes, zum Gebrauch fertiges Gemisch erhältlich sind, wobei der angegebene Gehalt in Prozenten auf Basis des Gewichts des Feststoffgehalts des Gemisches, wie in der Beschreibung angegeben, berechnet ist.

**Revendications**

**1.** Compositions herbicides dans lesquelles le composant herbicide est mis en suspension sous forme de grains fins dans une phase liquide contenant de l'huile, susceptible de s'écouler, contenant au moins un composant choisi parmi le groupe suivant d'herbicides pour betterave: composés de phenmédipham (méthyl(3-(3-tolylcarbamoyloxy)-phényl)carbamate), d'éthofumesate ((±)-2-éthoxy-2,3-dihydro-3,3-diméthyl-benzofuran-5-yl, méthane sulfonate) et métamitron (4-amino-4, 5-dihydro-3-méthyl-6-phényl-1-1,2,4-triazin-5-one), de sorte que la quantité totale d'herbicide représente 1 à 50% en poids, et contenant, de plus, de l'eau, un ou plusieurs émulsifiants, des huiles spéciales comme défini plus loin et en option d'autres huiles et une charge, et dans lesquelles la phase liquide est capable de former une émulsion huile-dans-eau quand la composition est mélangée avec de l'eau, caractérisées en ce que lesdites huiles spéciales sont choisies dans le groupe des huiles d'ester choisies qui sont des huiles d'ester avec un ou deux groupes ester par molécule, à point initial d'ébullition d'au moins 210°C, et des huiles d'hydrocarbures choisies qui sont des huiles d'hydrocarbures à point initial d'ébullition d'au moins 230°C et à point d'aniline déterminé selon DIN 51775 qui ne dépasse pas 90°C, les huiles spéciales étant présentes soit sous une quantité de 4 à 77% en poids des huiles d'ester choisies, soit sous une quantité de 12 à 77% en poids des huiles d'hydrocarbures choisies, soit en mélange des huiles d'hydrocarbures choisies et des huiles d'ester choisies, en ce que les huiles spéciales sont émulsifiées dans la phase liquide, en ce que le contenu en eau va de 18 à 65% en poids, et en ce que le contenu desdits émulsifiants va de 1 à 18% en poids, tous les pourcentages pondéraux indiqués de formulation des compositions étant calculés sur la base du poids de la composition totale.

**2.** Compositions herbicides selon la revendication 1, caractérisées en ce que la quantité totale d'herbicide s'élève à 1 à 45% en poids, calculée sur la base du poids de la composition totale.

**3.** Compositions herbicides selon les revendications 1 et 2, caractérisées en ce que le contenu total en huiles spéciales représente 8 à 77% en poids des huiles d'ester choisies ou 12 à 77% en poids des huiles d'hydrocarbures choisies ou d'un mélange des huiles d'hydrocarbures choisies et des huiles d'ester choisies, calculé sur la base du poids de la composition totale.

**4.** Compositions herbicides selon les revendications 1 à 3, caractérisées en ce que la solubilité des huiles spéciales dans l'eau à 20°C se situe, de préférence, en dessous de 1% en poids et en ce que la solubilité de phenmédipham dans les huiles spéciales se situe, de préférence, en dessous de 3% en poids.

**5.** Compositions herbicides selon la revendication 4, caractérisées en ce que la solubilité de phenmédipham dans les huiles spéciales se situe en dessous de 1% en poids.

6. Compositions herbicides selon les revendications 1 à 5, caractérisées en ce qu'elles sont des compositions à deux composants ou à composants multiples contenant le phenmédipham en combinaison avec l'éthofumesate et/ou le métamitron.

7. Compositions herbicides selon les revendications 1 à 6, caractérisées en ce que les huiles spéciales d'ester choisies ont un nombre d'atomes de carbone allant de 8 à 72, de préférence 10 à 60 et en particulier 12 à 46 atomes de carbone par molécule.

8. Compositions herbicides selon les revendications 1 à 7, caractérisées en ce que la quantité totale d'herbicide représente 4 à 40% en poids, en particulier 7 à 35% en poids, spécialement 10 à 30% en poids, calculée sur la base du poids de la composition totale.

9. Compositions herbicides selon les revendications 1 à 7, caractérisées en ce que la teneur totale en huiles spéciales représente 12 à 77% en poids, en particulier 18 à 60% en poids, et spécialement 25 à 64% en poids, calculée sur la base du poids de la composition totale.

10. Compositions herbicides selon les revendications 1 à 7, caractérisées en ce que la teneur totale en émulsifiant représente 1 à 13% en poids, de préférence 1,5% à 13% en poids, en particulier 2 à 9% en poids, et spécialement 2,5 à 5% en poids, sur la base du poids de la composition totale.

11. Compositions herbicides selon les revendications 1 à 10, caractérisées en ce que les huiles d'hydrocarbures choisies présentent un point d'aniline, déterminé selon DIN 51775, qui en particulier ne dépasse pas 85°C et spécialement ne dépasse pas 82,5°C.

12. Compositions herbicides selon les revendications 1 à 11, caractérisées en ce que, en plus des huiles spéciales comme défini dans la revendication 1, elles comprennent 0,5 à 20% en poids, calculés sur la base du poids de la composition totale, de composants d'huile de contrôle d'émulsion, choisis dans le groupe des acides hydrocarbylcarboxylique aliphatiques non saturés à chaîne directe ou ramifiée en $C_7$ à $C_{16}$, acides hydrocarbylcarboxyliques aliphatiques saturés et ramifiés en $C_{17}$ à $C_{25}$, acides hydrocarbylcarboxyliques aliphatiques saturés et ramifiés en $C_{17}$ à $C_{25}$, et acides hydrocarbylboxyliques aliphatiques non saturés à chaîne directe ou ramifiés en $C_7$ à $C_{25}$, lesdits acides hydrocarbylcarboxyliques étant, en option, substitués par un ou deux groupes hydroxy, et les acides aliphatiques saturés ou non saturés, à chaîne directe ou ramifiée en $C_9$ à $C_{25}$, de préférence $C_{10}$ à $C_{21}$, par des alcools hydrocarbyliques.

13. Compositions herbicides selon les revendications 1 à 12, caractérisées en ce que les émulsifiants comprennent au moins un émulsifiant non ionique et au moins un émulsifiant anionique.

14. Compositions herbicides selon la revendication 13, caractérisées en ce que la quantité totale d'émulsifiant anionique est de 0,03 à 4,4% en poids et qu'en même temps un contenu optionnel en émulsifiants à base d'amine ne dépasse pas 2,4% en poids, les pourcentages étant calculés sur la base de la composition totale.

15. Compositions herbicides selon la revendication 14, caractérisées en ce que l'émulsifiant ou les émulsifiants est (sont) choisi(s) parmi mono-, di-, tri- ou tétra-$C_{1-18}$-alkyphénol éthoxylé, propoxylé ou coéthoxylé/propoxylé, y compris, en particulier, $C_{4-15}$-alkylphénol ou similaire, phénolhydrocarbyl non saturé; mono-, di- ou tri-styrylphénol (tri-(1-phénoléthyl)phénol) éthoxylé, propoxylé ou co-éthoxylé/propoxylé, optionellement substitué par un, deux, trois ou quatre groupes $C_{1-15}$-alkyl; alcool $C_{8-30}$-hydrocarbylique éthoxylé, propoxylé og co-éthoxylé/propoxylé, de préférence alcool $C_{9-22}$-hydrocarbylique, qui, de plus, en option, peut être méthylé dans le groupe OH terminal du groupe polyalkoxylène; acides monocarboxyliques d'esters de polyéthylèneglycol, polypropylèneglycol et polyglycols copolymérisés d'éthylèneglycol (éthylèneoxyde) et propylèneglycol (propylèneoxyde), pour lesquels la règle veut que, pour les trois types de polyglycol, le nombre d'unités alkoxy doit être de 4, et un acide $C_{8-30}$-hydrocarbylcarboxylique, de préférence acide $C_{10-22}$-hydrocarbylcarboxylique; acide dicarboxylique d'esters de polyéthylèneglycol, polypropylèneglycol et polyglycols copolymérisés d'éythylèneglycol (éthylèneoxyde) et propylèneglycol (propylèneoxyde), pour lesquels la règle veut que, pour les trois types de polyglycol, le nombre d'unités alkoxy doit être d'au moins 6, et deux acides $C_{8-30}$-hydrocarbylcarboxyliques mutuellement indépendants, de préférence deux acides $C_{10-22}$-hydrocarbylcarboxyliques et polymères séquencés (copolymérisats) d'éthylèneglycol (éthylèneoxyde) et propylèneglycol (propylèneoxyde), dont la masse moléculaire se situe dans l'intervalle allant de 1000 à environ 20.000 Dalton.

**16.** Compositions herbicides selon les revendications 1 à 15, caractérisées en ce qu'elles comprennent 0,04 à 20% en poids, calculés sur la base du poids de la composition totale, d'au moins un polymère qui est solide à 60°C et qui, de préférence, par auto-dilatation, devient soluble/diluable dans l'eau à 20°C et qui en même temps possède une masse moléculaire d'au moins 7000 Dalton, et en ce que le polymère ne contient ni des polycarboxylates, ni des copolymères d'oxyéthylène et d'oxypropylène avec au moins 80% en poids de polyoxyéthylène et de polyoxyprolylènes ou biopolymères pour lesquels on a effectué la polymérisation par un procédé de fermentation maitrisé industriellement.

**17.** Compositions herbicides selon les revendications 1 à 16, caractérisées par le fait qu'elles sont disponibles sous forme d'un mélange prêt-à-l'emploi, dilué par l'utilisateur, l'ensemble des pourcentages indiqués étant calculés sur la base du poids du contenu en solides dans ledit mélange, comme défini dans la description.